(19)

Europäisches Patentamt
European Patent Office
Office européen des brevets

(11) **EP 3 794 950 A1**

(12) **EUROPEAN PATENT APPLICATION**
published in accordance with Art. 153(4) EPC

(43) Date of publication:
**24.03.2021 Bulletin 2021/12**

(21) Application number: **19854204.5**

(22) Date of filing: **31.07.2019**

(51) Int Cl.:
**A23D 7/00** *(2006.01)*    **A23D 7/005** *(2006.01)*
**A23L 11/00** *(2021.01)*    **A23L 19/00** *(2016.01)*
**A23L 25/00** *(2016.01)*    **A23L 33/21** *(2016.01)*

(86) International application number:
**PCT/JP2019/029945**

(87) International publication number:
**WO 2020/044922 (05.03.2020 Gazette 2020/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.08.2018  JP 2018158434**

(71) Applicant: **Mizkan Holdings Co., Ltd.**
**Handa-shi, Aichi 475-8585 (JP)**

(72) Inventor: **TOMITA, Takahiko**
**Handa-shi, Aichi 475-8585 (JP)**

(74) Representative: **Mewburn Ellis LLP**
**Aurora Building**
**Counterslip**
**Bristol BS1 6BX (GB)**

(54) **FOOD PARTICULATE-CONTAINING FAT AND OIL COMPOSITION AND PRODUCTION METHOD THEREFOR**

(57)    To provide a fat/oil composition containing fine food particles, having good spreadability even under a low or high temperature.

A fat/oil composition containing fine food particles and having (1)-(5) and satisfying at least one of (A)-(C) :
(1) fine food particle content of 25-90 mass%;
(2) total fat/oil content of 10-70 mass%;
(3) modal diameter of 0.3-200 μm after ultrasonication;
(4) sugar content of 15-60 mass%; and
(5) moisture content of 20 mass% or less,
(A) stress measured with a dynamic viscoelasticity measuring device under a certain condition is 0.2 N or less;
(B) loss tangent measured with a dynamic viscoelasticity measuring device under a certain condition is 1.000 or more; and
(C) a value measured (20°C, 10 seconds) with a Bostwick viscometer is 0.1-20 cm.

EP 3 794 950 A1

**Description**

Technical Field

The present invention relates to a fat/oil composition containing fine food particle and a manufacturing method thereof.

Background Art

Conventionally, as foods to be applied to bread or crackers, cream cheese-based sandwich spread with pickles, fat spread mainly composed of fat/oil, lever paste containing levers of livestock meat, and peanut butter containing nuts/seeds. Because these contain a large amount of lipophilic substances and/or in order to suppress the bleeding of fat/oil, additives such as emulsifiers were contained, which did not satisfy those consumers who are keen to health. In addition, if the conventional spread is stored in a cold refrigerator, it turns hard, as a result, it gets problematically hard to apply to a bread or a cracker because of worsened spreadability. If the conventional spread is placed at a temperature higher than a normal temperature, such as a warm season, it problematically turns too soft and/or fat/oil is separated. As a result, it was hard to apply it to a food materials such as bread or a cracker because of worsened spreadability.

As a method for effectively reducing the use of an emulsifier or a stabilizer, Patent Literature 1 reports a method of manufacturing of a water and oil contain food characterized in that fat/oil is absorbed into wet okara (water content : 55 to 95% by weight) having a particle diameter of 10 to 200 microns. Patent Literature 2 using a plant material, reports a method of producing a spread food containing a step of pulverizing a non-nut plant material to produce a powder having an average particle diameter of less than about 100 $\mu$m, and of exposing the powder to an elevated temperature. Also, as a spread product for fruits and vegetables, Patent Literature 3 reports a process in which a sweetener, a soluble dietary fiber, and pectin are mixed at high speed and a mixture obtained by adding vegetables is pasteurized. Further, as a spread-like food/drink using concentrated soy milk, in Patent Literature 4 reports a food/drink mixed with soy milk, a seasoning or a flavoring, and a stabilizer.

Prior Art References

Patent Literatures

[Patent Literature 1]    WO 2002/051262-A
[Patent Literature 2]    JP 2009-543562-A
[Patent Literature 3]    JP 2004-519240-A
[Patent Literature 4]    JP 2002-281297-A

Summary of the Invention

Problem

However, in Patent Literature 1, if the spread is used in food at an environment with high moisture and a varying temperature, the fat/oil and moisture may be separated from each other. Thus, the spread was not sufficient in terms of spreadability. In the technology of Patent Literature 2, the spread obtained by mixing flour from a non-nut plant material is not satisfactory enough, and there was a problem that the original flavor of the non-nut plant material is impaired because the flour from the non-nut plant material was exposed to an elevated temperature. In Patent Literature 3, pectin renders the spread hard at a low temperature and soft at a high temperature. Therefore, the spreadability was not to be maintained constant. In addition, the spread recited in Patent Literature 4 was not sufficient in terms of spreadability in a varying temperature but also by no means satisfactory to health-oriented consumers, because it contained a stabilizer.

Accordingly, the present invention aims to provide a fat/oil composition comprising a fine food particle, which is used as a spread or the like, and which has good spreadability even under a low temperature or a high temperature.

Solution

In order to overcome the problems in the prior art as described above, the present inventors energetically studied to find that a fat/oil composition containing fine food particles, which satisfies a predetermined composition and physical properties, and which satisfies a stress under a predetermined condition, a ratio of a loss modulus to a storage modulus (loss tangent), and a composition in which a measured value (20°C, 10 seconds) by a Bostwick viscometer is adjusted in a predetermined range, respectively, is excellent in spreadability not only at a normal temperature but also at a low temperature and a high temperature, to complete the present invention.

That is, the present invention provides the followings.

[1] A fat/oil composition comprising fine food particles and having characteristics (1) to (5) and satisfying at least one of requirements (A) to (C):

(1) a fine food particle content of 25 mass% or more and 90 mass% or less;
(2) a total fat/oil content of 10 mass% or more and 70 mass% or less;
(3) a modal diameter of 0.3 $\mu$m or more and 200 $\mu$m or less after ultrasonication;
(4) a sugar content of 15 mass% or more and 60 mass% or less; and
(5) a moisture content of 20 mass% or less,

(A) stress measured with a dynamic viscoelasticity measuring device under conditions (a) to (d) is 0.2 N or less:

(a) mixing 2 parts of the fat/oil composition with 1 part of olive oil by weight,
(b) using a parallel plate having a diameter of 25 mm,
(c) setting a preset temperature of the fat/oil composition to 20°C, and
(d) measuring a maximum value of force applied in vertical direction when the parallel plate is lowered down with respect to a sample table to form a gap therebetween of 1 mm;

(B) loss tangent measured with a dynamic viscoelasticity measuring device under conditions (e) to (h) is 1.000 or more:

(e) using a parallel plate having a diameter of 25 mm,
(f) setting a preset temperature of the fat/oil composition to 20°C,
(g) setting a gap to 1 mm, and
(h) a shear strain of 0.1% and an angular velocity of 1 rad/s; and

(C) a value measured (20°C, 10 seconds) with a Bostwick viscometer is 0.1 cm or more and 20 cm or less.

[2] The composition according to [1], wherein the moisture content (5) is 1 mass% or more.
[3] The composition according to [1] or [2], further satisfying requirement (6):
(6) (total fat/oil content)/[(moisture content) + (total fat/oil content)] is 0.75 or more.
[4] The composition according to any one of [1] to [3], further satisfying requirement (7):
(7) a maximum particle size before ultrasonication is 30 $\mu$m or more.
[5] The composition according to any one of [1] to[4], wherein the food comprises at least one selected from the group consisting of corn, green soybean, green pea, carrot, pumpkin, kale, paprika, beet, broccoli, spinach, tomato, and sweet potato.
[6] The composition according to any one of [1] to [5], comprising one or more kinds of oil cake food.
[7] The composition according to any one of [1] to [6], comprising an inedible part of food.
[8] The composition according to any one of [1] to [7], comprising an edible part and an inedible part derived from the same type of food.
[9] The composition according to [1] to [8], wherein the inedible part comprises at least one selected from the group consisting of a corn core, a green soybean pod, a green pea pod, a carrot petiole base, pumpkin seed or guts, a kale petiole base, a paprika seed or calyx, beet peel, broccoli stem and leaf, a spinach stump, a tomato calyx, and a sweet potato end.
[10] A method for manufacturing a fat/oil composition containing fine food particles, the method comprising subjecting a fine food particle-containing fat/oil composition having characteristics (1) to (5) to warming until at least one of requirements (A) to (C) is satisfied:

(1) a fine food particle content of 25 mass% or more and 90 mass% or less;
(2) a total fat/oil content of 10 mass% or more and 70 mass% or less;
(3) a modal diameter of 0.3 $\mu$m or more and 200 $\mu$m or less after ultrasonication;
(4) a sugar content of 15 mass% or more and 60 mass% or less; and
(5) a moisture content of 20 mass% or less,

(A) stress measured with a dynamic viscoelasticity measuring device under conditions (a) to (d) is 0.2 N or less:

(a) mixing 2 parts of the fat/oil composition with 1 part of olive oil by weight,
(b) using a parallel plate having a diameter of 25 mm,
(c) setting a preset temperature of the fat/oil composition to 20°C, and
(d) measuring a maximum value of force applied in vertical direction when the parallel plate is lowered down with respect to a sample table to form a gap therebetween of 1 mm;

(B) loss tangent measured with a dynamic viscoelasticity measuring device under conditions (e) to (h) is 1.000 or more:

(e) using a parallel plate having a diameter of 25 mm,
(f) setting a preset temperature of the fat/oil composition to 20°C,
(g) setting a gap to 1 mm, and
(h) a shear strain of 0.1% and an angular velocity of 1 rad/s; and

(C) a value measured (20°C, 10 seconds) with a Bostwick viscometer is 0.1 cm or more and 20 cm or less.

[11] The manufacturing method according to [10], wherein the moisture content (5) is 1 mass% or more.

[12] The manufacturing method according to [10] or [11], wherein the fine food particle-containing fat/oil composition further satisfies requirement (6):

(6) (total fat/oil content)/[(moisture content) + (total fat/oil content)] is 0.75 or more.

[13] The manufacturing method according to any one of [10] to [12], wherein the fine food particle-containing fat/oil composition further satisfies requirement (7):

(7) a maximum particle size before ultrasonication is more than 30 $\mu$m.

[14] The manufacturing method according to any one of [10] to [13], wherein Expression (I) is further satisfied:

$$H > 145 \times 2.73^{(-0.07 \times T)} \quad \text{Expression (I)}$$

wherein

H represents warming time (hour), and
T represents a maximum temperature (°C) during warming.

[15] A method for imparting an effect of spreadability at a low temperature or a high temperature to a fat/oil composition containing fine food particles, the method comprising preparing the composition according to any one of [1] to [9] by warming of a fat/oil composition containing fine food particles.

Advantageous Effects of the Invention

The present invention provides a fat/oil composition comprising a fine food particle, which is used as a spread or the like, and which maintains excellent spreadability even at a temperature in a refrigerator lower than a normal temperature or at a temperature higher than a normal temperature in summer.

Description of Embodiments

Hereinafter, examples of the present invention embodiments will be described, but the present invention is not limited to these aspects, and can be implemented with any modifications without departing from the gist thereof.

The present invention relates to a fat/oil composition containing fine food particles (fine food particle-containing fat/oil composition: hereinafter may be appropriately referred to as "composition of the present invention") that may be used as, for example, a spread.

Examples of the food as a raw ingredient of fine food particles used in the composition of the present invention include, but not limited to, grains, beans, vegetables, and fruits. These foodstuffs may be used alone or in combination of two or more thereof. In addition, these foodstuffs may be directly used or may be used after various treatments (for example, drying, heating, harshness removal, peeling, seed removal, ripening, salting, and pericarp processing).

The grains are those to be eaten or drunk and may be any type. Examples thereof include, but not limited to, amaranth, foxtail millet, oat, barley, proso millet, quinoa, wheat, rice, sugar cane, buckwheat, corn (e.g., sweet corn), adlay, Japanese millet, fonio, and sorghum. In particular, preferred is corn, and sweet corn is further preferred.

The beans are those to be eaten or drunk and may be any type. Examples thereof include, but not limited to, kidney bean, runner bean, quail bean, soybean (e.g., yellow soybean and green soybean), pea (e.g., green pea), pigeon pea, mung bean, cowpea, azuki bean, broad bean, black soybean, chickpea, lentil, hiramame (Lens culinaris), peanut, lupine bean, grass pea, and carob. In particular, preferred are green soybean, pea, and black soybean, and green soybean and pea (in particular, green pea) are more preferred. Incidentally, green soybean is soybean in an immature state harvested together with its pod without being dried before harvesting and has a green appearance. Incidentally, a foodstuff of which a partial edible part is treated as a vegetable (e.g., green soybean or green pea) also can be judged whether it is a bean or not based on the state of the whole plant (e.g., soybean or pea) including the non-edible part (such as a pod).

The vegetables are those to be eaten or drunk and may be any type. Examples thereof include, but not limited to, artichoke, chives, ashitaba (Angelica keiskei), asparagus, aloe, cucurbitaceous plant, green bean, udo (Aralia cordata), pea sprout, podded pea, snap pea, okra, turnip, pumpkin, mustard, cauliflower, chrysanthemum, cabbage, cucumber, allium ochotense, water spinach, watercress, quiche, kale, great burdock, komatsuna (Brassica rapa var. perviridis), zha cai, sweet pepper, perilla, cowpea, garland chrysanthemum, ginger, stem of taro, sugukina (Brassica rapa var. neosuguki), zucchini, drowort, celery, tatsoi, Japanese radish, chinese mustard, bamboo shoot, onion, chicory, green pak choi, red pepper, tomato, eggplant, Brassica flower, bitter melon, Chinese chives, carrot, nozawana (Brassica rapa L. var. hakabura), Chinese cabbage, bok choy, basil, parsley, beet, bell pepper, fuki (Petasites japonicus), broccoli, sponge gourd, spinach, horseradish, potherb mustard, Japanese hornwort, myoga, bean sprout, cucumber, molokheiya, lily bulb, Japanese mugwort, Japanese leek, roquette, rhubarb, lettuce, lotus root, shallot, Japanese horseradish, western bracken fern, herbs (such as coriander, sage, thyme, basil, oregano, rosemary, peppermint, lemongrass, and dill), potatoes (such as kikuimo (Helianthus tuberosus), sweet potato, eddoe, potato, purple sweet potato, and yacon), and mushrooms (such as shiitake mushroom, matsutake mushroom, Jew's ear fungus, maitake mushroom, and mushroom). In particular, preferred are, for example, carrot, pumpkin, cabbage, kale, paprika, beet, broccoli, spinach, onion, tomato, and potatoes, and carrot, pumpkin, kale, paprika, spinach, beet, broccoli, tomato, and sweet potato are particularly preferred.

The fruits are those to be eaten or drunk and may be any type. Examples thereof include, but not limited to, acerola, avocado, apricot, strawberry, fig, Japanese apricot, citrus fruits (such as iyokan, citrus unshu, orange, grapefruit, lime, and lemon), olive, persimmon, kiwi fruit, guava, pomegranate, watermelon, plum, cherries (such as cherry and black cherry), jujube, pineapple, haskap, banana, papaya, loquat, grape, berries (such as blueberry and raspberry), mango, mangosteen, melon, peach, and apple. In particular, preferred are, for example, avocado, strawberry, berry, citrus, grape, and apple, and for example, strawberry and apple are particularly preferred.

The composition of the present invention may contain arbitrary one or more foodstuffs in addition to the food as the raw ingredient of the fine food particles. Examples of such foodstuffs include plant foodstuffs, microbial foods, and animal foodstuffs. In particular, plant foodstuffs are preferable. Examples of the plant foodstuff include, but not limited to, spices and algae. These foodstuffs may be used alone or in combination of two or more thereof. Furthermore, the edible parts and/or the inedible parts thereof may be used in an arbitrary combination. In addition, these foodstuffs may be directly used or may be used after various treatments (for example, drying, heating, harshness removal, peeling, seed removal, ripening, salting, and pericarp processing).

When the foodstuff used in the composition of the present invention includes an inedible part in addition to an edible part, only the edible part may be used, only the inedible part may be used, or both the edible part and the inedible part may be used. In particular, since an "inedible part" contains a large amount of insoluble dietary fibers, the use of the "inedible part" keeps the spreadability at a low temperature or a high temperature constant and is therefore preferable.

In the present invention, the "inedible part" of a foodstuff refers to a part of the foodstuff that is usually unsuitable for eating/drinking and is discarded in normal dietary habits, and the "edible part" refers to a part obtained by removing the discarded part (inedible part) from the whole foodstuff. In particular, a foodstuff including an inedible part has poor feeding ability and compatibility with other foodstuffs and has not been used for eating and has been discarded a lot. However, the present invention can suitably use such inedible parts. In addition, the classification of a foodstuff can be judged based on the state of the whole plant including the inedible part. In the present invention, the proportion of the inedible part in the composition is, on the wet weight basis, preferably 0.1 mass% or more, further preferably 0.2 mass% or more, further preferably 0.4 mass% or more, in particular, preferably 0.6 mass% or more, and further preferably 0.8 mass% or more, especially preferably 1.0 mass% or more, further preferably 2.0 mass% or more, and particularly, most preferably 3.0 mass% or more. In addition, the upper limit of the mass percentage above is usually 98 mass% or less, in particular, preferably 91 mass% or less, further preferably 85 mass% or less, especially preferably 80 mass% or less, and particularly preferably 55 mass% or less. It is preferable to adjust the proportion of the inedible part in the composition of the present invention in the predetermined range above, from the viewpoint of good flavor.

The edible parts and/or the inedible parts of foodstuffs used in the composition of the present invention may be derived from a single type of foodstuff or may be an arbitrary combination of those derived from multiple types of foodstuffs. Furthermore, when both an edible part and an inedible part are contained, the proportion by percentage of "(inedible part)/[(edible part) + (inedible part)]" is preferably 0.2% or more because the quality of taste of the edible part is improved, further preferably 0.5% or more, further preferably 0.8% or more, further preferably 1.0% or more, further preferably 2.0% or more, and most preferably 3.0% or more. In addition, the upper limit of the proportion by percentage is usually 100% or less, in particular, preferably 90% or less, further preferably 80% or less, especially preferably 70% or less, and particularly preferably 60% or less.

In addition, when the composition of the present invention contains both an edible part of a foodstuff and an inedible part of a foodstuff, although the edible part and the inedible part may be derived from different types of foodstuffs, it is preferable to contain the edible part and the inedible part derived from the same type of foodstuffs. That is, it is possible to eat the nourishment of a foodstuff without waste by using a part or the whole of the edible part and a part or the whole of the inedible part derived from the same type of foodstuffs.

Specifically, when an edible part and an inedible part are derived from the same type of foodstuffs, the inedible part is contained in the composition in an amount, on the wet weight basis, of preferably 6 mass% or more, further preferably 8 mass% or more, further preferably 10 mass% or more, further preferably 15 mass% or more, further preferably 18 mass% or more, and most preferably 20 mass% or more. The upper limit is usually 90 mass% or less, in particular, preferably 80 mass% or less, further preferably 70 mass% or less, especially preferably 60 mass% or less, and particularly preferably 50 mass% or less.

Examples of the inedible part of the foodstuff in the composition of the present invention include peel, seeds, cores, and strained lees of the above-mentioned various foodstuffs. In particular, for example, in the peel, seeds, cores, and strained lees of corn, green soybean, pea, carrot, pumpkin, cabbage, kale, onion, paprika, beet, broccoli, spinach, tomato, apple, avocado, and citrus fruits, but not limited thereto, since nourishment abundantly remains, they can be suitably used in the present invention. Specifically, examples thereof include, but not limited to, the bract, pistil, and corncob (core) of corn, the pod of green soybean, the pod of pea (e.g., green pea), the petiole base of carrot, the seeds or guts of pumpkin, the core of cabbage, the petiole base of kale, the protection leaf, bottom, or head of onion, the seeds and calyx of paprika, the peel of beet, the stem and leaf of broccoli, the stump of spinach, the calyx of tomato, the core of apple, the seeds and peel of avocado, and the peel, seeds, and guts of citrus fruits. In particular, from the viewpoint of productivity and flavor, more preferred are a corn core, a green soybean pod, a green pea pod, a carrot petiole base, pumpkin seed or guts, a kale petiole base, a paprika seed or calyx, beet peel, broccoli stem and leaf, a spinach stump, and a tomato calyx.

Incidentally, the site and the proportion of the inedible part in the foodstuff used in the composition of the present invention can be naturally understood by those skilled in the art who handle the food or processed products of the food. For example, the "disposal part" and the "wastage rate" described in the Standard Tables of Food Composition in Japan, 2015, (Seventh Revised Version) can be referred to and used as the site and the proportion of the inedible part, respectively. Table 1 below lists examples of foodstuffs containing insoluble dietary fiber and their "disposal parts" and the "wastage rates" (i.e., the sites and the proportions of inedible parts) described in the Standard Tables of Food Composition in Japan, 2015, (Seventh Revised Version). Incidentally, based on the site and the proportion of the inedible part in a foodstuff, the site and the proportion of the edible part can also be understood.

[Table 1]

| Foodstuff containing insoluble dietary fiber | Site of inedible part (disposal part) | Proportion of inedible part (wastage rate) |
|---|---|---|
| Vegetables/ green soybean/ raw | Pod | 45% |
| Vegetables/ (corn)/ sweet corn/ immature seed, raw | Bract, pistil, and corncob | 50% |
| Vegetables/ (pumpkin)/ Japanese pumpkin/ fruit, raw | Guts, seed, and both ends | 9% |
| Vegetables/ (bell peppers)/ red bell pepper/ fruit, raw (paprika) | Calyx, core, and seed | 10% |
| Vegetables/ beet/ root, raw | Root apex, peel, and petiole base | 10% |
| Vegetables/ broccoli/ inflorescence, raw | Stem and leaf | 50% |
| Vegetables/ (tomatoes)/ tomato/ fruit, raw | Calyx | 3% |

(continued)

| Foodstuff containing insoluble dietary fiber | Site of inedible part (disposal part) | Proportion of inedible part (wastage rate) |
|---|---|---|
| (cabbages)/ cabbage/ head leaf, raw | Core | 15% |

In the present invention, from the viewpoint of securing an appropriate fluidity and preventing the overall color from becoming uneven due to migration of the coloring matter of fine food particles to oil, the content of the fine food particles contained in the fine food particle-containing fat/oil composition of the present invention is preferably in a predetermined range. Specifically, the content of the fine food particles contained in the fine food particle-containing fat/oil composition of the present invention is 25 mass% or more. In particular, the content is preferably 30 mass% or more, further preferably 35 mass% or more, in particular, preferably 40 mass% or more, and particularly, most preferably 45 mass% or more. In addition, the upper limit is 90 mass% or less. In particular, the upper limit is preferably 85 mass% or less, further preferably 80 mass% or less, in particular, preferably 75 mass% or less, and particularly, most preferably 70 mass% or less.

The content of fine food particles in the composition can be determined by measuring the content of fine food particles of 2,000 $\mu$m (2 mm) or less, which is the target of laser diffraction particle size distribution measurement, in the composition. When the composition includes food or the like having a size of larger than 2 mm, the measurement may be performed after removing the food or the like of larger than 2 mm. For example, a fraction of the composition passed through 9-mesh (aperture: 2 mm) is centrifuged, and the weight of the precipitated fraction obtained by sufficiently removing the separated supernatant can be measured. More specifically, the content of fine food particles in a composition can be measured by, for example, allowing an arbitrary amount of the composition to pass through a 9-mesh (Tyler mesh), centrifuging the passed-through fraction at 15,000 rpm for 1 minute, sufficiently removing the separated supernatant, and measuring the weight of the precipitated fraction. Incidentally, the content of fine food particles in a composition remaining on the mesh after sieving through the 9-mesh can be measured by sufficiently leaving to stand and then further allowing the fine food particles to sufficiently pass through a 9-mesh using a spatula or the like, and the content of fine food particles in a composition having a low fluidity not passing through a 9-mesh, for example, a composition having physical properties in which the Bostwick viscosity is 10 cm or less at 20°C for 30 seconds, can be measured by diluting the composition about 3-fold with fat/oil that is liquid at a normal temperature, such as olive oil, allowing the composition to pass through a 9-mesh, and then centrifuging the composition. The content of fine food particles in a thermoplastic composition can be measured in a state provided with fluidity by heating as in the composition having a low fluidity not passing through a 9-mesh. In these cases, the fat/oil or moisture is partially incorporated in the precipitated fraction, and the total amount of fine food particles refers to the total weight of such components incorporated in the precipitated fraction and the food.

The composition of the present invention preferably contains oil cake food from the viewpoint of spreadability and flavor. The oil cake food refers to seed plants and nuts that are usually used as raw materials for vegetable fat/oil, and it is preferable to use nuts from the viewpoint of flavor. Specifically, the nuts may be any type, and examples thereof include, but not limited to, almond, hemp, linseed, perilla, cashew nut, Japanese nutmeg, ginkgo, chestnut, walnut, poppy, coconut, sesame, chinquapin, Japanese horse-chestnut, lotus seed, Torreya seed, pistachio, sunflower seed, brazil nut, hazelnut, pecan, macadamia nut, pine nut, and peanut. In particular, almond, cashew nut, macadamia nut, pistachio, hazelnut, coconut, coffee bean, and cacao bean are mentioned, and almond, cashew nut, and hazelnut are particularly preferable.

When the composition of the present invention includes oil cake food, the content thereof is more preferably 3 mass% or more, further preferably 5 mass% or more, and most preferably 10 mass% or more from the viewpoint of spreadability and flavor. In addition, the content of the oil cake food is more preferably 60 mass% or less, more preferably 50 mass% or less, and most preferably 40 mass% or less. Furthermore, although the oil cake food may have any properties, paste, liquid, semi-solid, and powder forms are preferred because of ease of mixing with each foodstuff.

The composition of the present invention may contain one or more kinds of fat/oil. When two or more kinds of fat/oil are contained, the combination of the two or more kinds of fat/oil and the ratio thereof are arbitrary.

Although examples of the type of fat/oil include edible fat/oil, various types of fatty acids, and food made therefrom, it is preferable to use edible fat/oil. The edible fat/oil may be that contained in a foodstuff, but addition of edible fat/oil other than the foodstuff is preferred because of familiarity with the foodstuff. Incidentally, when edible fat/oil other than a foodstuff is added, it is preferable to adjust the amount thereof such that the content of the edible fat/oil other than the foodstuff is 10 mass% or more, in particular, 30 mass% or more of the total fat/oil content in the composition.

Examples of the edible fat/oil include sesame oil, rapeseed oil, high oleic rapeseed oil, soybean oil, palm oil, cottonseed oil, corn oil, sunflower oil, high oleic sunflower oil, safflower oil, olive oil, linseed oil, rice oil, camellia oil, perilla oil, flavor oil, coconut oil, grape seed oil, peanut oil, almond oil, avocado oil, cacao butter, salad oil, canola oil, and animal fat/oil such as MCT (medium chain fatty acid triglyceride), diglyceride, hydrogenated oil, transesterified oil, milk fat, and beef tallow. In particular, for example, sesame oil, olive oil, rapeseed oil, soybean oil, rice oil, coconut oil, and palm oil are preferred, and from the viewpoint of flavor, olive oil, coconut oil, and rapeseed oil are more preferred.

Examples of the food made of various types of fat/oil as the raw materials include butter, margarine, shortening, fresh cream, and soybean milk cream (e.g., "Kokurimu" (registered trademark) of Fuji Oil Co., Ltd.).

In particular, from the viewpoint of ease of manufacturing, the edible fat/oil to be used is preferably edible fat/oil that is liquid at a normal temperature. Incidentally, the term "normal temperature" in the present invention refers to 20°C unless otherwise specified. The term "liquid edible fat/oil" refers to fat/oil having liquid fluidity, specifically, fat/oil having a Bostwick viscosity (the measured value of the flow distance of a sample in a trough at a predetermined temperature for a predetermined time) of 10 cm or more, more preferably 15 cm or more, and further preferably 28 cm or more at 20°C for 10 seconds in a Bostwick viscometer (that used in the present invention has a trough length of 28.0 cm and a maximum Bostwick viscosity, i.e., the maximum flow distance of a sample in the trough, of 28.0 cm). In the present invention, it is preferable that the fat/oil part (for example, the fat/oil components released by centrifugation at 15,000 rpm for 1 minute) in the composition have liquid fluidity (specifically, the Bostwick viscosity at 20°C for 10 seconds in a Bostwick viscometer is 10 cm or more, more preferably 15 cm or more, and further preferably 28 cm or more). Incidentally, when two or more kinds of edible fat/oil including liquid fat/oil are used, it is preferable that 90 mass% or more, in particular 92 mass% or more, further 95 mass% or more, and particularly 100 mass% of the whole fat/oil is the liquid fat/oil.

In addition, the proportion of unsaturated fatty acid (the total proportion of monovalent unsaturated fatty acid and multivalent unsaturated fatty acid) is preferably higher than the proportion of saturated fatty acid in the edible fat/oil from the viewpoint of ease of manufacturing, and the proportion of unsaturated fatty acid is more preferably twice or more the proportion of saturated fatty acid in the edible fat/oil.

In the composition of the present invention, the lower limit of the total fat/oil content is 10 mass% or more from the viewpoint of spreadability at a low temperature. The lower limit is further preferably 15 mass% or more, in particular, preferably 18 mass% or more, and particularly, most preferably 20 mass% or more. In addition, from the viewpoint of suppressing oily taste, the upper limit of the total fat/oil content in the whole composition is 70 mass% or less. The upper limit is further preferably 60 mass% or less, in particular, preferably 50 mass% or less, and particularly, most preferably 45 mass% or less.

In addition, a ratio of the total fat/oil content to the sum of the moisture content and the total fat/oil content in the composition of the present invention is preferably in a predetermined range from the viewpoint of the spreadability, in particular, the spreadability at a low temperature (which is the spreadability at 4°C in the present invention). Specifically, generally, a ratio of 0.75 or more is preferable, and a ratio of 0.80 or more is further preferable. At the same time, the lower limit of the ratio is preferably 0.95 or less and more preferably 0.90 or less.

In the present invention, as a method for measuring the total fat/oil content, the amount of lipid in the composition may be measured, and a usual method can be used. Examples thereof include methods in accordance with the method described in the "Food Labeling Standards (Cabinet Office Ordinance No. 10, 2015)" or the "Standard Tables of Food Composition in Japan, 2015 (Seventh Revised Version) Analysis Manual". Specifically, for example, a chloroform-methanol mixture extraction method or a Soxhlet extraction method is mentioned.

The composition of the present invention may contain arbitrary one or more seasonings and food additives. Examples of the seasoning and food additives include soy sauce, soybean paste, alcohols, minerals, flavoring, pH adjusters (e.g., sodium hydroxide, potassium hydroxide, lactic acid, citric acid, tartaric acid, malic acid, and acetic acid), cyclodextrin, antioxidants (e.g., tea extract, raw coffee bean extract, chlorogenic acid, spice extract, caffeic acid, rosemary extract, rutin, quercetin, bayberry extract, and sesame extract), emulsifiers (e.g., glycerol fatty acid ester, saponin, sucrose fatty acid ester, and lecithin), colorants (e.g., $\beta$-carotene, caramel, turmeric pigment, safflower yellow pigment, gardenia yellow pigment, and grape skin pigment), and thickening stabilizers (e.g., tamarind seed gum, tara gum, guar gum, hydroxypropyl distarch phosphate, and pectin).

However, with the recent increase in nature-oriented perspective, the composition of the present invention preferably contains no so-called food additives, emulsifier and/or colorant and/or thickening stabilizer (for example, those listed as "emulsifier", "colorant", and "thickening stabilizer" in "Appendix Additive 2-1" or "Appendix Additive 2-3" of the "Food Labeling Standards (Cabinet Office Ordinance No. 10, 2015)". In particular, the composition of the present invention preferably does not contain emulsifiers for satisfying health-conscious consumers and preventing migration of the coloring matter of fine food particles to oil. In addition, it is especially desirable that the composition of the present invention contains no food additives (for example, materials listed in "Appendix Additive 2-1" or "Appendix Additive 2-3" of the "Food Labeling Standards (Cabinet Office Ordinance No. 10, 2015)" applied to food additive use) .

In the composition of the present invention, various parameters relating to the particle size of the composition before and after ultrasonication, i.e., the maximum particle size and the modal particle size preferably satisfy the following specific requirements.

In the composition of the present invention, the modal particle size after ultrasonication is adjusted in a predetermined range. Consequently, the composition of the present invention has appropriate spreadability not only at a normal temperature but also at a high temperature and a low temperature. Specifically, the lower limit of the modal particle size after ultrasonication of the composition of the present invention is 0.3 $\mu$m or more. Furthermore, the lower limit is preferably 1 $\mu$m or more, further preferably 3.0 $\mu$m or more, in particular, particularly preferably 5.0 $\mu$m or more, and particularly, most preferably 7.0 $\mu$m or more. In addition, the upper limit is 200 $\mu$m or less. The upper limit is, in particular, preferably 100 $\mu$m or less, further preferably 90 $\mu$m or less, in particular, preferably 80 $\mu$m or less, further preferably 70 $\mu$m or less, especially preferably 60 $\mu$m or less, and particularly, most preferably 50.0 $\mu$m or less. In addition, a modal particle size after ultrasonication of the composition of the present invention adjusted in the above predetermined range is preferable from the viewpoint of migration of the coloring matter of the fine food particles.

In addition, in the present invention, the modal particle size represents the particle size at the channel with the highest particle frequency % in particle size distribution at each channel obtained by measuring the composition with a laser diffraction particle size distribution analyzer. When multiple channels has exactly the same particle frequency %, the particle size at the channel of the smallest particle size among them is adopted. When the particle size distribution is normal distribution, the value agrees with the median diameter. When the particle size distribution is biased, especially when there are multiple peaks in the particle size distribution, the numerical values greatly differ from each other. The measurement of the particle size distribution of a sample with a laser diffraction particle size distribution analyzer can be performed by the method below. Incidentally, when a sample is a thermoplastic solid, the sample also can be similarly subjected to the analysis with a laser analysis particle size distribution analyzer described below by heat-treating the sample and the subjecting the obtained liquid sample to analysis.

The maximum particle size in the composition of the present invention before ultrasonication is preferably adjusted in a predetermined range for improving the flavor release and imparting a good flavor to the composition. Specifically, the maximum particle size before ultrasonication is preferably 30 $\mu$m or more, further preferably 40 $\mu$m or more, further preferably 50 $\mu$m or more, in particular, preferably 55 $\mu$m or more, and particularly preferably 60 $\mu$m or more. If micronization is performed until the maximum particle size before ultrasonication becomes less than the above-mentioned lower limit, the texture of the foodstuff is destroyed to easily give unfavorable flavor. At the same time, the upper limit is preferably 2,000 $\mu$m or less, and from the viewpoint of flavor in addition to spreadability, although it is not limited thereto, an upper limit of 1,800 $\mu$m or less, further 1,500 $\mu$m or less, in particular, 1,200 $\mu$m or less, further 1,100 $\mu$m or less, or particularly 1,000 $\mu$m or less is preferable.

Incidentally, since the composition of the present invention is a turbid system, it is difficult to visually differentiate the maximum particle size precisely, but it is thought that when the maximum particle size after disturbance is higher than a predetermined value, the probability that the maximum particle size in the sample after disturbance observed with a microscope is also higher than the predetermined value is high, and it is thought that when the maximum particle size before disturbance is higher than a predetermined value, the probability that the maximum particle size in the sample before disturbance observed with a microscope is also higher than the predetermined value is high.

In addition to the maximum particle size before ultrasonication and the modal particle size after ultrasonication above, the 50% integrated diameter (d50) of particle sizes after ultrasonication of the composition of the present invention is preferably adjusted in a predetermined range from the viewpoint of spreadability and migration of the coloring matter of the fine food particles. Specifically, the d50 of the particle sizes after disturbance of the composition of the present invention, i.e., after ultrasonication, is preferably 1 $\mu$m or more, more preferably 5 $\mu$m or more, and further preferably 8 $\mu$m or more. In addition, the upper limit of the d50 is 150 $\mu$m or less, more preferably 100 $\mu$m or less, and further preferably 75 $\mu$m or less.

Incidentally, the d50 of particle sizes of a composition is defined as a particle size at which the ratio of the cumulative value of particle frequency % on the large side to the cumulative value of particle frequency % on the small side is 50 : 50 when the particle size distribution of the composition is divided into two from a certain particle size.

Incidentally, the term "particle size" in the present invention refers to that measured on a volume basis unless otherwise specified.

Although the methods for measuring various parameters relating to the particle size of the present invention are not limited, in general, the particle size distribution is measured by a known measuring method, and the parameters can be determined based on the resulting particle size distribution. As specific examples of the apparatus, condition, and procedure for measuring particle size distribution, those described in Examples can be used.

The solvent at the time of measurement may be any solvent that hardly affects the structure of the composition, and, for example, ethanol can be used. When the measurement apparatus and software described in Examples are used, measurement may be performed by pressing down the washing button of the software to implement washing, pressing down the set zero button of the software to implement zero adjustment, and directly charging a sample by sample loading until the concentration of the sample falls within an appropriate range. The concentration of a sample before disturbance, i.e., a sample not subjected to ultrasonication is adjusted in an appropriate range by performing sample loading two times or less after sample charging, then immediately laser diffraction is performed at a flow rate of 60% for a measurement time of 10 seconds, and the result may be used as the measured value. When a sample after disturbance, i.e., a sample subjected to ultrasonication is measured, a previously ultrasonicated sample may be charged, or a sample is charged and then ultrasonicated using the above-mentioned measurement apparatus, and subsequently the measurement may be performed. In the latter case, a sample not subjected to ultrasonication is charged, the concentration is adjusted in an appropriate range by sample loading, and the ultrasonication button of the software is then pressed down to perform ultrasonication. Subsequently, defoaming is performed three times, and then sample loading is performed again. Immediately after verification that the concentration is still in the appropriate range, laser diffraction is performed at a flow rate of 60% for a measurement time of 10 seconds, and the result can be used as the measured value. The parameters at the time of measurement can be, for example, distribution display: volume, particle refractive index: 1.60, solvent refractive index: 1.36, upper limit of measurement ($\mu$m) = 2,000.00 $\mu$m, and lower limit of measurement ($\mu$m) = 0.021 $\mu$m.

In determining various particle sizes of the composition of the present invention, it is preferable to measure the particle size distribution at each channel (CH) and then determine the particle sizes using the particle size for each measurement channel shown in Table 2 below as the standard. Specifically, the particle frequency % of each channel (which is also referred to as "particle frequency % for XX channel") can be determined by measuring the frequency of particles that are not larger than the particle size specified for each channel shown in Table 2 below and larger than the particle size specified for the channel with one larger number of each channel (in the channel largest in the measurement range, measurement lower limit of particle size) shown in Table 2 below and using the total frequency of all channels in the measurement range as the denominator. For example, the particle frequency % of channel 1 represents the frequency % of particles having sizes of 2,000.00 $\mu$m or less and higher than 1,826.00 $\mu$m. Regarding the maximum particle size, among the channels giving particle frequency % in the results obtained by measuring the particle frequency % at each of 132 channels shown in Table 2 below, the particle size of the channel of the largest particle size can be determined as the maximum particle size. In other words, when the maximum particle size of the composition of the present invention is measured using a laser diffraction particle size distribution analyzer, the preferable measurement conditions are that ethanol is used as the measurement solvent, and the particle size of an object with an upper limit of measurement of 2,000.00 $\mu$m and a lower limit of measurement of 0.021 $\mu$m is measured immediately after charging of the sample.

The composition of the present invention contains one or more sugars. The sugar may be that derived from a raw material of the composition, such as a foodstuff, or one or more sugars may be separately added to the composition. Examples of the type of sugar include, but not limited to, saccharides (e.g., glucose, sucrose, fructose, glucose fructose liquid sugar, and fructose glucose liquid sugar), sugar alcohols (e.g., xylitol, erythritol, and maltitol), artificial sweeteners (e.g., sucralose, aspartame, saccharin, and acesulfame K), starch, and starch decomposition products, and also include foodstuffs containing sugar, such as juice extraction (including juice) and sap derived from plants containing these saccharides, and purified products or concentrates thereof. In particular, preferred are foodstuffs containing sugar and purified products or concentrates thereof from the viewpoint of easily feeling the original sweetness of the material. Examples of the foodstuff containing sugar include fruit juice, date, sugar cane, maple, and honey.

The sugar content in the composition of the present invention is preferably adjusted in a predetermined range from the viewpoint of improving the spreadability at a normal temperature (in the present invention, spreadability at 20°C). The lower limit of the sugar content in the composition of the present invention is 15 mass% or more and in particular, preferably 18 mass% or more, further preferably 20 mass% or more, and especially, most preferably 25% or more as the total content of sugars in the whole composition. In addition, the upper limit of the sugar content in the whole composition of the present invention is 60 mass% and in particular, preferably 50 mass% or less, further preferably 45 mass% or less, and particularly, further preferably 40 mass% or less. Incidentally, in the present invention, a usual method can be used as the method for measuring sugar content. Examples thereof include methods in accordance with the method described in the "Food Labeling Standards (Cabinet Office Ordinance No. 10, 2015)" or "Standard Tables of Food Composition in Japan, 2015 (Seventh Revised Version) Analysis Manual". Specifically, for example, high-performance liquid chromatography is mentioned.

The composition of the present invention has a stress in a predetermined range from the viewpoint of the allover spreadability. Specifically, the upper limit of the stress of the composition of the present invention when 1 part of olive oil is stirred and mixed with 2 parts by weight of the fat/oil composition is 0.20 N or less and in particular, preferably 0.15 N or less, further preferably 0.10 N or less, and particularly preferably 0.08 N or less. At the same time, the lower limit of the stress of the composition of the present invention is preferably 0.00 N or more. In the present invention, the stress of a composition can be measured with a dynamic viscoelasticity measuring device. Specifically, the stress refers to the maximum value of the vertical repulsive force applied to a jig when lowering a parallel plate (Parallel-Plat (PP) 25) having a diameter of 25 mm to form a gap of 1 mm (the gap between the sample table and the jig is 1 mm) at a specific preset temperature (preset temperature: 20°C). That is, the value measured with a dynamic viscoelasticity measuring device under the following conditions (a) to (d) can be used as the stress value.

(a) mixing 2 parts of a fat/oil composition with 1 part of olive oil by weight;
(b) using a parallel plate having a diameter of 25 mm;
(c) setting the preset temperature of the fat/oil composition to 20°C; and

(d) measuring the maximum value of force applied in the vertical direction when the parallel plate is lowered down with respect to the sample table to form a gap therebetween of 1 mm.

In the measurement, if a solid larger than 1 mm is present, an accurate value may not be measured, and so the residue after removing the solid is subjected to measurement. For example, 5 g of olive oil is stirred and mixed with 10 g of a sample, and the solid (e.g., an ingredient) larger than 1 mm is appropriately removed from the sample by a method not affecting the stress of the composition to prepare a measurement sample to be used. In addition, the measurement can be performed using Modular Compact Rheometer (MCR) 102 (manufactured by Anton Paar GmbH) as the measurement equipment, Parallel Plat (PP) 25 as the jig for measurement, and software (RheoCompass) attached to the MCR 102 measurement equipment and setting the measurement conditions such that the preset temperature is 20°C and the gap between the sample table of the MCR 102 and the jig is lowered down to 1 mm. Specifically, a series of measurement conditions are set such that the migration profile is set to "paste form", the inertia of the measurement jig is adjusted, then the setting is stored, and the motor is adjusted; an appropriate amount of each sample previously set to the preset temperature of MCR 102 is placed at a predetermined place of MCR 102; and the maximum value of the vertical repulsive force applied to the jig when lowering the jig to a predetermined position under certain conditions can be determined as the measured value. Incidentally, in the present invention, when a stress of a composition is measured, a negative numeric value is a measurement error and is therefore regarded as 0.00 N.

The composition of the present invention has a ratio (loss tangent) of the loss modulus to the storage modulus in a predetermined value range from the viewpoint of obtaining excellent spreadability. Specifically, the lower limit of the loss tangent of the composition of the present invention is 1.000 or more and furthermore, preferably 1.100 or more, in particular, preferably 1.200 or more, and particularly, preferably 1.300 or more. At the same time, the upper limit of the loss tangent of the composition of the present invention is preferably 7.500 or less and furthermore, preferably 5.000 or less, in particular, preferably 4.000 or less, and particularly, preferably 3.000 or less. Incidentally, in the present invention, the loss tangent of a composition means the degree of liquid properties and solid properties of the composition, and the larger the value is, the stronger the liquid property is. The value can be obtained by measuring the storage modulus and the loss modulus with a dynamic viscoelasticity measuring device. Specifically, for example, the measurement can be performed using Modular Compact Rheometer (MCR) 102 (manufactured by Anton Paar GmbH) as the measurement equipment and using the same jig for measurement, software, and measurement conditions as those in the measurement of stress under certain conditions at a shear strain of 0.1% and an angular velocity of 1 rad/s (1 radian per second). That is, the value measured with a dynamic viscoelasticity measuring device under the following conditions (e) to (h) can be used as the value of loss tangent.

(e) using a parallel plate having a diameter of 25 mm;
(f) setting the preset temperature of the fat/oil composition to 20°C;
(g) setting the gap to 1 mm; and
(h) a shear strain of 0.1% and an angular velocity of 1 rad/s.

The composition of the present invention has a viscosity value measured at 20°C with a Bostwick viscometer in a predetermined value range. Specifically, the lower limit of the measured viscosity value (measurement temperature: 20°C) is 0.1 cm or more for 10 seconds from the viewpoint of maintaining excellent spreadability and properties and furthermore, preferably 1 cm or more and particularly, preferably 2 cm or more. At the same time, the upper limit of the measured viscosity value (measurement temperature: 20°C) is 20 cm or less for 10 seconds from the viewpoint of moderate ease of application and spreadability and furthermore, preferably 15 cm or less and particularly, preferably 12 cm or less. Incidentally, a too high measured viscosity value (measurement temperature: 20°C) is not preferable because the composition does not spread and permeates in a foodstuff, such as bread. In contrast, a too low measured value is not preferable because the composition agglomerates and does not spread on a foodstuff, such as bread, and is difficult to apply.

The composition of the present invention preferably has a viscosity value measured at 4°C with a Bostwick viscometer in a predetermined value range, although it is not limited thereto. Specifically, the viscosity value measured with a Bostwick viscometer (measurement temperature: 4°C) is preferably 0.1 cm or more for 10 seconds and further preferably 1 cm or more and particularly, more preferably 5 cm or more from the viewpoint of spreadability at a low temperature. At the same time, the viscosity value measured with a Bostwick viscometer (measurement temperature: 4°C) is preferably 20 cm or less for 10 seconds and further preferably 15 cm or less and particularly, more preferably 12 cm or less from the viewpoint of obtaining quality with moderate ease of application and the viewpoint of spreadability.

The composition of the present invention also preferably has a viscosity value measured with a Bostwick viscometer at 60°C in the same range as the preferable range of the viscosity value measured with a Bostwick viscometer at 4°C, although it is not limited thereto.

In the present invention, the viscosity value measured with a Bostwick viscometer means the value of the flow distance of a sample in a trough at a predetermined temperature for a predetermined time measured with the Bostwick viscometer. The Bostwick viscometer used has a trough length of 28.0 cm and the maximum measured viscosity value, i.e., the maximum flow distance of a sample in the trough of 28.0 cm. As a measuring method, the viscosity value can be obtained by, for example, installing a KO-type Bostwick viscometer (manufactured by Fukayatekkousyo) horizontally using a level, closing the gate, then filling a reservoir with a sample adjusted to a predetermined temperature to full, pressing down a trigger for opening the gate and simultaneously measuring time, and measuring the flow distance of the material in a trough after a predetermined period of time.

The composition of the present invention preferably contains moisture. The moisture in the composition may be that derived from the above-described various components of the composition or may be that further added as water. However, the moisture content in the composition of the present invention is not higher than a predetermined range. In the present invention, the moisture content of a composition means the total amount of moisture amount derived from each component of the composition and the moisture amount separately added and refers to the mass ratio with respect to the whole composition of the present invention. Specifically, the moisture content in the whole composition of the present invention is 20 mass% or less from the viewpoint of enhancing the spreadability at a high temperature (which is the spreadability at 60°C in the present invention) and is, in particular, preferably 15 mass% or less and further preferably 10 mass% or less. Although the lower limit of mass ratio of the moisture content is not limited, the content of moisture in the composition is desirably 1 mass% or more, further desirably 3 mass% or more, and particularly desirably 5 mass% or more. Incidentally, in the present invention, a usual method can be used as the method for measuring moisture content. Examples thereof include methods in accordance with the method described in the "Food Labeling Standards (Cabinet Office Ordinance No. 10, 2015)" or "Standard Tables of Food Composition in Japan, 2015 (Seventh Revised Version) Analysis Manual". Specifically, for example, a reduced pressure heat drying method and an ordinary pressure heat drying method are mentioned.

The method for manufacturing the composition of the present invention (hereinafter, may be appropriately referred to as "manufacturing method of the present invention") is not particularly limited. Typically, a composition satisfying the above-mentioned characteristics and requirements may be prepared by mixing particles of food as the raw material of a composition of the present invention, another foodstuff to be added as needed, and other components, such as a fat/oil, moisture, and an additive, and subjecting the mixture to, for example, warming. Incidentally, arbitrary additional treatment, such as pulverization or micronization and pretreatment thereof, may be performed as needed.

In the manufacturing method of the present invention, it is preferable to perform warming at a maximum temperature during heating in a predetermined range from the viewpoint of spreadability and migration of the coloring matter of fine food particles. Incidentally, the maximum temperature during heating is the maximum-attained temperature of the composition during warming. Specifically, the lower limit of the maximum temperature during heating is preferably 30°C or more from the viewpoint of ease of maintaining properties and is further preferably 35°C or more, in particular, preferably 40°C or more, and particularly, preferably 45°C or more. At the same time, the upper limit of the maximum temperature during heating is preferably 150°C or less from the viewpoint of flavor at the time of application and is further preferably 120°C or less, in particular, preferably 110°C or less, and particularly, preferably 100°C or less.

In addition, the warming time and the maximum temperature during heating under standing conditions preferably satisfy a certain expression because the spreadability at a normal temperature is enhanced. Incidentally, the warming time in the present invention refers to the period from the time when the product temperature of a composition rises by 0.1°C from the temperature before warming until the time when the temperature reaches the maximum temperature T (°C) during heating. Specifically, when the warming time is denoted as H (hour) and the maximum temperature during warming is denoted as T (°C), the warming under standing conditions in the manufacturing method of the present invention preferably satisfies Expression (I):

$$H > 145 \times 2.73^{(-0.07 \times T)} \quad \text{Expression (I).}$$

In the manufacturing method of the present invention, the particles of food or a composition prepared by mixing the particles with another raw material is preferably subjected to pulverization or micronization. The fine food particle-containing fat/oil composition of the present invention satisfying the above-mentioned various characteristics can be easily and efficiently obtained by performing pulverization or micronization. Incidentally, although pulverization or micronization may be performed before warming, during warming, or after warming, it is preferable to perform before warming or during warming.

The method of pulverization or micronization used in the present invention is not particularly limited and may be either dry pulverization or wet pulverization, may be any of high temperature pulverization, ambient temperature pulverization, and low temperature pulverization, and may use any equipment called, for example, a blender, a mixer, a mill, a kneader, a pulverizer, a shredder, or an attritor, and preferred is a method that can treat food with a high shear force in a short time. As a dry-type fine pulverizer, for example, a medium stirring mill, such as a dry bead mill and a ball mill (a rolling type, a vibration type, etc.), a jet mill, a high-speed rotary impact type mill (e.g., pin mill), a roll mill, or a hammer mill can be used. As a wet-type fine pulverizer, for example, a medium stirring mill, such as a bead mill and a ball mill (a rolling type, a vibration type, a planet type mill, etc.), a roll mill, a colloid mill, a starburst system, or a high-pressure homogenizer can be used. In particular, a medium stirring mill (a bead mill or a ball mill) and a high-pressure homogenizer are preferred, and in particular, a bead mill can be more preferably used.

In particular, a pulverization method using a wet medium stirring mill is preferably used because migration of the coloring matter of fine food particles to oil is suppressed to provide highly stable quality compared with other treating methods. Although the principle thereof is unknown, it is probably because that the particle state of the fine food particle-containing fat/oil composition is preferably changed by pulverization. In addition, the conditions at the time of treatment with a wet medium stirring mill may be adjusted according to the size and properties of the foodstuff and the properties of the target fine food particle-containing fat/oil composition. In particular, in micronization using a wet bead mill, for example, the micronization time, whether a system of passing only once (one pass) or a system of circulating multiple times (circulation type), the pressurizing condition, the size and filling rate of beads, the outlet mesh size, the raw material slurry transfer rate, and the mill rotation strength may be appropriately selected and adjusted. In particular, the micronization time is usually less than 30 minutes, further preferably 0.1 minutes or more and 25 minutes or less, in particular, preferably 1 minute or more and 22 minutes or less, and in particular, most preferably 2 minutes or more and 20 minutes or less. Incidentally, the micronization time in the present invention refers to the shearing time of a treated sample. For example, in a bead mill crusher having a pulverization chamber volume of 100 mL and a percentage of void of 50% into which the treated liquid excluding the beads can be injected, when a sample is subjected to one pass treatment at a rate of 200 mL per minute without circulating the sample, since the void volume of the pulverization chamber is 50 mL, the sample micronization time is 50/200 = 0.25 minutes (15 seconds).

Regarding the beads that are used in micronization with a wet bead mill, the material of the beads and the material of the bead mill inner cylinder are preferably the same materials, and the materials are further preferably both zirconia.

As pretreatment for micronization, it is preferable that a foodstuff be previously roughly pulverized with, for example, a jet mill, a pin mill, a stone pulverization mill, or a rotary crusher (e.g., wonder crusher) and is then subjected to micronization. In addition, it is preferable to subject a powder foodstuff adjusted to a size having a median diameter of 100 $\mu$m or more and 1,000 $\mu$m or less to micronization, from the viewpoint of productivity.

Examples

The present invention will now be described in more detail with reference to Examples, but these Examples are merely examples for convenience of description, and the present invention is not limited to these Examples in any sense.

Composition samples of Comparative Examples 1 to 9 and Test Examples 1 to 29 were prepared as follows.

The dried products of sweet corn being grains, pineapple and raspberry being fruits, beet, carrot, pumpkin, kale, paprika, broccoli, spinach, tomato, and sweet potato being vegetables, and green pea and green soybean being beans were pulverized with a rotary crusher (wonder crusher) to obtain dry pulverized products. All of the dry pulverized products were subjected to drying until a water activity of 0.95 or less. Incidentally, as the edible part of each foodstuff, the part that is generally eaten or drunk (the part other than inedible parts) was used, and also, as inedible parts of a part of the foodstuffs, a sweet corn core, a green pea pod and a green soybean pod, a carrot petiole base, pumpkin seeds or guts, a kale petiole base, paprika seeds or calyx of paprika, beet peel, broccoli stem and leaf, a spinach stump, a tomato calyx, and a sweet potato end were used. In addition, paprika was used in the raw state, in addition to the dry pulverized product, by pulverization with a rotary crusher (wonder crusher).

These pulverized products were mixed with a fat/oil according to the proportions shown in Tables 3 to 40 below, followed by thoroughly stirring with a tabletop stirrer until obtaining an almost uniform appearance. A roughly pulverized composition in a paste form was thus obtained. As the fat/oil, commercially available olive oil, salad oil, or the like was used. These roughly pulverized compositions were subjected to micronization using a wet bead mill fine pulverizer and 1-mm-diameter beads and appropriately adjusting the outlet aperture of the wet bead mill fine pulverizer, the liquid transfer rate, and so on at constant conditions until the completion of micronization for less than 30 minutes. The oil cake food paste was also subjected to micronization by adjusting as in the pulverized product above.

These finely ground products were mixed with other foodstuffs, such as sugar and water, according to the proportions shown in Tables 3 to 40 below, and warming was performed under conditions of the maximum temperature during warming and the warming time shown in Tables 3 to 40 below to finally obtain the composition samples of Comparative Examples 1 to 9 and Test Examples 1 to 29.

[Particle size distribution (modal diameter, maximum diameter, and d50)]

The particle size distribution of each composition sample was measured using Microtrac MT3300 EXII system of MicrotracBEL Corporation as the laser diffraction particle size distribution analyzer. Ethanol was used as the solvent at the time of measurement, and DMSII (Data Management System version 2, MicrotracBEL Corporation) was used as the measurement application software. In the measurement, the washing button of the measurement application software was pressed down to implement washing, the set zero button of the software was pressed down to implement zero adjustment, and a sample was directly charged by sample loading until the concentration fell within an appropriate range.

In the measurement of a sample not subjected to disturbance, i.e., a sample before ultrasonication, the sample concentration was adjusted in an appropriate range by performing sample loading twice or less after sample charging, then immediately laser diffraction measurement was performed at a flow rate of 60% for a measurement time of 10 seconds, and the result was used as the measured value. In the measurement of a sample subjected to disturbance, i.e., a sample after ultrasonication, the sample was charged, the sample concentration was adjusted in an appropriate range by sample loading, and the ultrasonication button of the software was then pressed down to perform ultrasonication at a frequency of 40 kHz and an output of 40 W for 3 minutes. Subsequently, defoaming was performed three times, and then sample loading was performed again. Immediately after verification that the concentration was still in the appropriate range, laser diffraction measurement was performed at a flow rate of 60% for a measurement time of 10 seconds, and the result was used as the measured value. The measurement conditions used were distribution display: volume, particle refractive index: 1.60, solvent refractive index: 1.36, upper limit of measurement ($\mu$m) = 2,000.00 $\mu$m, and lower limit of measurement ($\mu$m) = 0.021 $\mu$m.

In the measurement of the particle size distribution of a sample at each channel, the particle sizes at the respective measurement channels shown in Tables 3 to 40 below were used as the standard. The particle frequency % of each channel was determined by measuring the frequency of particles that were not larger than the particle size specified for each channel and larger than the particle size specified for the channel with one larger number of each channel (in the channel largest in the measurement range, measurement lower limit of particle size) and using the total frequency of all channels in the measurement range as the denominator. Specifically, the particle frequency % at each of 132 channels was measured below. Regarding the results obtained by measurement, the particle size at the channel of the highest particle frequency % was used as the modal particle size. When multiple channels had exactly the same particle frequency %, the particle size at the channel of the smallest particle size among them was adopted as the modal particle size. In addition, among the channels giving particle frequency, the particle size of the channel of the largest particle size was adopted as the maximum particle size.

[Table 2]

| Channel | Particle size ($\mu$m) | Channel | Particle size ($\mu$m) | Channel | Particle size ($\mu$m) | Channel | Particle size ($\mu$m) |
|---|---|---|---|---|---|---|---|
| 1 | 2000.000 | 37 | 88.000 | 73 | 3.889 | 109 | 0.172 |
| 2 | 1826.000 | 38 | 80.700 | 74 | 3.566 | 110 | 0.158 |
| 3 | 1674.000 | 39 | 74.000 | 75 | 3.270 | 111 | 0.145 |
| 4 | 1535.000 | 40 | 67.860 | 76 | 2.999 | 112 | 0.133 |
| 5 | 1408.000 | 41 | 62.230 | 77 | 2.750 | 113 | 0.122 |
| 6 | 1291.000 | 42 | 57.060 | 78 | 2.522 | 114 | 0.111 |
| 7 | 1184.000 | 43 | 52.330 | 79 | 2.312 | 115 | 0.102 |
| 8 | 1086.000 | 44 | 47.980 | 80 | 2.121 | 116 | 0.094 |
| 9 | 995.600 | 45 | 44.000 | 81 | 1.945 | 117 | 0.086 |
| 10 | 913.000 | 46 | 40.350 | 82 | 1.783 | 118 | 0.079 |
| 11 | 837.200 | 47 | 37.000 | 83 | 1.635 | 119 | 0.072 |
| 12 | 767.700 | 48 | 33.930 | 84 | 1.499 | 120 | 0.066 |
| 13 | 704.000 | 49 | 31.110 | 85 | 1.375 | 121 | 0.061 |
| 14 | 645.600 | 50 | 28.530 | 86 | 1.261 | 122 | 0.056 |
| 15 | 592.000 | 51 | 26.160 | 87 | 1.156 | 123 | 0.051 |

(continued)

| Channel | Particle size (μm) | Channel | Particle size (μm) | Channel | Particle size (μm) | Channel | Particle size (μm) |
|---|---|---|---|---|---|---|---|
| 16 | 542.900 | 52 | 23.990 | 88 | 1.060 | 124 | 0.047 |
| 17 | 497.800 | 53 | 22.000 | 89 | 0.972 | 125 | 0.043 |
| 18 | 456.500 | 54 | 20.170 | 90 | 0.892 | 126 | 0.039 |
| 19 | 418.600 | 55 | 18.500 | 91 | 0.818 | 127 | 0.036 |
| 20 | 383.900 | 56 | 16.960 | 92 | 0.750 | 128 | 0.033 |
| 21 | 352.000 | 57 | 15.560 | 93 | 0.688 | 129 | 0.030 |
| 22 | 322.800 | 58 | 14.270 | 94 | 0.630 | 130 | 0.028 |
| 23 | 296.000 | 59 | 13.080 | 95 | 0.578 | 131 | 0.026 |
| 24 | 271.400 | 60 | 12.000 | 96 | 0.530 | 132 | 0.023 |
| 25 | 248.900 | 61 | 11.000 | 97 | 0.486 | | |
| 26 | 228.200 | 62 | 10.090 | 98 | 0.446 | | |
| 27 | 209.300 | 63 | 9.250 | 99 | 0.409 | | |
| 28 | 191.900 | 64 | 8.482 | 100 | 0.375 | | |
| 29 | 176.000 | 65 | 7.778 | 101 | 0.344 | | |
| 30 | 161.400 | 66 | 7.133 | 102 | 0.315 | | |
| 31 | 148.000 | 67 | 6.541 | 103 | 0.289 | | |
| 32 | 135.700 | 68 | 5.998 | 104 | 0.265 | | |
| 33 | 124.500 | 69 | 5.500 | 105 | 0.243 | | |
| 34 | 114.100 | 70 | 5.044 | 106 | 0.223 | | |
| 35 | 104.700 | 71 | 4.625 | 107 | 0.204 | | |
| 36 | 95.960 | 72 | 4.241 | 108 | 0.187 | | |

[Sensory evaluation of composition sample]

The composition samples obtained by the procedure above in Comparative Examples 1 to 9 and Test Examples 1 to 29 were subjected to sensory evaluation by the following procedure.

First, the sensory inspectors performing each sensory test were chosen from inspectors who were previously trained for discrimination of, for example, the taste, texture, and appearance of food and showed particularly excellent results and had experience in product development, a wealth of knowledge about the quality of food, such as taste, texture, and appearance, and were capable of performing absolute evaluation on each sensory inspection item.

Subsequently, a sensory test evaluating the quality was performed for composition samples of Test Examples and Comparative Examples by 10 trained sensory inspectors in total chosen by the procedure above. In this sensory test, the items, "spreadability at 4°C", "spreadability at 20°C", "spreadability at 60°C", "flavor at the time of application", and "migration of coloring matter", were each evaluated on a scale of five grades according to the following criteria.

[Spreadability at 4°C]

Samples were each put in a 50-mL glass container with a lid and were left to stand in an incubator at 4°C for 10 hours, and 3 g of each sample was then applied to one side of 4-cm square bread having a thickness of 1.5 cm with a butter knife and was evaluated according to the following five grades:

5: The sample spread over the entire surface immediately, did not fluff, and was glossy and favorable;
4: The sample spread over the entire surface, did not fluff, and was favorable;
3: The sample was spread over almost the entire surface, slightly fluffed, and was favorable;

2: The sample did not spread over the entire surface, fluffed noticeably, and was out of the acceptable range; and

1: The sample did not spread at all, fluffed extremely noticeably, and was out of the acceptable range.

[Spreadability at 20°C]

Samples were each put in a 50-mL glass container with a lid and were left to stand in an incubator at 20°C for 3 hours, and 3 g of each sample was then applied to one side of 4-cm square bread having a thickness of 1.5 cm with a butter knife and was evaluated for the same evaluation items as in the "Spreadability at 4°C" above according to five grades.

[Spreadability at 60°C]

Samples of 30 mL each were put in a 50-mL glass container with a lid and were left to stand in an incubator at 60°C for 3 hours, and 3 g of each sample was then applied to one side of 4-cm square bread 1.5 cm thick with a butter knife and was evaluated for the same evaluation items as in the "Spreadability at 4°C" above according to five grades.

[Flavor at the time of application]

The bread to which 3 g of each sample was applied in the evaluation of "Spreadability at 20°C" was tasted and evaluated according to the following five grades:

5: Harsh taste and green smell were not felt, and the flavor of the material was very favorable;
4: Harsh taste and green smell were not felt, and the flavor of the material was favorable;
3: Harsh taste and green smell were weak, and the flavor of the material was slightly favorable;
2: Harsh taste and green smell were slightly felt, and the flavor of the material was slightly bad; and
1: Harsh taste or green smell was felt, and the flavor of the material was bad.

[Migration of coloring matter]

Samples were each put in a 50-mL glass container with a lid and left to stand at 60°C overnight and were compared with samples left to stand at 20°C overnight to visually evaluate by according to the following 5 grades:

5: The coloring matter of the material did not migrate to oil, the overall color was perfectly preserved, and the appearance was very favorable;
4: The coloring matter of the material hardly migrated to oil, the overall color was preserved, and the appearance was favorable;
3: The migration of the coloring matter of the material to oil was weak, the overall color was slightly preserved, and the appearance was slightly favorable;
2: The coloring matter of the material migrated to oil, the overall color was slightly uneven, and the appearance was slightly unfavorable; and
1: The coloring matter of the material migrated to oil, the overall color was uneven, and the appearance was unfavorable.

In each of the evaluation items, all the inspectors evaluated the standard samples in advance, standardized each score of the evaluation criteria, and then performed sensory inspection with objectivity by 10 inspectors in total. The evaluation items were evaluated by a system of selecting one number closest to the inspector's own evaluation in five-grade evaluation of each item. The total result of the evaluation was calculated from the arithmetic mean values of the scores by 10 inspectors in total. Furthermore, the standard deviation was calculated to evaluate the variation among the panelists and was verified to be in a predetermined range.

[Analysis and evaluation result of composition sample]

The physical properties, such as particle size distribution, of the composition samples of Comparative Examples 1 to 9 and Test Examples 1 to 29 and the results of evaluation by sensory tests are shown in the following Tables 3 to 40.

[Table 3]

| | | | | Unit | Test Example 1 |
|---|---|---|---|---|---|
| Prescription | [Edible part] dried carrot | + | [Inedible part] dried carrot (petiole base) | g | 200 |
| | [Edible part] dried pumpkin | + | [Inedible part] dried pumpkin (seeds and guts) | g | |
| | [Edible part] dried sweet corn | + | [Inedible part] dried sweet corn (core) | g | |
| | [Edible part] dried green soybean | + | [Inedible part] dried green soybean (pod) | g | |
| | [Edible part] raw paprika | + | [Inedible part] raw paprika (seed and calyx) | g | |
| | [Edible part] dried paprika | + | [Inedible part] dried paprika (seed and calyx) | g | |
| | [Edible part] dried beet | + | [Inedible part] dried beet (peel) | g | |
| | [Edible part] dried green pea | + | [Inedible part] dried green pea (pod) | g | |
| | [Edible part] dried broccoli | + | [Inedible part] dried broccoli (stem and leaf) | g | |
| | [Edible part] dried tomato | + | [Inedible part] dried tomato | g | |

(continued)

|  | | | Unit | Test Example 1 |
|---|---|---|---|---|
|  | | (calyx) | | |
|  | [Edible part] dried kale | + [Inedible part] dried kale (petiole base) | g | |
|  | [Edible part] dried sweet potato | + [Inedible part] dried sweet potato (ends) | g | |
|  | [Edible part] dried spinach | + [Inedible part] dried spinach (stump) | g | |
|  | [Edible part] dried pineapple | | g | |
|  | [Edible part] dried raspberry | | g | |
|  | Proportion of inedible part in composition | | mass % | 0.6 |
|  | (Inedible part)/[(edible part) + (inedible part)], * Displayed as a percentage | | % | 3 |
|  | Oil cake food paste | Almond | g | |
|  | | Cashew nut | g | 350 |
|  | | Sesame | g | |
|  | | Hazelnut | g | |
|  | | Peanut | g | |
|  | Fat/oil | Cacao butter | g | |
|  | | Olive oil | g | 250 |
|  | | Salad oil | g | |
|  | | Sesame oil | g | |
|  | Sugar | Glucose syrup | g | |
|  | | Sugar | g | |
|  | | Date syrup | g | 200 |
|  | Water | | g | |
|  | Content of fine food particles | | mass% | 82.5 |
|  | Total | | g | 1000 |
| Heating condition (under leaving to stand) | Maximum temperature (T) during warming | | °C | 50.0 |
|  | $145 \times 2.73^{(-0.07 \times T)}$ | | | 4.3 |
|  | Warming time (H) | | hour | 6.0 |

(continued)

| | | Unit | Test Example 1 |
|---|---|---|---|
| Measurement | Total fat/oil content | mass% | 43.0 |
| | (Total fat/oil content)/[(moisture content) + (total fat/oil content)], * Displayed as a percentage | % | 89.4 |
| | Sugar content | mass% | 30.7 |
| | Moisture content | mass% | 5.1 |
| | Modal diameter after ultrasonication | μm | 52.3 |
| | Maximum particle size before ultrasonication | μm | 322.8 |
| | d50 after ultrasonication | μm | 61.2 |
| | Stress [(fat/oil composition: 2 parts) + (olive oil: 1 part), parallel plate diameter: 25 mm, temperature: 20°C, lowered down until a gap of 1 mm] | N | 0.06 |
| | Loss tangent (parallel plate diameter: 25 mm, temperature: 20°C, gap: 1 mm, shear strain: 0.1%, angular velocity: 1 rad/s) | | 1.6 |
| | Value measured with Bostwick viscometer (20°C, 10 seconds) | cm | 2.1 |
| Sensory evaluation | Spreadability (4°C) | | 5 |
| | Spreadability (20°C) | | 5 |
| | Spreadability (60°C) | | 5 |
| | Flavor at the time of application | | 5 |
| | Migration of coloring matter | | 5 |

[Table 4]

| | Unit | | | | Test Example 2 |
|---|---|---|---|---|---|
| Prescription | [Edible part] dried carrot | + | [Inedible part] dried carrot (petiole base) | g | |
| | [Edible part] dried pumpkin | + | [Inedible part] dried pumpkin (seeds and guts) | g | 250 |
| | [Edible part] dried sweet corn | + | [Inedible part] dried sweet corn (core) | g | |
| | [Edible part] dried green soybean | + | [Inedible part] dried green soybean (pod) | g | |
| | [Edible part] raw paprika | + | [Inedible part] raw paprika (seed and calyx) | g | |
| | [Edible part] dried paprika | + | [Inedible part] dried paprika (seed and calyx) | g | |
| | [Edible part] dried beet | + | [Inedible part] dried beet (peel) | g | |
| | [Edible part] dried green pea | + | [Inedible part] dried green pea (pod) | g | |
| | [Edible part] dried broccoli | + | [Inedible part] dried broccoli (stem and leaf) | g | |
| | [Edible part] dried tomato | + | [Inedible part] dried tomato (calyx) | g | |
| | [Edible part] dried kale | + | [Inedible part] dried kale (petiole base) | g | |
| | [Edible part] dried sweet potato | + | [Inedible part] dried sweet potato (ends) | g | |
| | [Edible part] dried spinach | + | [Inedible part] dried spinach (stump) | g | |
| | [Edible part] dried pineapple | | | g | 10 |
| | [Edible part] dried raspberry | | | g | |
| | Proportion of inedible part in composition | | | mass % | 2.3 |
| | (Inedible part)/[(edible part) + (inedible part)], * Displayed as a percentage | | | % | g |
| | Oil cake food paste | Almond | | g | |
| | | Cashew nut | | g | 240 |
| | | Sesame | | g | |
| | | Hazelnut | | g | |
| | | Peanut | | g | |
| | Fat/oil | Cacao butter | | g | |

(continued)

| | Unit | | | | Test Example 2 |
|---|---|---|---|---|---|
| | | Olive oil | | g | |
| | | Salad oil | | g | 300 |
| | | Sesame oil | | g | |
| | Sugar | Glucose syrup | | g | |
| | | Sugar | | g | |
| | | Date syrup | | g | 200 |
| | Water | | | g | |
| | Content of fine food particles | | | mass% | 75 |
| | Total | | | g | 1000 |
| Heating condition (under leaving to stand) | Maximum temperature (T) during warming | | | °C | 40.0 |
| | $145 \times 2.73^{(-0.07 \times T)}$ | | | | 8.7 |
| | Warming time (H) | | | hour | 10.0 |
| Measurement | Total fat/oil content | | | mass% | 42.4 |
| | (Total fat/oil content)/[(moisture content) + (total fat/oil content)], * Displayed as a percentage | | | % | 89.7 |
| | Sugar content | | | mass% | 27.7 |
| | Moisture content | | | mass% | 4.9 |
| | Modal diameter after ultrasonication | | | μm | 17.0 |
| | Maximum particle size before ultrasonication | | | μm | 456.5 |
| | d50 after ultrasonication | | | μm | 18.7 |
| | Stress [(fat/oil composition: 2 parts) + (olive oil: 1 part), parallel plate diameter: 25 mm, temperature: 20°C, lowered down until a gap of 1 mm] | | | N | 0.05 |
| | Loss tangent (parallel plate diameter: 25 mm, temperature: 20°C, gap: 1 mm, shear strain: 0.1%, angular velocity: 1 rad/s) | | | | 2.2 |
| | Value measured with Bostwick viscometer (20°C, 10 seconds) | | | cm | 3.1 |
| Sensory evaluation | Spreadability (4°C) | | | | 5 |
| | Spreadability (20°C) | | | | 5 |
| | Spreadability (60°C) | | | | 5 |
| | Flavor at the time of application | | | | 5 |
| | Migration of coloring matter | | | | 5 |

[Table 5]

| | | | | Unit | Test Example 3 |
|---|---|---|---|---|---|
| Prescription | [Edible part] dried carrot | + | [Inedible part] dried carrot (petiole base) | g | |

(continued)

| | | | | Unit | Test Example 3 |
|---|---|---|---|---|---|
| | [Edible part] dried pumpkin | + | [Inedible part] dried pumpkin (seeds and guts) | g | |
| | [Edible part] dried sweet corn | + | [Inedible part] dried sweet corn (core) | g | 333 |
| | [Edible part] dried green soybean | + | [Inedible part] dried green soybean (pod) | g | |
| | [Edible part] raw paprika | + | [Inedible part] raw paprika (seed and calyx) | g | |
| | [Edible part] dried paprika | + | [Inedible part] dried paprika (seed and calyx) | g | |
| | [Edible part] dried beet | + | [Inedible part] dried beet (peel) | g | |
| | [Edible part] dried green pea | + | [Inedible part] dried green pea (pod) | g | |
| | [Edible part] dried broccoli | + | [Inedible part] dried broccoli (stem and leaf) | g | |
| | [Edible part] dried tomato | + | [Inedible part] dried tomato (calyx) | g | |
| | [Edible part] dried kale | + | [Inedible part] dried kale (petiole base) | g | |
| | [Edible part] dried sweet potato | + | [Inedible part] dried sweet potato (ends) | g | |
| | [Edible part] dried spinach | + | [Inedible part] dried spinach (stump) | g | |
| [Edible part] dried pineapple | | | | g | 10 |
| [Edible part] dried raspberry | | | | g | |
| Proportion of inedible part in composition | | | | mass % | 17.2 |
| (Inedible part)/[(edible part) + (inedible part)], * Displayed as a percentage | | | | % | 50 |
| | Oil cake food paste | Almond | | g | |
| | | Cashew nut | | g | 157 |
| | | Sesame | | g | |
| | | Hazelnut | | g | |
| | | Peanut | | g | |

(continued)

| | | | Unit | Test Example 3 |
|---|---|---|---|---|
| | Fat/oil | Cacao butter | g | |
| | | Olive oil | g | |
| | | Salad oil | g | 333 |
| | | Sesame oil | g | |
| | Sugar | Glucose syrup | g | |
| | | Sugar | g | |
| | | Date syrup | g | 167 |
| | Water | | g | |
| | Content of fine food particles | | mass% | 75 |
| | Total | | g | 1000 |
| Heating condition (under leaving to stand) | Maximum temperature (T) during warming | | °C | 30.0 |
| | $145 \times 2.73^{(-0.07 \times T)}$ | | | 17.6 |
| | Warming time (H) | | hour | 24.0 |
| Measurement | Total fat/oil content | | mass% | 42.6 |
| | (Total fat/oil content)/[(moisture content) + (total fat/oil content)], * Displayed as a percentage | | % | 90.5 |
| | Sugar content | | mass% | 32.3 |
| | Moisture content | | mass% | 4.5 |
| | Modal diameter after ultrasonication | | μm | 31.1 |
| | Maximum particle size before ultrasonication | | μm | 124.5 |
| | d50 after ultrasonication | | μm | 23.5 |
| | Stress [(fat/oil composition: 2 parts) + (olive oil: 1 part), parallel plate diameter: 25 mm, temperature: 20°C, lowered down until a gap of 1 mm] | | N | 0.03 |
| | Loss tangent (parallel plate diameter: 25 mm, temperature: 20°C, gap: 1 mm, shear strain: 0.1%, angular velocity: 1 rad/s) | | | 3.0 |
| | Value measured with Bostwick viscometer (20°C, 10 seconds) | | cm | 2.6 |
| Sensory evaluation | Spreadability (4°C) | | | 5 |
| | Spreadability (20°C) | | | 5 |
| | Spreadability (60°C) | | | 5 |
| | Flavor at the time of application | | | 5 |
| | Migration of coloring matter | | | 5 |

**EP 3 794 950 A1**

[Table 6]

| Prescription | | | | Unit | Test Example 4 |
|---|---|---|---|---|---|
| Prescription | [Edible part] dried carrot | + | [Inedible part] dried carrot (petiole base) | g | |
| | [Edible part] dried pumpkin | + | [Inedible part] dried pumpkin (seeds and guts) | g | |
| | [Edible part] dried sweet corn | + | [Inedible part] dried sweet corn (core) | g | |
| | [Edible part] dried green soybean | + | [Inedible part] dried green soybean (pod) | g | 200 |
| | [Edible part] raw paprika | + | [Inedible part] raw paprika (seed and calyx) | g | |
| | [Edible part] dried paprika | + | [Inedible part] dried paprika (seed and calyx) | g | |
| | [Edible part] dried beet | + | [Inedible part] dried beet (peel) | g | |
| | [Edible part] dried green pea | + | [Inedible part] dried green pea (pod) | g | |
| | [Edible part] dried broccoli | + | [Inedible part] dried broccoli (stem and leaf) | g | |
| | [Edible part] dried tomato | + | [Inedible part] dried tomato (calyx) | g | |
| | [Edible part] dried kale | + | [Inedible part] dried kale (petiole base) | g | |
| | [Edible part] dried sweet potato | + | [Inedible part] dried sweet potato (ends) | g | |
| | [Edible part] dried spinach | + | [Inedible part] dried spinach (stump) | g | |
| | [Edible part] dried pineapple | | | g | |
| | [Edible part] dried raspberry | | | g | |
| | Proportion of inedible part in composition | | | mass % | 9.0 |
| | (Inedible part)/[(edible part) + (inedible part)], * Displayed as a percentage | | | % | 45 |
| | Oil cake food paste | Almond | | g | |
| | | Cashew nut | | g | 400 |
| | | Sesame | | g | |
| | | Hazelnut | | g | |
| | | Peanut | | g | |

(continued)

| | | | Unit | Test Example 4 |
|---|---|---|---|---|
| | Fat/oil | Cacao butter | g | |
| | | Olive oil | g | 200 |
| | | Salad oil | g | |
| | | Sesame oil | g | |
| | Sugar | Glucose syrup | g | |
| | | Sugar | g | |
| | | Date syrup | g | 200 |
| | Water | | g | |
| | Content of fine food particles | | mass% | 90 |
| | Total | | g | 1000 |
| Heating condition (under leaving to stand) | Maximum temperature (T) during warming | | °C | 60.0 |
| | $145 \times 2.73^{(-0.07 \times T)}$ | | | 2.1 |
| | Warming time (H) | | hour | 4.0 |
| Measurement | Total fat/oil content | | mass% | 44.1 |
| | (Total fat/oil content)/[(moisture content) + (total fat/oil content)], * Displayed as a percentage | | % | 89.1 |
| | Sugar content | | mass% | 23.2 |
| | Moisture content | | mass% | 5.4 |
| | Modal diameter after ultrasonication | | $\mu$m | 5.5 |
| | Maximum particle size before ultrasonication | | $\mu$m | 837.2 |
| | d50 after ultrasonication | | $\mu$m | 7.3 |
| | Stress [(fat/oil composition: 2 parts) + (olive oil: 1 part), parallel plate diameter: 25 mm, temperature: 20°C, lowered down until a gap of 1 mm] | | N | 0.02 |
| | Loss tangent (parallel plate diameter: 25 mm, temperature: 20°C, gap: 1 mm, shear strain: 0.1%, angular velocity: 1 rad/s) | | | 4.0 |
| | Value measured with Bostwick viscometer (20°C, 10 seconds) | | cm | 2.1 |
| Sensory evaluation | Spreadability (4°C) | | | 5 |
| | Spreadability (20°C) | | | 4 |
| | Spreadability (60°C) | | | 5 |
| | Flavor at the time of application | | | 4 |
| | Migration of coloring matter | | | 5 |

[Table 7]

| Prescription | | | | Unit | Test Example 5 |
|---|---|---|---|---|---|
| Prescription | [Edible part] dried carrot | + | [Inedible part] dried carrot (petiole base) | g | |
| | [Edible part] dried pumpkin | + | [Inedible part] dried pumpkin (seeds and guts) | g | |
| | [Edible part] dried sweet corn | + | [Inedible part] dried sweet corn (core) | g | |
| | [Edible part] dried green soybean | + | [Inedible part] dried green soybean (pod) | g | |
| | [Edible part] raw paprika | + | [Inedible part] raw paprika (seed and calyx) | g | |
| | [Edible part] dried paprika | + | [Inedible part] dried paprika (seed and calyx) | g | 200 |
| | [Edible part] dried beet | + | [Inedible part] dried beet (peel) | g | |
| | [Edible part] dried green pea | + | [Inedible part] dried green pea (pod) | g | |
| | [Edible part] dried broccoli | + | [inedible part] dried broccoli stem and leaf) | g | |
| | [Edible part] dried tomato | + | [Inedible part] dried tomato (calyx) | g | |
| | [Edible part] dried kale | + | [Inedible part] dried kale (petiole base) | g | |
| | [Edible part] dried sweet potato | + | [Inedible part] dried sweet potato (ends) | g | |
| | [Edible part] dried spinach | + | [Inedible part] dried spinach (stump) | g | |
| | [Edible part] dried pineapple | | | g | |
| | [Edible part] dried raspberry | | | g | |
| | Proportion of inedible part in composition | | | mass % | 2.1 |
| | (Inedible part)/[(edible part) + a percentage (inedible part)], * Displayed as | | | % | 10 |
| | Oil cake food paste | Almond | | g | |
| | | Cashew nut | | g | 200 |
| | | Sesame | | g | |
| | | Hazelnut | | g | 200 |
| | | Peanut | | g | |
| | Fat/oil | Cacao butter | | g | |
| | | Olive oil | | g | 250 |
| | | Salad oil | | g | |

(continued)

| | | | Unit | Test Example 5 |
|---|---|---|---|---|
| | | Sesame oil | g | |
| | Sugar | Glucose syrup | g | |
| | | Sugar | g | |
| | | Date syrup | g | 150 |
| | Water | | g | |
| | Content of fine food particles | | mass% | 90 |
| | Total | | g | 1000 |
| Heating condition (under leaving to stand) | Maximum temperature (T) during warming | | °C | 70.0 |
| | $145 \times 2.73^{(-0.07 \times T)}$ | | | 1.1 |
| | Warming time (H) | | hour | 2.0 |
| Measurement | Total fat/oil content | | mass% | 45.5 |
| | (Total fat/oil content)/[(moisture content) + (total fat/oil content)], * Displayed as a percentage | | % | 88.5 |
| | Sugar content | | mass% | 27.0 |
| | Moisture content | | mass% | 5.9 |
| | Modal diameter after ultrasonication | | μm | 7.8 |
| | Maximum particle size before ultrasonication | | μm | 592.0 |
| | d50 after ultrasonication | | μm | 9.3 |
| | Stress [(fat/oil composition: 2 parts) + (olive oil: 1 part), parallel plate diameter: 25 mm, temperature: 20°C, lowered down until a gap of 1 mm] | | N | 0.15 |
| | Loss tangent (parallel plate diameter: 25 mm, temperature: 20°C, gap: 1 mm, shear strain: 0.1%, angular velocity: 1 rad/s) | | | 1.1 |
| | Value measured with Bostwick viscometer (20°C, 10 seconds) | | cm | 1.9 |
| Sensory evaluation | Spreadability (4°C) | | | 5 |
| | Spreadability (20°C) | | | 4 |
| | Spreadability (60°C) | | | 5 |
| | Flavor at the time of application | | | 4 |
| | Migration of coloring matter | | | 5 |

[Table 8]

| | | | | Unit | Test Example 6 |
|---|---|---|---|---|---|
| Prescription | [Edible part] dried carrot | + | [Inedible part] dried carrot (petiole base) | g | |
| | [Edible part] dried pumpkin | + | [Inedible part] dried pumpkin (seeds and guts) | g | |

(continued)

| | | | | Unit | Test Example 6 |
|---|---|---|---|---|---|
| | [Edible part] dried sweet corn | + | [Inedible part] dried sweet corn (core) | 9 | |
| | [Edible part] dried green soybean | + | [Inedible part] dried green soybean (pod) | 9 | |
| | [Edible part] raw paprika | + | [Inedible part] raw paprika (seed and calyx) | 9 | |
| | [Edible part] dried paprika | + | [Inedible part] dried paprika (seed and calyx) | 9 | |
| | [Edible part] dried beet | + | [Inedible part] dried beet (peel) | 9 | 203 |
| | [Edible part] dried green pea | + | [Inedible part] dried green pea (pod) | 9 | |
| | [Edible part] dried broccoli | + | [Inedible part] dried broccoli (stem and leaf) | 9 | |
| | [Edible part] dried tomato | + | [Inedible part] dried tomato (calyx) | 9 | |
| | [Edible part] dried kale | + | [Inedible part] dried kale (petiole base) | 9 | |
| | [Edible part] dried sweet potato | + | [Inedible part] dried sweet potato (ends) | 9 | |
| | [Edible part] dried spinach | + | [Inedible part] dried spinach (stump) | 9 | |
| | [Edible part] dried pineapple | | | 9 | |
| | [Edible part] dried raspberry | | | 9 | 6 |
| | Proportion of inedible part in composition | | | mass % | 2.1 |
| | (Inedible part)/[(edible part) + (inedible part)], * Displayed as a percentage | | | % | 10 |
| | Oil cake food paste | Almond | | 9 | 203 |
| | | Cashew nut | | 9 | |
| | | Sesame | | 9 | |
| | | Hazelnut | | 9 | 203 |
| | | Peanut | | 9 | |
| | Fat/oil | Cacao butter | | 9 | |
| | | Olive oil | | 9 | 203 |
| | | Salad oil | | 9 | |
| | | Sesame oil | | 9 | |

(continued)

| | | | Unit | Test Example 6 |
|---|---|---|---|---|
| | Sugar | Glucose syrup | 9 | |
| | | Sugar | 9 | |
| | | Date syrup | 9 | 182 |
| | Water | | 9 | |
| | Content of fine food particles | | mass% | 73.8 |
| | Total | | 9 | 1000 |
| Heating condition (under leaving to stand) | Maximum temperature (T) during warming | | °C | 40.0 |
| | $145 \times 2.73^{(-0.07 \times T)}$ | | | 8.7 |
| | Warming time (H) | | hour | 10.0 |
| Measurement | Total fat/oil content | | mass% | 41.1 |
| | (Total fat/oil content)/[(moisture content) + (total fat/oil content)], * Displayed as a percentage | | % | 88.4 |
| | Sugar content | | mass% | 31.0 |
| | Moisture content | | mass% | 5.4 |
| | Modal diameter after ultrasonication | | μm | 1.5 |
| | Maximum particle size before ultrasonication | | μm | 57.1 |
| | d50 after ultrasonication | | μm | 1.9 |
| | Stress [(fat/oil composition: 2 parts) + (olive oil: 1 part), parallel plate diameter: 25 mm, temperature: 20°C, lowered down until a gap of 1 mm] | | N | 0.03 |
| | Loss tangent (parallel plate diameter: 25 mm, temperature: 20°C, gap: 1 mm, shear strain: 0.1 %, angular velocity: 1 rad/s) | | | 2.8 |
| | Value measured with Bostwick viscometer (20°C, 10 seconds) | | cm | 2.9 |
| Sensory evaluation | Spreadability (4°C) | | | 5 |
| | Spreadability (20°C) | | | 5 |
| | Spreadability (60°C) | | | 5 |
| | Flavor at the time of application | | | 5 |
| | Migration of coloring matter | | | 4 |

[Table 9]

| | | | | | Unit | Test Example 7 |
|---|---|---|---|---|---|---|
| Prescription | [Edible part] dried carrot | + | [Inedible part] dried carrot (petiole base) | | g | |
| | [Edible part] dried pumpkin | + | [Inedible part] dried pumpkin (seeds and guts) | | g | |

(continued)

| | | | Unit | Test Example 7 |
|---|---|---|---|---|
| [Edible part] dried sweet corn | + | [Inedible part] dried sweet corn (core) | g | |
| [Edible part] dried green soybean | + | [Inedible part] dried green soybean (pod) | g | |
| [Edible part] raw paprika | + | [Inedible part] raw paprika (seed and calyx) | g | |
| [Edible part] dried paprika | + | [Inedible part] dried paprika (seed and calyx) | g | |
| [Edible part] dried beet | + | [Inedible part] dried beet (peel) | g | 203 |
| [Edible part] dried green pea | + | [Inedible part] dried green pea (pod) | g | |
| [Edible part] dried broccoli | + | [Inedible part] dried broccoli (stem and leaf) | g | |
| [Edible part] dried tomato | + | [Inedible part] dried tomato (calyx) | g | |
| [Edible part] dried kale | + | [Inedible part] dried kale (petiole base) | g | |
| [Edible part] dried sweet potato | + | [Inedible part] dried sweet potato (ends) | g | |
| [Edible part] dried spinach | + | [Inedible part] dried spinach (stump) | g | |
| [Edible part] dried pineapple | | | g | |
| [Edible part] dried raspberry | | | g | 6 |
| Proportion of inedible part in composition | | | mass % | 2.1 |
| (Inedible part)/[(edible part) + (inedible part)], * Displayed as a percentage | | | % | 10 |
| Oil cake food paste | Almond | | g | 203 |
| | Cashew nut | | g | |
| | Sesame | | g | |
| | Hazelnut | | g | 203 |
| | Peanut | | g | |
| Fat/oil | Cacao butter | | g | |
| | Olive oil | | g | 203 |
| | Salad oil | | g | |
| | Sesame oil | | g | |

(continued)

| | | | Unit | Test Example 7 |
|---|---|---|---|---|
| | Sugar | Glucose syrup | g | |
| | | Sugar | g | |
| | | Date syrup | g | 182 |
| | Water | | g | |
| | Content of fine food particles | | mass% | 73.8 |
| | Total | | g | 1000 |
| Heating condition (under leaving to stand) | Maximum temperature (T) during warming | | °C | 60.0 |
| | $145 \times 2.73^{(-0.07 \times T)}$ | | | 2.1 |
| | Warming time (H) | | hour | 3.0 |
| Measurement | Total fat/oil content | | mass% | 41.1 |
| | (Total fat/oil content)/[(moisture content) + (total fat/oil content)], * Displayed as a percentage | | % | 88.4 |
| | Sugar content | | mass% | 31.0 |
| | Moisture content | | mass% | 5.4 |
| | Modal diameter after ultrasonication | | μm | 1.5 |
| | Maximum particle size before ultrasonication | | μm | 57.1 |
| | d50 after ultrasonication | | μm | 1.9 |
| | Stress [(fat/oil composition: 2 parts) + (olive oil: 1 part), parallel plate diameter: 25 mm, temperature: 20°C, lowered down until a gap of 1 mm] | | N | 0.04 |
| | Loss tangent (parallel plate diameter: 25 mm, temperature: 20°C, gap: 1 mm, shear strain: 0.1%, angular velocity: 1 rad/s) | | | 2.0 |
| | Value measured with Bostwick viscometer (20°C, 10 seconds) | | cm | 2.9 |
| Sensory evaluation | Spreadability (4°C) | | | 5 |
| | Spreadability (20°C) | | | 5 |
| | Spreadability (60°C) | | | 5 |
| | Flavor at the time of application | | | 5 |
| | Migration of coloring matter | | | 4 |

[Table 10]

| | | | | Unit | Test Example 8 |
|---|---|---|---|---|---|
| Prescription | [Edible part] dried carrot | + | [Inedible part] dried carrot (petiole base) | g | |
| | [Edible part] dried pumpkin | + | [Inedible part] dried pumpkin (seeds and guts) | g | |

(continued)

| | | | | Unit | Test Example 8 |
|---|---|---|---|---|---|
| | [Edible part] dried sweet corn | + | [Inedible part] dried sweet corn (core) | g | |
| | [Edible part] dried green soybean | + | [Inedible part] dried green soybean (pod) | g | |
| | [Edible part] raw paprika | + | [Inedible part] raw paprika (seed and calyx) | g | |
| | [Edible part] dried paprika | + | [Inedible part] dried paprika (seed and calyx) | g | |
| | [Edible part] dried beet | + | [Inedible part] dried beet (peel) | g | 203 |
| | [Edible part] dried green pea | + | [Inedible part] dried green pea (pod) | g | |
| | [Edible part] dried broccoli | + | [Inedible part] dried broccoli (stem and leaf) | g | |
| | [Edible part] dried tomato | + | [Inedible part] dried tomato (calyx) | g | |
| | [Edible part] dried kale | + | [Inedible part] dried kale (petiole base) | g | |
| | [Edible part] dried sweet potato | + | [Inedible part] dried sweet potato (ends) | g | |
| | [Edible part] dried spinach | + | [Inedible part] dried spinach (stump) | g | |
| | [Edible part] dried pineapple | | | g | |
| | [Edible part] dried raspberry | | | g | 6 |
| | Proportion of inedible part in composition | | | mass % | 2.1 |
| | (Inedible part)/[(edible part) a percentage + (inedible part)], * Displayed as | | | % | 10 |
| | Oil cake food paste | Almond | | g | 203 |
| | | Cashew nut | | g | |
| | | Sesame | | g | |
| | | Hazelnut | | g | 203 |
| | | Peanut | | g | |
| | Fat/oil | Cacao butter | | g | |
| | | Olive oil | | g | 203 |
| | | Salad oil | | g | |
| | | Sesame oil | | g | |

(continued)

| | | | Unit | Test Example 8 |
|---|---|---|---|---|
| | Sugar | Glucose syrup | g | |
| | | Sugar | g | |
| | | Date syrup | g | 182 |
| | Water | | g | |
| | Content of fine food particles | | mass% | 73.8 |
| | Total | | g | 1000 |
| Heating condition (under leaving to stand) | Maximum temperature (T) during warming | | °C | 80.0 |
| | $145 \times 2.73^{(-0.07 \times T)}$ | | | 0.5 |
| | Warming time (H) | | hour | 1.0 |
| Measurement | Total fat/oil content | | mass% | 41.1 |
| | (Total fat/oil content)/[(moisture content) + (total fat/oil content)], * Displayed as a percentage | | % | 88.4 |
| | Sugar content | | mass% | 31.0 |
| | Moisture content | | mass% | 5.4 |
| | Modal diameter after ultrasonication | | μm | 1.5 |
| | Maximum particle size before ultrasonication | | μm | 57.1 |
| | d50 after ultrasonication | | μm | 1.9 |
| | Stress [(fat/oil composition: 2 parts) + (olive oil: 1 part), parallel plate diameter: 25 mm, temperature: 20°C, lowered down until a gap of 1 mm] | | N | 0.04 |
| | Loss tangent (parallel plate diameter: 25 mm, temperature: 20°C, gap: 1 mm, shear strain: 0.1%, angular velocity: 1 rad/s) | | | 1.9 |
| | Value measured with Bostwick viscometer (20°C, 10 seconds) | | cm | 2.9 |
| Sensory evaluation | Spreadability (4°C) | | | 5 |
| | Spreadability (20°C) | | | 5 |
| | Spreadability (60°C) | | | 5 |
| | Flavor at the time of application | | | 5 |
| | Migration of coloring matter | | | 4 |

[Table 11]

| | | | | | Unit | Test Example 9 |
|---|---|---|---|---|---|---|
| Prescription | [Edible part] dried carrot | + | [Inedible part] dried carrot (petiole base) | | g | |
| | [Edible part] dried pumpkin | + | [Inedible part] dried pumpkin (seeds and guts) | | g | |
| | [Edible part] dried sweet corn | + | [Inedible part] dried sweet corn (core) | | g | |

(continued)

| | | | | Unit | Test Example 9 |
|---|---|---|---|---|---|
| | [Edible part] dried green soybean | + | [Inedible part] dried green soybean (pod) | g | |
| | [Edible part] raw paprika | + | [Inedible part] raw paprika (seed and calyx) | g | |
| | [Edible part] dried paprika | + | [Inedible part] dried paprika (seed and calyx) | g | |
| | [Edible part] dried beet | + | [Inedible part] dried beet (peel) | g | 203 |
| | [Edible part] dried green pea | + | [Inedible part] dried green pea (pod) | g | |
| | [Edible part] dried broccoli | + | [Inedible part] dried broccoli (stem and leaf) | g | |
| | [Edible part] dried tomato | + | [Inedible part] dried tomato (calyx) | g | |
| | [Edible part] dried kale | + | [Inedible part] dried kale (petiole base) | g | |
| | [Edible part] dried sweet potato | + | [Inedible part] dried sweet potato (ends) | g | |
| | [Edible part] dried spinach | + | [Inedible part] dried spinach (stump) | g | |
| | [Edible part] dried pineapple | | | g | |
| | [Edible part] dried raspberry | | | g | 6 |
| | Proportion of inedible part in composition | | | mass % | 2.1 |
| | (Inedible part)/[(edible part) + (inedible part)], * Displayed as a percentage | | | % | 10 |
| | Oil cake food paste | Almond | | g | 203 |
| | | Cashew nut | | g | |
| | | Sesame | | g | |
| | | Hazelnut | | g | 203 |
| | | Peanut | | g | |
| | Fat/oil | Cacao butter | | g | |
| | | Olive oil | | g | 203 |
| | | Salad oil | | g | |
| | | Sesame oil | | g | |
| | Sugar | Glucose syrup | | g | |
| | | Sugar | | g | |
| | | Date syrup | | g | 182 |
| | Water | | | g | |
| | Content of fine food particles | | | mass% | 73.8 |
| | Total | | | g | 1000 |

(continued)

| | | | Unit | Test Example 9 |
|---|---|---|---|---|
| Heating condition (under leaving to stand) | Maximum temperature (T) during warming | | °C | 100.0 |
| | $145 \times 2.73^{(-0.07 \times T)}$ | | | 0.13 |
| | Warming time (H) | | hour | 0.2 |
| Measurement | Total fat/oil content | | mass% | 41.1 |
| | (Total fat/oil content)/[(moisture content) + (total fat/oil content)], * Displayed as a percentage | | % | 88.4 |
| | Sugar content | | mass% | 31.0 |
| | Moisture content | | mass% | 5.4 |
| | Modal diameter after ultrasonication | | μm | 1.5 |
| | Maximum particle size before ultrasonication | | μm | 57.1 |
| | d50 after ultrasonication | | μm | 1.9 |
| | Stress [(fat/oil composition: 2 parts) + (olive oil: 1 part), parallel plate diameter: 25 mm, temperature: 20°C, lowered down until a gap of 1 mm] | | N | 0.03 |
| | Loss tangent (parallel plate diameter: 25 mm, temperature: 20°C, gap: 1 mm, shear strain: 0.1%, angular velocity: 1 rad/s) | | | 1.9 |
| | Value measured with Bostwick viscometer (20°C, 10 seconds) | | cm | 2.9 |
| Sensory evaluation | Spreadability (4°C) | | | 5 |
| | Spreadability (20°C) | | | 5 |
| | Spreadability (60°C) | | | 5 |
| | Flavor at the time of application | | | 5 |
| | Migration of coloring matter | | | 4 |

[Table 12]

| | | | | Unit | Test Example 10 |
|---|---|---|---|---|---|
| Prescription | [Edible part] dried carrot | + | [Inedible part] dried carrot (petiole base) | g | |
| | [Edible part] dried pumpkin | + | [Inedible part] dried pumpkin (seeds and guts) | g | |
| | [Edible part] dried sweet corn | + | [Inedible part] dried sweet corn (core) | g | |
| | [Edible part] dried green soybean | + | [Inedible part] dried green soybean (pod) | g | |
| | [Edible part] raw paprika | + | [Inedible part] raw paprika (seed and calyx) | g | |

(continued)

| | | | Unit | Test Example 10 |
|---|---|---|---|---|
| [Edible part] dried paprika | + | [Inedible part] dried paprika (seed and calyx) | g | |
| [Edible part] dried beet | + | [Inedible part] dried beet (peel) | g | 203 |
| [Edible part] dried green pea | + | [Inedible part] dried green pea (pod) | g | |
| [Edible part] dried broccoli | + | [Inedible part] dried broccoli (stem and leaf) | g | |
| [Edible part] dried tomato | + | [Inedible part] dried tomato (calyx) | g | |
| [Edible part] dried kale | + | [Inedible part] dried kale (petiole base) | g | |
| [Edible part] dried sweet potato | + | [Inedible part] dried sweet potato (ends) | g | |
| [Edible part] dried spinach | + | [Inedible part] dried spinach (stump) | g | |
| [Edible part] dried pineapple | | | g | |
| [Edible part] dried raspberry | | | g | 6 |
| Proportion of inedible part in composition | | | mass % | 2.1 |
| (Inedible part)/[(edible part) + (inedible part)], * Displayed as a percentage | | | % | 10 |
| Oil cake food paste | Almond | | g | 203 |
| | Cashew nut | | g | |
| | Sesame | | g | |
| | Hazelnut | | g | 203 |
| | Peanut | | g | |
| Fat/oil | Cacao butter | | g | |
| | Olive oil | | g | 203 |
| | Salad oil | | g | |
| | Sesame oil | | g | |
| Sugar | Glucose syrup | | g | |
| | Sugar | | g | |
| | Date syrup | | g | 182 |
| Water | | | g | |
| Content of fine food particles | | | mass% | 73.8 |
| Total | | | g | 1000 |

(continued)

| Heating condition (under leaving to stand) | Maximum temperature (T) during warming | °C | 110.0 |
|---|---|---|---|
| | $145 \times 2.73^{(-0.07 \times T)}$ | | 0.1 |
| | Warming time (H) | hour | 0.0 |
| Measurement | Total fat/oil content | mass% | 41.1 |
| | (Total fat/oil content)/[(moisture content) + (total fat/oil content)], * Displayed as a percentage | % | 88.4 |
| | Sugar content | mass% | 31.0 |
| | Moisture content | mass% | 5.4 |
| | Modal diameter after ultrasonication | μm | 1.5 |
| | Maximum particle size before ultrasonication | μm | 57.1 |
| | d50 after ultrasonication | μm | 1.9 |
| | Stress [(fat/oil composition: 2 parts) + (olive oil: 1 part), parallel plate diameter: 25 mm, temperature: 20°C, lowered down until a gap of 1 mm] | N | 0.03 |
| | Loss tangent (parallel plate diameter: 25 mm, temperature: 20°C, gap: 1 mm, shear strain: 0.1%, angular velocity: 1 rad/s) | | 1.9 |
| | Value measured with Bostwick viscometer (20°C, 10 seconds) | cm | 2.9 |
| Sensory evaluation | Spreadability (4°C) | | 5 |
| | Spreadability (20°C) | | 5 |
| | Spreadability (60°C) | | 5 |
| | Flavor at the time of application | | 5 |
| | Migration of coloring matter | | 4 |

[Table 13]

| | | | Unit | Test Example 11 |
|---|---|---|---|---|
| [Edible part] dried carrot | + | [Inedible part] dried carrot (petiole base) | g | |
| [Edible part] dried pumpkin | + | [Inedible part] dried pumpkin (seeds and guts) | g | |
| [Edible part] dried sweet corn | + | [Inedible part] dried sweet corn (core) | g | |
| [Edible part] dried green soybean | + | [Inedible part] dried green soybean (pod) | g | |
| [Edible part] raw paprika | + | [Inedible part] raw paprika (seed and calyx) | g | |

(continued)

| Prescription | | | | Unit | Test Example 11 |
|---|---|---|---|---|---|
| Prescription | [Edible part] dried paprika | + | [Inedible part] dried paprika (seed and calyx) | g | |
| | [Edible part] dried beet | + | [Inedible part] dried beet (peel) | g | |
| | [Edible part] dried green pea | + | [Inedible part] dried green pea (pod) | g | 200 |
| | [Edible part] dried broccoli | + | [Inedible part] dried broccoli (stem and leaf) | g | |
| | [Edible part] dried tomato | + | [Inedible part] dried tomato (calyx) | g | |
| | [Edible part] dried kale | + | [Inedible part] dried kale (petiole base) | g | |
| | [Edible part] dried sweet potato | + | [Inedible part] dried sweet potato (ends) | g | |
| | [Edible part] dried spinach | + | [Inedible part] dried spinach (stump) | g | |
| | [Edible part] dried pineapple | | | g | |
| | [Edible part] dried raspberry | | | g | |
| | Proportion of inedible part in composition | | | mass % | 8.0 |
| | (Inedible part)/[(edible part) + (inedible part)], * Displayed as a percentage | | | % | 40 |
| | Oil cake food paste | Almond | | g | |
| | | Cashew nut | | g | 350 |
| | | Sesame | | g | |
| | | Hazelnut | | g | |
| | | Peanut | | g | |
| | Fat/oil | Cacao butter | | g | |
| | | Olive oil | | g | 250 |
| | | Salad oil | | g | |
| | | Sesame oil | | g | |
| | Sugar | Glucose syrup | | g | |
| | | Sugar | | g | |
| | | Date syrup | | g | 200 |
| | Water | | | g | |
| | Content of fine food particles | | | mass% | 82.5 |
| | Total | | | g | 1000 |

(continued)

| Heating condition (under leaving to stand) | | Unit | Test Example 11 |
|---|---|---|---|
| | Maximum temperature (T) during warming | °C | 35.0 |
| | $145 \times 2.73^{(-0.07 \times T)}$ | | 12.4 |
| | Warming time (H) | hour | 15.0 |
| Measurement | Total fat/oil content | mass% | 46.6 |
| | (Total fat/oil content)/[(moisture content) + (total fat/oil content)], * Displayed as a percentage | % | 90.1 |
| | Sugar content | mass% | 22.9 |
| | Moisture content | mass% | 5.1 |
| | Modal diameter after ultrasonication | μm | 14.3 |
| | Maximum particle size before ultrasonication | μm | 497.8 |
| | d50 after ultrasonication | μm | 12.2 |
| | Stress [(fat/oil composition: 2 parts) + (olive oil: 1 part), parallel plate diameter: 25 mm, temperature: 20°C, lowered down until a gap of 1 mm] | N | 0.05 |
| | Loss tangent (parallel plate diameter: 25 mm, temperature: 20°C, gap: 1 mm, shear strain: 0.1 %, angular velocity: 1 rad/s) | | 1.4 |
| | Value measured with Bostwick viscometer (20°C, 10 seconds) | cm | 2.8 |
| Sensory evaluation | Spreadability (4°C) | | 5 |
| | Spreadability (20°C) | | 5 |
| | Spreadability (60°C) | | 5 |
| | Flavor at the time of application | | 5 |
| | Migration of coloring matter | | 5 |

[Table 14]

| | | | Unit | Test Example 12 |
|---|---|---|---|---|
| | [Edible part] dried carrot | + | [Inedible part] dried carrot (petiole base) | g | |
| | [Edible part] dried pumpkin | + | [Inedible part] dried pumpkin (seeds and guts) | g | |
| | [Edible part] dried sweet corn | + | [Inedible part] dried sweet corn (core) | g | |
| | [Edible part] dried green soybean | + | [Inedible part] dried green soybean (pod) | g | |
| | [Edible part] raw paprika | + | [Inedible part] raw paprika (seed and calyx) | g | |

(continued)

| | | | Unit | Test Example 12 |
|---|---|---|---|---|
| Prescription | [Edible part] dried paprika | + | [Inedible part] dried paprika (seed and calyx) | g | |
| | [Edible part] dried beet | + | [Inedible part] dried beet (peel) | g | |
| | [Edible part] dried green pea | + | [Inedible part] dried green pea (pod) | g | |
| | [Edible part] dried broccoli | + | [Inedible part] dried broccoli (stem and leaf) | g | 200 |
| | [Edible part] dried tomato | + | [Inedible part] dried tomato (calyx) | g | |
| | [Edible part] dried kale | + | [Inedible part] dried kale (petiole base) | g | |
| | [Edible part] dried sweet potato | + | [Inedible part] dried sweet potato (ends) | g | |
| | [Edible part] dried spinach | + | [Inedible part] dried spinach (stump) | g | |
| | [Edible part] dried pineapple | | | g | |
| | [Edible part] dried raspberry | | | g | |
| | Proportion of inedible part in composition | | | mass % | 10.0 |
| | (Inedible part)/[(edible part) + (inedible part)], * Displayed as a percentage | | | % | 50 |
| | Oil cake food paste | Almond | | g | |
| | | Cashew nut | | g | 400 |
| | | Sesame | | g | |
| | | Hazelnut | | g | |
| | | Peanut | | g | |
| | Fat/oil | Cacao butter | | g | |
| | | Olive oil | | g | 200 |
| | | Salad oil | | g | |
| | | Sesame oil | | g | |
| | Sugar | Glucose syrup | | g | |
| | | Sugar | | g | |
| | | Date syrup | | g | 200 |
| | Water | | | g | |
| | Content of fine food particles | | | mass% | 90 |
| | Total | | | g | 1000 |

(continued)

| | | Unit | Test Example 12 |
|---|---|---|---|
| Heating condition (under leaving to stand) | Maximum temperature (T) during warming | °C | 45.0 |
| | $145 \times 2.73^{(-0.07 \times T)}$ | | 6.1 |
| | Warming time (H) | hour | 8.0 |
| Measurement | Total fat/oil content | mass% | 41.3 |
| | (Total fat/oil content)/[(moisture content) + (total fat/oil content)], * Displayed as a percentage | % | 88.4 |
| | Sugar content | mass% | 22.8 |
| | Moisture content | mass% | 5.4 |
| | Modal diameter after ultrasonication | μm | 1.1 |
| | Maximum particle size before ultrasonication | μm | 31.1 |
| | d50 after ultrasonication | μm | 1.2 |
| | Stress [(fat/oil composition: 2 parts) + (olive oil: 1 part), parallel plate diameter: 25 mm, temperature: 20°C, lowered down until a gap of 1 mm] | N | 0.13 |
| | Loss tangent (parallel plate diameter: 25 mm, temperature: 20°C, gap: 1 mm, shear strain: 0.1 %, angular velocity: 1 rad/s) | | 1.2 |
| | Value measured with Bostwick viscometer (20°C, 10 seconds) | cm | 2.2 |
| Sensory evaluation | Spreadability (4°C) | | 5 |
| | Spreadability (20°C) | | 4 |
| | Spreadability (60°C) | | 5 |
| | Flavor at the time of application | | 4 |
| | Migration of coloring matter | | 4 |

[Table 15]

| | | | | Unit | Test Example 13 |
|---|---|---|---|---|---|
| Prescription | [Edible part] dried carrot | + | [Inedible part] dried carrot (petiole base) | g | |
| | [Edible part] dried pumpkin | + | [Inedible part] dried pumpkin (seeds and guts) | g | |
| | [Edible part] dried sweet corn | + | [Inedible part] dried sweet corn (core) | g | |
| | [Edible part] dried green soybean | + | [Inedible part] dried green soybean (pod) | g | |
| | [Edible part] raw paprika and calyx) | + | [Inedible part] raw paprika (seed | g | |

(continued)

|  | | | Unit | Test Example 13 |
|---|---|---|---|---|
| [Edible part] dried paprika | + | [Inedible part] dried paprika (seed and calyx) | g | |
| [Edible part] dried beet | + | [Inedible part] dried beet (peel) | g | |
| [Edible part] dried green pea | + | [Inedible part] dried green pea (pod) | g | |
| [Edible part] dried broccoli | + | [Inedible part] dried broccoli (stem and leaf) | g | |
| [Edible part] dried tomato | + | [Inedible part] dried tomato (calyx) | g | 200 |
| [Edible part] dried kale | + | [Inedible part] dried kale (petiole base) | g | |
| [Edible part] dried sweet potato | + | [Inedible part] dried sweet potato (ends) | g | |
| [Edible part] dried spinach | + | [Inedible part] dried spinach (stump) | g | |
| [Edible part] dried pineapple | | | g | |
| [Edible part] dried raspberry | | | g | |
| Proportion of inedible part in composition | | | mass % | 0.6 |
| (Inedible part)/[(edible part) + (inedible part)], * Displayed as a percentage | | | % | 3 |
| Oil cake food paste | Almond | | g | |
| | Cashew nut | | g | 350 |
| | Sesame | | g | |
| | Hazelnut | | g | |
| | Peanut | | g | |
| Fat/oil | Cacao butter | | g | |
| | Olive oil | | g | 250 |
| | Salad oil | | g | |
| | Sesame oil | | g | |
| Sugar | Glucose syrup | | g | |
| | Sugar | | g | |
| | Date syrup | | g | 200 |
| Water | | | g | |
| Content of fine food particles | | | mass% | 82.5 |
| Total | | | g | 1000 |

(continued)

| | | Unit | Test Example 13 |
|---|---|---|---|
| Heating condition (under leaving to stand) | Maximum temperature (T) during warming | °C | 65.0 |
| | $145 \times 2.73^{(-0.07 \times T)}$ | | 1.5 |
| | Warming time (H) | hour | 2.0 |
| Measurement | Total fat/oil content | mass% | 43.2 |
| | (Total fat/oil content)/[(moisture content) + (total fat/oil content)], * Displayed as a percentage | % | 87.3 |
| | Sugar content | mass% | 29.7 |
| | Moisture content | mass% | 6.3 |
| | Modal diameter after ultrasonication | μm | 191.9 |
| | Maximum particle size before ultrasonication | μm | 1086.0 |
| | d50 after ultrasonication | μm | 201.5 |
| | Stress [(fat/oil composition: 2 parts) + (olive oil: 1 part), parallel plate diameter: 25 mm, temperature: 20°C, lowered down until a gap of 1 mm] | N | 0.20 |
| | Loss tangent (parallel plate diameter: 25 mm, temperature: 20°C, gap: 1 mm, shear strain: 0.1%, angular velocity: 1 rad/s) | | 1.0 |
| | Value measured with Bostwick viscometer (20°C, 10 seconds) | cm | 2.2 |
| Sensory evaluation | Spreadability (4°C) | | 5 |
| | Spreadability (20°C) | | 4 |
| | Spreadability (60°C) | | 5 |
| | Flavor at the time of application | | 4 |
| | Migration of coloring matter | | 5 |

[Table 16]

| | | | | Unit | Test Example 14 |
|---|---|---|---|---|---|
| | [Edible part] dried carrot | + | [Inedible part] dried carrot (petiole base) | g | |
| | [Edible part] dried pumpkin | + | [Inedible part] dried pumpkin (seeds and guts) | g | |
| | [Edible part] dried sweet corn | + | [Inedible part] dried sweet corn (core) | g | |
| | [Edible part] dried green soybean | + | [Inedible part] dried green soybean (pod) | g | |
| | [Edible part] raw paprika | + | [Inedible part] raw paprika (seed and calyx) | g | |

(continued)

| | | | | Unit | Test Example 14 |
|---|---|---|---|---|---|
| Prescription | [Edible part] dried paprika | + | [Inedible part] dried paprika (seed and calyx) | g | |
| | [Edible part] dried beet | + | [Inedible part] dried beet (peel) | g | |
| | [Edible part] dried green pea | + | [Inedible part] dried green pea (pod) | g | 200 |
| | [Edible part] dried broccoli | + | [Inedible part] dried broccoli (stem and leaf) | g | |
| | [Edible part] dried tomato | + | [Inedible part] dried tomato (calyx) | g | |
| | [Edible part] dried kale | + | [Inedible part] dried kale (petiole base) | g | |
| | [Edible part] dried sweet potato | + | [Inedible part] dried sweet potato (ends) | g | |
| | [Edible part] dried spinach | + | [Inedible part] dried spinach (stump) | g | |
| | [Edible part] dried pineapple | | | g | |
| | [Edible part] dried raspberry | | | g | |
| | Proportion of inedible part in composition | | | mass % | 2.0 |
| | (Inedible part)/[(edible part) + (inedible part)], * Displayed as a percentage | | | % | 10 |
| | Oil cake food paste | Almond | | g | |
| | | Cashew nut | | g | 350 |
| | | Sesame | | g | |
| | | Hazelnut | | g | |
| | | Peanut | | g | |
| | Fat/oil | Cacao butter | | g | 50 |
| | | Olive oil | | g | 200 |
| | | Salad oil | | g | |
| | | Sesame oil | | g | |
| | Sugar | Glucose syrup | | g | |
| | | Sugar | | g | |
| | | Date syrup | | g | 200 |
| | Water | | | g | |
| | Content of fine food particles | | | mass% | 82.5 |
| | Total | | | g | 1000 |

(continued)

| Heating condition (under leaving to stand) | | Unit | Test Example 14 |
|---|---|---|---|
| | Maximum temperature (T) during warming | °C | 30.0 |
| | $145 \times 2.73^{(-0.07 \times T)}$ | | 17.6 |
| | Warming time (H) | hour | 24.0 |
| Measurement | Total fat/oil content | mass% | 46.6 |
| | (Total fat/oil content)/[(moisture content) + (total fat/oil content)], * Displayed as a percentage | % | 90.1 |
| | Sugar content | mass% | 22.9 |
| | Moisture content | mass% | 5.1 |
| | Modal diameter after ultrasonication | μm | 6.5 |
| | Maximum particle size before ultrasonication | μm | 592.0 |
| | d50 after ultrasonication | μm | 7.4 |
| | Stress [(fat/oil composition: 2 parts) + (olive oil: 1 part), parallel plate diameter: 25 mm, temperature: 20°C, lowered down until a gap of 1 mm] | N | 0.04 |
| | Loss tangent (parallel plate diameter: 25 mm, temperature: 20°C, gap: 1 mm, shear strain: 0.1%, angular velocity: 1 rad/s) | | 1.7 |
| | Value measured with Bostwick viscometer (20°C, 10 seconds) | cm | 2.8 |
| Sensory evaluation | Spreadability (4°C) | | 4 |
| | Spreadability (20°C) | | 3 |
| | Spreadability (60°C) | | 4 |
| | Flavor at the time of application | | 5 |
| | Migration of coloring matter | | 5 |

[Table 17]

| | | | Unit | Test Example 15 |
|---|---|---|---|---|
| | [Edible part] dried carrot | + | [Inedible part] dried carrot (petiole base) | g | |
| | [Edible part] dried pumpkin | + | [Inedible part] dried pumpkin (seeds and guts) | g | |
| | [Edible part] dried sweet corn | + | [Inedible part] dried sweet corn (core) | g | |
| | [Edible part] dried green soybean | + | [Inedible part] dried green soybean (pod) | g | |
| | [Edible part] raw paprika | + | [Inedible part] raw paprika (seed and calyx) | g | |

(continued)

| Prescription | | | Unit | Test Example 15 |
|---|---|---|---|---|
| | [Edible part] dried paprika | + [Inedible part] dried paprika (seed and calyx) | g | |
| | [Edible part] dried beet | + [Inedible part] dried beet (peel) | g | 350 |
| | [Edible part] dried green pea | + [Inedible part] dried green pea (pod) | g | |
| | [Edible part] dried broccoli | + [Inedible part] dried broccoli (stem and leaf) | g | |
| | [Edible part] dried tomato | + [Inedible part] dried tomato (calyx) | g | |
| | [Edible part] dried kale | + [Inedible part] dried kale (petiole base) | g | |
| | [Edible part] dried sweet potato | + [Inedible part] dried sweet potato (ends) | g | |
| | [Edible part] dried spinach | + [Inedible part] dried spinach (stump) | g | |
| | [Edible part] dried pineapple | | g | |
| | [Edible part] dried raspberry | | g | |
| | Proportion of inedible part in composition | | mass | 0.4 % |
| | (Inedible part)/[(edible part) + (inedible part)], * Displayed as a percentage | | % | 1 |
| | Oil cake food paste | Almond | g | |
| | | Cashew nut | g | |
| | | Sesame | g | 200 |
| | | Hazelnut | g | |
| | | Peanut | g | |
| | Fat/oil | Cacao butter | g | |
| | | Olive oil | g | |
| | | Salad oil | g | 100 |
| | | Sesame oil | g | |
| | Sugar | Glucose syrup | g | |
| | | Sugar | g | |
| | | Date syrup | g | 350 |
| | Water | | g | |
| | Content of fine food particles | | mass% | 82.5 |
| | Total | | g | 1000 |

(continued)

| | | Unit | Test Example 15 |
|---|---|---|---|
| Heating condition (under leaving to stand) | Maximum temperature (T) during warming | °C | 50.0 |
| | $145 \times 2.73^{(-0.07 \times T)}$ | | 4.3 |
| | Warming time (H) | hour | 6.0 |
| Measurement | Total fat/oil content | mass% | 20.4 |
| | (Total fat/oil content)/[(moisture content) + (total fat/oil content)], * Displayed as a percentage | % | 76.0 |
| | Sugar content | mass% | 53.6 |
| | Moisture content | mass% | 6.5 |
| | Modal diameter after ultrasonication | μm | 96.0 |
| | Maximum particle size before ultrasonication | μm | 704.0 |
| | d50 after ultrasonication | μm | 99.7 |
| | Stress [(fat/oil composition: 2 parts) + (olive oil: 1 part), parallel plate diameter: 25 mm, temperature: 20°C, lowered down until a gap of 1 mm] | N | 0.03 |
| | Loss tangent (parallel plate diameter: 25 mm, temperature: 20°C, gap: 1 mm, shear strain: 0.1%, angular velocity: 1 rad/s) | | 2.0 |
| | Value measured with Bostwick viscometer (20°C, 10 seconds) | cm | 1.0 |
| Sensory evaluation | Spreadability (4°C) | | 5 |
| | Spreadability (20°C) | | 5 |
| | Spreadability (60°C) | | 5 |
| | Flavor at the time of application | | 5 |
| | Migration of coloring matter | | 5 |

[Table 18]

| | | | | Unit | Test Example 16 |
|---|---|---|---|---|---|
| Prescription | [Edible part] dried carrot | + | [Inedible part] dried carrot (petiole base) | g | |
| | [Edible part] dried pumpkin | + | [Inedible part] dried pumpkin (seeds and guts) | 9 | 250 |
| | [Edible part] dried sweet corn | + | [Inedible part] dried sweet corn (core) | g | |
| | [Edible part] dried green soybean | + | [Inedible part] dried green soybean (pod) | g | |
| | [Edible part] raw paprika | + | [Inedible part] raw paprika (seed and calyx) | g | |

(continued)

| | | | Unit | Test Example 16 |
|---|---|---|---|---|
| [Edible part] dried paprika | + | [Inedible part] dried paprika (seed and calyx) | g | |
| [Edible part] dried beet | + | [Inedible part] dried beet (peel) | g | |
| [Edible part] dried green pea | + | [Inedible part] dried green pea (pod) | g | |
| [Edible part] dried broccoli | + | [Inedible part] dried broccoli (stem and leaf) | g | |
| [Edible part] dried tomato | + | [Inedible part] dried tomato (calyx) | g | |
| [Edible part] dried kale | + | [Inedible part] dried kale (petiole base) | g | |
| [Edible part] dried sweet potato | + | [Inedible part] dried sweet potato (ends) | g | |
| [Edible part] dried spinach | + | [Inedible part] dried spinach (stump) | g | |
| [Edible part] dried pineapple | | | g | |
| [Edible part] dried raspberry | | | g | |
| Proportion of inedible part in composition | | | mass % | 7.5 |
| (Inedible part)/[(edible part) + (inedible part)], * Displayed as a percentage | | | % | |
| Oil cake food paste | | Almond | g | |
| | | Cashew nut | g | 250 |
| | | Sesame | g | |
| | | Hazelnut | g | |
| | | Peanut | g | |
| Fat/oil | | Cacao butter | g | |
| | | Olive oil | g | |
| | | Salad oil | g | 250 |
| | | Sesame oil | g | |
| Sugar | | Glucose syrup | g | |
| | | Sugar | g | |
| | | Date syrup | g | 250 |
| Water | | | g | |
| Content of fine food particles | | | mass% | 75 |
| Total | | | g | 1000 |

(continued)

|  | | Unit | Test Example 16 |
|---|---|---|---|
| Heating condition (under leaving to stand) | Maximum temperature (T) during warming | °C | 50.0 |
| | $145 \times 2.73^{(-0.07 \times T)}$ | | 4.3 |
| | Warming time (H) | hour | 6.0 |
| Measurement | Total fat/oil content | mass% | 37.9 |
| | (Total fat/oil content)/[(moisture content) + (total fat/oil content)], * Displayed as a percentage | % | 87.8 |
| | Sugar content | mass% | 31.9 |
| | Moisture content | mass% | 5.3 |
| | Modal diameter after ultrasonication | μm | 15.6 |
| | Maximum particle size before ultrasonication | μm | 418.6 |
| | d50 after ultrasonication | μm | 21.1 |
| | Stress [(fat/oil composition: 2 parts) + (olive oil: 1 part), parallel plate diameter: 25 mm, temperature: 20°C, lowered down until a gap of 1 mm] | N | 0.06 |
| | Loss tangent (parallel plate diameter: 25 mm, temperature: 20°C, gap: 1 mm, shear strain: 0.1%, angular velocity: 1 rad/s) | | 1.3 |
| | Value measured with Bostwick viscometer (20°C, 10 seconds) | cm | 2.7 |
| Sensory evaluation | Spreadability (4°C) | | 4 |
| | Spreadability (20°C) | | 4 |
| | Spreadability (60°C) | | 4 |
| | Flavor at the time of application | | 5 |
| | Migration of coloring matter | | 5 |

[Table 19]

| | | | | Unit | Test Example 17 |
|---|---|---|---|---|---|
| Prescription | [Edible part] dried carrot | + | [Inedible part] dried carrot (petiole base) | g | |
| | [Edible part] dried pumpkin | + | [Inedible part] dried pumpkin (seeds and guts) | g | |
| | [Edible part] dried sweet corn | + | [Inedible part] dried sweet corn (core) | g | |
| | [Edible part] dried green soybean | + | [Inedible part] dried green soybean (pod) | g | |
| | [Edible part] raw paprika | + | [Inedible part] raw paprika (seed and calyx) | g | |
| | [Edible part] dried paprika | + | [Inedible part] dried paprika (seed and calyx) | g | |
| | [Edible part] dried beet | + | [Inedible part] dried beet (peel) | g | 60 |
| | [Edible part] dried green pea | + | [Inedible part] dried green pea (pod) | g | |
| | [Edible part] dried broccoli | + | [Inedible part] dried broccoli (stem and leaf) | g | |
| | [Edible part] dried tomato | + | [Inedible part] dried tomato (calyx) | g | |
| | [Edible part] dried kale | + | [Inedible part] dried kale (petiole base) | g | |
| | [Edible part] dried sweet potato | + | [Inedible part] dried sweet potato (ends) | g | |
| | [Edible part] dried spinach | + | [Inedible part] dried spinach (stump) | g | |
| | [Edible part] dried pineapple | | | g | |
| | [Edible part] dried raspberry | | | g | |
| | Proportion of inedible part in composition | | | mass % | 3.0 |
| | (Inedible part)/[(edible part) + (inedible part)], * Displayed as a percentage | | | % | 50 |
| | Oil cake food paste | Almond | | g | |
| | | Cashew nut | | g | |
| | | Sesame | | g | |
| | | Hazelnut | | g | 350 |
| | | Peanut | | g | |

(continued)

| | | | Unit | Test Example 17 |
|---|---|---|---|---|
| | Fat/oil | Cacao butter | g | |
| | | Olive oil | g | |
| | | Salad oil | g | 480 |
| | | Sesame oil | g | |
| | Sugar | Glucose syrup | g | |
| | | Sugar | g | |
| | | Date syrup | g | 110 |
| | Water | | g | |
| | Content of fine food particles | | mass% | 61.5 |
| | Total | | g | 1000 |
| Heating condition (under leaving to stand) | Maximum temperature (T) during warming | | °C | 50.0 |
| | $145 \times 2.73^{(-0.07 \times T)}$ | | | 4.3 |
| | Warming time (H) | | hour | 6.0 |
| Measurement | Total fat/oil content | | mass% | 65.9 |
| | (Total fat/oil content)/[(moisture content) + (total fat/oil content)], * Displayed as a percentage | | % | 95.0 |
| | Sugar content | | mass% | 15.4 |
| | Moisture content | | mass% | 3.5 |
| | Modal diameter after ultrasonication | | μm | 2.1 |
| | Maximum particle size before ultrasonication | | μm | 96.0 |
| | d50 after ultrasonication | | μm | 2.6 |
| | Stress [(fat/oil composition: 2 parts) + (olive oil: 1 part), parallel plate diameter: 25 mm, temperature: 20°C, lowered down until a gap of 1 mm] | | N | 0.00 |
| | Loss tangent (parallel plate diameter: 25 mm, temperature: 20°C, gap: 1 mm, shear strain: 0.1 %, angular velocity: 1 rad/s) | | | 3.0 |
| | Value measured with Bostwick viscometer (20°C, 10 seconds) | | cm | 10.0 |
| Sensory evaluation | Spreadability (4°C) | | | 4 |
| | Spreadability (20°C) | | | 3 |
| | Spreadability (60°C) | | | 4 |
| | Flavor at the time of application | | | 5 |
| | Migration of coloring matter | | | 4 |

[Table 20]

| | | | | Unit | Test Example 18 |
|---|---|---|---|---|---|
| Prescription | [Edible part] dried carrot | + | [Inedible part] dried carrot (petiole base) | g | |
| | [Edible part] dried pumpkin | + | [Inedible part] dried pumpkin (seeds and guts) | g | |
| | [Edible part] dried sweet corn | + | [Inedible part] dried sweet corn (core) | g | 400 |
| | [Edible part] dried green soybean | + | [Inedible part] dried green soybean (pod) | g | |
| | [Edible part] raw paprika | + | [Inedible part] raw paprika (seed and calyx) | g | |
| | [Edible part] dried paprika | + | [Inedible part] dried paprika (seed and calyx) | g | |
| | [Edible part] dried beet | + | [Inedible part] dried beet (peel) | g | |
| | [Edible part] dried green pea | + | [Inedible part] dried green pea (pod) | g | |
| | [Edible part] dried broccoli | + | [Inedible part] dried broccoli (stem and leaf) | g | |
| | [Edible part] dried tomato | + | [Inedible part] dried tomato (calyx) | g | |
| | [Edible part] dried kale | + | [Inedible part] dried kale (petiole base) | g | |
| | [Edible part] dried sweet potato | + | [Inedible part] dried sweet potato (ends) | g | |
| | [Edible part] dried spinach | + | [Inedible part] dried spinach (stump) | g | |
| | [Edible part] dried pineapple | | | g | |
| | [Edible part] dried raspberry | | | g | |
| | Proportion of inedible part in composition | | | mass % | 20.0 |
| | (Inedible part)/[(edible part) + (inedible part)], * Displayed as a percentage | | | % | 50 |
| | Oil cake food paste | Almond | | g | |
| | | Cashew nut | | g | 150 |
| | | Sesame | | g | |
| | | Hazelnut | | g | |
| | | Peanut | | g | |

(continued)

| | | | Unit | Test Example 18 |
|---|---|---|---|---|
| | Fat/oil | Cacao butter | g | |
| | | Olive oil | g | |
| | | Salad oil | g | 350 |
| | | Sesame oil | g | |
| | Sugar | Glucose syrup | g | |
| | | Sugar | g | |
| | | Date syrup | g | 100 |
| | Water | | g | |
| | Content of fine food particles | | mass% | 82.5 |
| | Total | | g | 1000 |
| Heating condition (under leaving to stand) | Maximum temperature (T) during warming | | °C | 30.0 |
| | $145 \times 2.73^{(-0.07 \times T)}$ | | | 17.6 |
| | Warming time (H) | | hour | 24.0 |
| Measurement | Total fat/oil content | | mass% | 44.3 |
| | (Total fat/oil content)/[(moisture content) + (total fat/oil content)], * Displayed as a percentage | | % | 91.9 |
| | Sugar content | | mass% | 29.0 |
| | Moisture content | | mass% | 3.9 |
| | Modal diameter after ultrasonication | | $\mu$m | 3.6 |
| | Maximum particle size before ultrasonication | | $\mu$m | 191.9 |
| | d50 after ultrasonication | | $\mu$m | 5.2 |
| | Stress [(fat/oil composition: 2 parts) + (olive oil: 1 part), parallel plate diameter: 25 mm, temperature: 20°C, lowered down until a gap of 1 mm] | | N | 0.16 |
| | Loss tangent (parallel plate diameter: 25 mm, temperature: 20°C, gap: 1 mm, shear strain: 0.1 %, angular velocity: 1 rad/s) | | | 1.2 |
| | Value measured with Bostwick viscometer (20°C, 10 seconds) | | cm | 2.3 |
| Sensory evaluation | Spreadability (4°C) | | | 4 |
| | Spreadability (20°C) | | | 4 |
| | Spreadability (60°C) | | | 4 |
| | Flavor at the time of application | | | 5 |
| | Migration of coloring matter | | | 5 |

[Table 21]

| | | | | Unit | Test Example 19 |
|---|---|---|---|---|---|
| Prescription | [Edible part] dried carrot | + | [Inedible part] dried carrot ( petiole base) | 9 | |
| | [Edible part] dried pumpkin | + | [Inedible part] dried pumpkin seeds and guts) | 9 | |
| | [Edible part] dried sweet corn | + | [Inedible part] dried sweet corn (core) | 9 | |
| | [Edible part] dried green soybean | + | [Inedible part] dried green soybean (pod) | 9 | |
| | [Edible part] raw paprika | + | [Inedible part] raw paprika (seed and calyx) | 9 | |
| | [Edible part] dried paprika | + | [Inedible part] dried paprika (seed and calyx) | 9 | |
| | [Edible part] dried beet | + | [Inedible part] dried beet (peel) | 9 | 400 |
| | [Edible part] dried green pea | + | [Inedible part] dried green pea (pod) | 9 | |
| | [Edible part] dried broccoli | + | [Inedible part] dried broccoli (stem and leaf) | 9 | |
| | [Edible part] dried tomato | + | [Inedible part] dried tomato (calyx) | 9 | |
| | [Edible part] dried kale | + | [Inedible part] dried kale (petiole base) | 9 | |
| | [Edible part] dried sweet potato | + | [Inedible part] dried sweet potato (ends) | 9 | |
| | [Edible part] dried spinach | + | [Inedible part] dried spinach (stump) | 9 | |
| | [Edible part] dried pineapple | | | 9 | |
| | [Edible part] dried raspberry | | | 9 | |
| | Proportion of inedible part in composition | | | mass % | 32.0 |
| | (Inedible part)/[(edible part a percentage ) + (inedible part)], * Displayed as | | | % | 80 |
| | Oil cake food paste | Almond | | 9 | |
| | | Cashew nut | | 9 | |
| | | Sesame | | 9 | |
| | | Hazelnut | | 9 | |
| | | Peanut | | 9 | 100 |

(continued)

|  |  |  | Unit | Test Example 19 |
|---|---|---|---|---|
| Fat/oil | | Cacao butter | 9 | |
| | | Olive oil | 9 | 200 |
| | | Salad oil | 9 | |
| | | Sesame oil | 9 | 100 |
| Sugar | | Glucose syrup | 9 | |
| | | Sugar | g | |
| | | Date syrup | g | 200 |
| | Water | | g | |
| | Content of fine food particles | | mass% | 75 |
| | Total | | g | 1000 |
| Heating condition (under leaving to stand) | Maximum temperature (T) during warming | | °C | 50.0 |
| | $145 \times 2.73^{(-0.07 \times T)}$ | | | 4.3 |
| | Warming time (H) | | hour | 6.0 |
| Measureme nt | Total fat/oil content | | mass% | 35.0 |
| | (Total fat/oil content)/[(moisture content) + (total fat/oil content)], * Displayed as a percentage | | % | 88.6 |
| | Sugar content | | mass% | 42.7 |
| | Moisture content | | mass% | 4.5 |
| | Modal diameter after ultrasonication | | μm | 13.1 |
| | Maximum particle size before ultrasonication | | μm | 148.0 |
| | d50 after ultrasonication | | μm | 15.0 |
| | Stress [(fat/oil composition: 2 parts) + (olive oil: 1 part), parallel plate diameter: 25 mm, temperature: 20°C, lowered down until a gap of 1 mm] | | N | 0.06 |
| | Loss tangent (parallel plate diameter: 25 mm, temperature: 20°C, gap: 1 mm, shear strain: 0.1 %, angular velocity: 1 rad/s) | | | 1.4 |
| | Value measured with Bostwick viscometer (20°C, 10 seconds) | | cm | 1.8 |
| Sensory evaluation | Spreadability (4°C) | | | 5 |
| | Spreadability (20°C) | | | 5 |
| | Spreadability (60°C) | | | 5 |
| | Flavor at the time of application | | | 5 |
| | Migration of coloring matter | | | 5 |

[Table 22]

| | | | | Unit | Test Example 20 |
|---|---|---|---|---|---|
| Prescription | [Edible part] dried carrot | + | [Inedible part] dried carrot (petiole base) | g | |
| | [Edible part] dried pumpkin | + | [Inedible part] dried pumpkin (seeds and guts) | g | |
| | [Edible part] dried sweet corn | + | [Inedible part] dried sweet corn (core) | g | |
| | [Edible part] dried green soybean | + | [Inedible part] dried green soybean (pod) | 9 | |
| | [Edible part] raw paprika | + | [Inedible part] raw paprika (seed and calyx) | g | |
| | [Edible part] dried paprika | + | [Inedible part] dried paprika (seed and calyx) | g | |
| | [Edible part] dried beet | + | [Inedible part] dried beet (peel) | g | 500 |
| | [Edible part] dried green pea | + | [Inedible part] dried green pea (pod) | g | |
| | [Edible part] dried broccoli | + | [Inedible part] dried broccoli (stem and leaf) | g | |
| | [Edible part] dried tomato | + | [Inedible part] dried tomato (calyx) | g | |
| | [Edible part] dried kale | + | [Inedible part] dried kale (petiole base) | g | |
| | [Edible part] dried sweet potato | + | [Inedible part] dried sweet potato (ends) | g | |
| | [Edible part] dried spinach | + | [Inedible part] dried spinach (stump) | g | |
| | [Edible part] dried pineapple | | | g | |
| | [Edible part] dried raspberry | | | g | |
| | Proportion of inedible part in composition | | | mass % | 50.0 |
| | (Inedible part)/[(edible part) + (inedible part)], * Displayed as a percentage | | | % | 100 |
| | Oil cake food paste | Almond | | g | 50 |
| | | Cashew nut | | g | |
| | | Sesame | | g | |
| | | Hazelnut | | g | |
| | | Peanut | | g | |

(continued)

| | | | Unit | Test Example 20 |
|---|---|---|---|---|
| | Fat/oil | Cacao butter | g | |
| | | Olive oil | g | 350 |
| | | Salad oil | g | |
| | | Sesame oil | g | |
| | Sugar | Glucose syrup | g | |
| | | Sugar | g | |
| | | Date syrup | g | 100 |
| | Water | | g | |
| | Content of fine food particles | | mass% | 82.5 |
| | Total | | g | 1000 |
| Heating condition (under leaving to stand) | Maximum temperature (T) during warming | | °C | 50.0 |
| | $145 \times 2.73^{(-0007 \times T)}$ | | | 4.3 |
| | Warming time (H) | | hour | 6.0 |
| Measurement | Total fat/oil content | | mass% | 37.8 |
| | (Total fat/oil content)/[(moisture content) + (total fat/oil content)], * Displayed as a percentage | | % | 90.9 |
| | Sugar content | | mass% | 39.3 |
| | Moisture content | | mass% | 3.8 |
| | Modal diameter after ultrasonication | | μm | 22.0 |
| | Maximum particle size before ultrasonication | | μm | 176.0 |
| | d50 after ultrasonication | | μm | 23.6 |
| | Stress [(fat/oil composition: 2 parts) + (olive oil: 1 part), parallel plate diameter: 25 mm, temperature: 20°C, lowered down until a gap of 1 mm] | | N | 0.09 |
| | Loss tangent (parallel plate diameter: 25 mm, temperature: 20°C, gap: 1 mm, shear strain: 0.1 %, angular velocity: 1 rad/s) | | | 1.4 |
| | Value measured with Bostwick viscometer (20°C, 10 seconds) | | cm | 1.6 |
| Sensory evaluation | Spreadability (4°C) | | | 5 |
| | Spreadability (20°C) | | | 5 |
| | Spreadability (60°C) | | | 5 |
| | Flavor at the time of application | | | 5 |
| | Migration of coloring matter | | | 5 |

[Table 23]

| | | | | | Unit | Test Example 21 |
|---|---|---|---|---|---|---|
| Prescription | [Edible part] dried carrot | + | [Inedible part] dried carrot (petiole base) | | g | |
| | [Edible part] dried pumpkin | + | [Inedible part] dried pumpkin (seeds and guts) | | g | |
| | [Edible part] dried sweet corn | + | [Inedible part] dried sweet corn (core) | | g | |
| | [Edible part] dried green soybean | + | [Inedible part] dried green soybean (pod) | | g | |
| | [Edible part] raw paprika | + | [Inedible part] raw paprika (seed and calyx) | | g | |
| | [Edible part] dried paprika | + | [Inedible part] dried paprika (seed and calyx) | | g | |
| | [Edible part] dried beet | + | [Inedible part] dried beet (peel) | | g | 210 |
| | [Edible part] dried green pea | + | [Inedible part] dried green pea (pod) | | g | |
| | [Edible part] dried broccoli | + | [Inedible part] dried broccoli (stem and leaf) | | g | |
| | [Edible part] dried tomato | + | [Inedible part] dried tomato (calyx) | | g | |
| | [Edible part] dried kale | + | [Inedible part] dried kale (petiole base) | | g | |
| | [Edible part] dried sweet potato | + | [Inedible part] dried sweet potato (ends) | | g | |
| | [Edible part] dried spinach | + | [Inedible part] dried spinach (stump) | | g | |
| | [Edible part] dried pineapple | | | | g | |
| | [Edible part] dried raspberry | | | | g | |
| | Proportion of inedible part in composition | | | | mass % | 0.1 |
| | (Inedible part)/[(edible part) + (inedible part)], * Displayed as a percentage | | | | % | |
| | Oil cake food paste | Almond | | | g | 210 |
| | | Cashew nut | | | g | |
| | | Sesame | | | g | |
| | | Hazelnut | | | g | 210 |
| | | Peanut | | | g | |

(continued)

| | | | Unit | Test Example 21 |
|---|---|---|---|---|
| | Fat/oil | Cacao butter | g | |
| | | Olive oil | g | |
| | | Salad oil | g | 210 |
| | | Sesame oil | g | |
| | Sugar | Glucose syrup | g | |
| | | Sugar | g | 160 |
| | | Date syrup | g | |
| | Water | | g | |
| | Content of fine food particles | | mass% | 75.6 |
| | Total | | g | 1000 |
| Heating condition (under leaving to stand) | Maximum temperature (T) during warming | | °C | 50.0 |
| | $145 \times 2.73^{(-0.07 \times T)}$ | | | 4.3 |
| | Warming time (H) | | hour | 6.0 |
| Measurement | Total fat/oil content | | mass% | 42.5 |
| | (Total fat/oil content)/[(moisture content) + (total fat/oil content)], * Displayed as a percentage | | % | 92.3 |
| | Sugar content | | mass% | 30.9 |
| | Moisture content | | mass% | 3.6 |
| | Modal diameter after ultrasonication | | $\mu$m | 31.1 |
| | Maximum particle size before ultrasonication | | $\mu$m | 209.3 |
| | d50 after ultrasonication | | $\mu$m | 33.3 |
| | Stress [(fat/oil composition: 2 parts) + (olive oil: 1 part), parallel plate diameter: 25 mm, temperature: 20°C, lowered down until a gap of 1 mm] | | N | 0.05 |
| | Loss tangent (parallel plate diameter: 25 mm, temperature: 20°C, gap: 1 mm, shear strain: 0.1 %, angular velocity: 1 rad/s) | | | 1.8 |
| | Value measured with Bostwick viscometer (20°C, 10 seconds) | | cm | 2.7 |
| Sensory evaluation | Spreadability (4°C) | | | 5 |
| | Spreadability (20°C) | | | 5 |
| | Spreadability (60°C) | | | 5 |
| | Flavor at the time of application | | | 3 |
| | Migration of coloring matter | | | 5 |

[Table 24]

| | | | | Unit | Test Example 22 |
|---|---|---|---|---|---|
| Prescription | [Edible part] dried carrot | + | [Inedible part] dried carrot (petiole base) | g | |
| | [Edible part] dried pumpkin | + | [Inedible part] dried pumpkin (seeds and guts) | g | |
| | [Edible part] dried sweet corn | + | [Inedible part] dried sweet corn (core) | g | |
| | [Edible part] dried green soybean | + | [Inedible part] dried green soybean (pod) | g | |
| | [Edible part] raw paprika | + | [Inedible part] raw paprika (seed and calyx) | g | |
| | [Edible part] dried paprika | + | [Inedible part] dried paprika (seed and calyx) | g | |
| | [Edible part] dried beet | + | [Inedible part] dried beet (peel) | g | 200 |
| | [Edible part] dried green pea | + | [Inedible part] dried green pea (pod) | g | |
| | [Edible part] dried broccoli | + | [Inedible part] dried broccoli (stem and leaf) | g | |
| | [Edible part] dried tomato | + | [Inedible part] dried tomato calyx) | g | |
| | [Edible part] dried kale | + | [Inedible part] dried kale (petiole base) | g | |
| | [Edible part] dried sweet potato | + | [Inedible part] dried sweet potato (ends) | g | |
| | [Edible part] dried spinach | + | [Inedible part] dried spinach (stump) | g | |
| | [Edible part] dried pineapple | | | g | |
| | [Edible part] dried raspberry | | | 9 | 10 |
| | Proportion of inedible part in composition | | | mass | 0.2 % |
| | (Inedible part)/[(edible part) + (inedible part)], * Displayed as a percentage | | | % | |
| | Oil cake food paste | Almond | | g | |
| | | Cashew nut | | g | 200 |
| | | Sesame | | g | |
| | | Hazelnut | | g | 200 |
| | | Peanut | | g | |

(continued)

| | | | Unit | Test Example 22 |
|---|---|---|---|---|
| | Fat/oil | Cacao butter | g | |
| | | Olive oil | g | |
| | | Salad oil | g | 190 |
| | | Sesame oil | g | |
| | Sugar | Glucose syrup | g | |
| | | Sugar | g | |
| | | Date syrup | g | 190 |
| | Water | | g | 10 |
| | Content of fine food particles | | mass% | 73.2 |
| | Total | | g | 1000 |
| Heating condition (under leaving to stand) | Maximum temperature (T) during warming | | °C | 50.0 |
| | $145 \times 2.73^{(-0.07 \times T)}$ | | | 4.3 |
| | Warming time (H) | | hour | 6.0 |
| Measurement | Total fat/oil content | | mass% | 39.5 |
| | (Total fat/oil content)/[(moisture content) + (total fat/oil content)], * Displayed as a percentage | | % | 85.9 |
| | Sugar content | | mass% | 31.7 |
| | Moisture content | | mass% | 6.5 |
| | Modal diameter after ultrasonication | | μm | 40.4 |
| | Maximum particle size before ultrasonication | | μm | 296.0 |
| | d50 after ultrasonication | | μm | 42.4 |
| | Stress [(fat/oil composition: 2 parts) + (olive oil: 1 part), parallel plate diameter: 25 mm, temperature: 20°C, lowered down until a gap of 1 mm] | | N | 0.11 |
| | Loss tangent (parallel plate diameter: 25 mm, temperature: 20°C, gap: 1 mm, shear strain: 0.1 %, angular velocity: 1 rad/s) | | | 1.6 |
| | Value measured with Bostwick viscometer (20°C, 10 seconds) | | cm | 2.9 |
| Sensory evaluation | Spreadability (4°C) | | | 5 |
| | Spreadability (20°C) | | | 5 |
| | Spreadability (60°C) | | | 5 |
| | Flavor at the time of application | | | 4 |
| | Migration of coloring matter | | | 5 |

[Table 25]

| | | | | Unit | Test Example 23 |
|---|---|---|---|---|---|
| Prescription | [Edible part] dried carrot | + | [Inedible part] dried carrot ( pe tiole base) | 9 | |
| | [Edible part] dried pumpkin | + | [Inedible part] dried pumpkin (seeds and guts) | 9 | |
| | [Edible part] dried sweet corn | + | [Inedible part] dried sweet corn (core) | 9 | |
| | [Edible part] dried green soybean | + | [Inedible part] dried green soybean (pod) | 9 | |
| | [Edible part] raw paprika | + | [Inedible part] raw paprika (seed and calyx) | 9 | |
| | [Edible part] dried paprika | + | [Inedible part] dried paprika (seed and calyx) | 9 | |
| | [Edible part] dried beet | + | [Inedible part] dried beet (peel) | 9 | |
| | [Edible part] dried green pea | + | [Inedible part] dried green pea (pod) | 9 | |
| | [Edible part] dried broccoli | + | [Inedible part] dried broccoli (stem and leaf) | 9 | |
| | [Edible part] dried tomato | + | [Inedible part] dried tomato (calyx) | 9 | |
| | [Edible part] dried kale | + | [Inedible part] dried kale (petiole base) | 9 | 200 |
| | [Edible part] dried sweet potato | + | [Inedible part] dried sweet potato (ends) | 9 | |
| | [Edible part] dried spinach | + | [Inedible part] dried spinach (stump) | 9 | |
| | [Edible part] dried pineapple | | | 9 | |
| | [Edible part] dried raspberry | | | 9 | 10 |
| | Proportion of inedible part in composition | | | mass % | 0.3 |
| | (Inedible part)/[(edible part) + (inedible part)], * Displayed as a percentage | | | % | |
| | Oil cake food paste | Almond | | 9 | |
| | | Cashew nut | | 9 | 200 |
| | | Sesame | | 9 | |
| | | Hazelnut | | 9 | 200 |
| | | Peanut | | 9 | |

(continued)

| | | | Unit | Test Example 23 |
|---|---|---|---|---|
| | Fat/oil | Cacao butter | 9 | |
| | | Olive oil | 9 | |
| | | Salad oil | 9 | 190 |
| | | Sesame oil | 9 | |
| | Sugar | Glucose syrup | 9 | |
| | | Sugar | 9 | |
| | | Date syrup | 9 | 180 |
| | Water | | 9 | 20 |
| | Content of fine food particles | | mass% | 79.3 |
| | Total | | 9 | 1000 |
| Heating condition (under leaving to stand) | Maximum temperature (T) during warming | | °C | 50.0 |
| | $145 \times 2.73^{(-0.07 \times T)}$ | | | 4.3 |
| | Warming time (H) | | hour | 6.0 |
| Measurement | Total fat/oil content | | mass% | 40.2 |
| | (Total fat/oil content)/[(moisture content) + (total fat/oil content)], * Displayed as a percentage | | % | 84.4 |
| | Sugar content | | mass% | 21.1 |
| | Moisture content | | mass% | 7.4 |
| | Modal diameter after ultrasonication | | $\mu$m | 52.3 |
| | Maximum particle size before ultrasonication | | $\mu$m | 352.0 |
| | d50 after ultrasonication | | $\mu$m | 53.0 |
| | Stress [(fat/oil composition: 2 parts) + (olive oil: 1 part), parallel plate diameter: 25 mm, temperature: 20°C, lowered down until a gap of 1 mm] | | N | 0.03 |
| | Loss tangent (parallel plate diameter: 25 mm, temperature: 20°C, gap: 1 mm, shear strain: 0.1 %, angular velocity: 1 rad/s) | | | 2.1 |
| | Value measured with Bostwick viscometer (20°C, 10 seconds) | | cm | 3.4 |
| Sensory evaluation | Spreadability (4°C) | | | 5 |
| | Spreadability (20°C) | | | 5 |
| | Spreadability (60°C) | | | 5 |
| | Flavor at the time of application | | | 5 |
| | Migration of coloring matter | | | 5 |

[Table 26]

| | | | | Unit | Test Example 24 |
|---|---|---|---|---|---|
| Prescription | [Edible part] dried carrot | + | [Inedible part] dried carrot (petiole base) | 9 | |
| | [Edible part] dried pumpkin | + | [Inedible part] dried pumpkin (seeds and guts) | 9 | |
| | [Edible part] dried sweet corn | + | [Inedible part] dried sweet corn (core) | 9 | |
| | [Edible part] dried green soybean | + | [Inedible part] dried green soybean (pod) | 9 | |
| | [Edible part] raw paprika | + | [Inedible part] raw paprika (seed and calyx) | 9 | |
| | [Edible part] dried paprika | + | [Inedible part] dried paprika (seed and calyx) | 9 | |
| | [Edible part] dried beet | + | [Inedible part] dried beet (peel) | 9 | |
| | [Edible part] dried green pea | + | [Inedible part] dried green pea (pod) | 9 | |
| | [Edible part] dried broccoli | + | [Inedible part] dried broccoli (stem and leaf) | g | |
| | [Edible part] dried tomato | + | [Inedible part] dried tomato (calyx) | g | |
| | [Edible part] dried kale | + | [Inedible part] dried kale (petiole base) | g | |
| | [Edible part] dried sweet potato | + | [Inedible part] dried sweet potato (ends) | g | 200 |
| | [Edible part] dried spinach | + | [Inedible part] dried spinach (stump) | g | |
| | [Edible part] dried pineapple | | | g | |
| | [Edible part] dried raspberry | | | g | 10 |
| | Proportion of inedible part in composition | | | mass % | 0.6 |
| | (Inedible part)/[(edible part) + (inedible part)], * Displayed as a percentage | | | % | |
| | Oil cake food paste | Almond | | g | |
| | | Cashew nut | | g | 200 |
| | | Sesame | | g | |
| | | Hazelnut | | g | 200 |
| | | Peanut | | g | |

(continued)

| | | | Unit | Test Example 24 |
|---|---|---|---|---|
| | Fat/oil | Cacao butter | g | |
| | | Olive oil | g | |
| | | Salad oil | g | 190 |
| | | Sesame oil | g | |
| | Sugar | Glucose syrup | g | |
| | | Sugar | g | |
| | | Date syrup | g | 180 |
| | Water | | g | 20 |
| | Content of fine food particles | | mass% | 79.3 |
| | Total | | g | 1000 |
| Heating condition (under leaving to stand) | Maximum temperature (T) during warming | | °C | 50.0 |
| | $145 \times 2.73^{(-0.07 \times T)}$ | | | 4.3 |
| | Warming time (H) | | hour | 6.0 |
| Measurement | Total fat/oil content | | mass% | 39.7 |
| | (Total fat/oil content)/[(moisture content) + (total fat/oil content)], * Displayed as a percentage | | % | 84.3 |
| | Sugar content | | mass% | 35.4 |
| | Moisture content | | mass% | 7.4 |
| | Modal diameter after ultrasonication | | μm | 96.0 |
| | Maximum particle size before ultrasonication | | μm | 418.6 |
| | d50 after ultrasonication | | μm | 65.6 |
| | Stress [(fat/oil composition: 2 parts) + (olive oil: 1 part), parallel plate diameter: 25 mm, temperature: 20°C, lowered down until a gap of 1 mm] | | N | 0.04 |
| | Loss tangent (parallel plate diameter: 25 mm, temperature: 20°C, gap: 1 mm, shear strain: 0.1 %, angular velocity: 1 rad/s) | | | 1.9 |
| | Value measured with Bostwick viscometer (20°C, 10 seconds) | | cm | 2.0 |
| Sensory evaluation | Spreadability (4°C) | | | 5 |
| | Spreadability (20°C) | | | 5 |
| | Spreadability (60°C) | | | 5 |
| | Flavor at the time of application | | | 5 |
| | Migration of coloring matter | | | 5 |

EP 3 794 950 A1

[Table 27]

| | | | | | Unit | Test Example 25 |
|---|---|---|---|---|---|---|
| Prescription | [Edible part] dried carrot | + | | [Inedible part] dried carrot (petiole base) | 9 | |
| | [Edible part] dried pumpkin | + | | [Inedible part] dried pumpkin (seeds and guts) | 9 | |
| | [Edible part] dried sweet corn | + | | [Inedible part] dried sweet corn (core) | 9 | |
| | [Edible part] dried green soybean | + | | [Inedible part] dried green soybean (pod) | 9 | |
| | [Edible part] raw paprika | + | | [Inedible part] raw paprika (seed and calyx) | 9 | |
| | [Edible part] dried paprika | + | | [Inedible part] dried paprika (seed and calyx) | 9 | |
| | [Edible part] dried beet | + | | [Inedible part] dried beet (peel) | 9 | |
| | [Edible part] dried green pea | + | | [Inedible part] dried green pea (pod) | 9 | |
| | [Edible part] dried broccoli | + | | [Inedible part] dried broccoli (stem and leaf) | 9 | |
| | [Edible part] dried tomato | + | | [Inedible part] dried tomato (calyx) | 9 | |
| | [Edible part] dried kale | + | | [Inedible part] dried kale (petiole base) | 9 | |
| | [Edible part] dried sweet potato | + | | [Inedible part] dried sweet potato (ends) | 9 | |
| | [Edible part] dried spinach | + | | [Inedible part] dried spinach (stump) | 9 | 200 |
| | [Edible part] dried pineapple | | | | 9 | |
| | [Edible part] dried raspberry | | | | 9 | 10 |
| | Proportion of inedible part in composition | | | | mass % | 0.8 |
| | (Inedible part)/[(edible part) + (inedible part)], * Displayed as a percentage | | | | % | |

66

(continued)

| | | | Unit | Test Example 25 |
|---|---|---|---|---|
| | Oil cake food paste | Almond | g | |
| | | Cashew nut | g | 200 |
| | | Sesame | g | |
| | | Hazelnut | g | 200 |
| | | Peanut | g | |
| | Fat/oil | Cacao butter | g | |
| | | Olive oil | g | |
| | | Salad oil | g | 190 |
| | | Sesame oil | g | |
| | Sugar | Glucose syrup | g | |
| | | Sugar | g | |
| | | Date syrup | g | 180 |
| | Water | | g | 20 |
| | Content of fine food particles | | mass% | 79.3 |
| | Total | | g | 1000 |
| Heating condition (under leaving to stand) | Maximum temperature (T) during warming | | °C | 50.0 |
| | $145 \times 2.73^{(-0.07 \times T)}$ | | | 4.3 |
| | Warming time (H) | | hour | 6.0 |
| Measurement | Total fat/oil content | | mass% | 39.4 |
| | (Total fat/oil content)/[(moisture content) + (total fat/oil content)], * Displayed as a percentage | | % | 84.2 |
| | Sugar content | | mass% | 19.5 |
| | Moisture content | | mass% | 7.4 |
| | Modal diameter after ultrasonication | | μm | 114.1 |
| | Maximum particle size before ultrasonication | | μm | 456.5 |
| | d50 after ultrasonication | | μm | 71.6 |
| | Stress [(fat/oil composition: 2 parts) + (olive oil: 1 part), parallel plate diameter: 25 mm, temperature: 20°C, lowered down until a gap of 1 mm] | | N | 0.05 |
| | Loss tangent (parallel plate diameter: 25 mm, temperature: 20°C, gap: 1 mm, shear strain: 0.1 %, angular velocity: 1 rad/s) | | | 1.8 |
| | Value measured with Bostwick viscometer (20°C, 10 seconds) | | cm | 3.7 |
| Sensory evaluation | Spreadability (4°C) | | | 5 |
| | Spreadability (20°C) | | | 4 |
| | Spreadability (60°C) | | | 5 |
| | Flavor at the time of application | | | 5 |
| | Migration of coloring matter | | | 5 |

[Table 28]

| | | | | Unit | Test Example 26 |
|---|---|---|---|---|---|
| Prescription | [Edible part] dried carrot | + | [Inedible part] dried carrot (petiolebase) | 9 | |
| | [Edible part] dried pumpkin | + | [Inedible part] dried pumpkin (seeds and guts) | 9 | |
| | [Edible part] dried sweet corn | + | [Inedible part] dried sweet corn (core) | 9 | |
| | [Edible part] dried green soybean | + | [Inedible part] dried green soybean (pod) | 9 | |
| | [Edible part] raw paprika | + | [Inedible part] raw paprika (seed and calyx) | 9 | |
| | [Edible part] dried paprika | + | [Inedible part] dried paprika (seed and calyx) | 9 | |
| | [Edible part] dried beet | + | [Inedible part] dried beet (peel) | 9 | 75 |
| | [Edible part] dried green pea | + | [Inedible part] dried green pea (pod) | 9 | |
| | [Edible part] dried broccoli | + | [Inedible part] dried broccoli (stem and leaf) | 9 | |
| | [Edible part] dried tomato | + | [Inedible part] dried tomato (calyx) | 9 | |
| | [Edible part] dried kale | + | [Inedible part] dried kale (petiole base) | 9 | |
| | [Edible part] dried sweet potato | + | [Inedible part] dried sweet potato (ends) | 9 | |
| | [Edible part] dried spinach | + | [Inedible part] dried spinach (stump) | 9 | |
| | [Edible part] dried pineapple | | | 9 | |
| | [Edible part] dried raspberry | | | 9 | 10 |
| | Proportion of inedible part in composition | | | mass % | 0.9 |
| | (Inedible part)/[(edible part) + (inedible part)], * Displayed as a percentage | | | % | |
| | Oil cake food paste | Almond | | 9 | |
| | | Cashew nut | | 9 | |
| | | Sesame | | 9 | |
| | | Hazelnut | | 9 | 130 |
| | | Peanut | | 9 | |
| | Fat/oil | Cacao butter | | 9 | |
| | | Olive oil | | 9 | |

(continued)

|  |  |  | Unit | Test Example 26 |
|---|---|---|---|---|
|  |  | Salad oil | 9 | 585 |
|  |  | Sesame oil | 9 |  |
|  | Sugar | Glucose syrup | 9 |  |
|  |  | Sugar | 9 |  |
|  |  | Date syrup | 9 | 190 |
|  | Water |  | 9 | 10 |
|  | Content of fine food particles |  | mass% | 25.8 |
|  | Total |  | g | 1000 |
| Heating condition (under leaving to stand) | Maximum temperature (T) during warming |  | °C | 50.0 |
|  | $145 \times 2.73^{(-0.07 \times T)}$ |  |  | 4.3 |
|  | Warming time (H) |  | hour | 6.0 |
| Measurement | Total fat/oil content |  | mass% | 65.2 |
|  | (Total fat/oil content)/[(moisture content) + (total fat/oil content)], * Displayed as a percentage |  | % | 93.9 |
|  | Sugar content |  | mass% | 22.7 |
|  | Moisture content |  | mass% | 4.3 |
|  | Modal diameter after ultrasonication |  | μm | 10.1 |
|  | Maximum particle size before ultrasonication |  | μm | 296.0 |
|  | d50 after ultrasonication |  | μm | 11.3 |
|  | Stress [(fat/oil composition: 2 parts) + (olive oil: 1 part), parallel plate diameter: 25 mm, temperature: 20°C, lowered down until a gap of 1 mm] |  | N | 0.00 |
|  | Loss tangent (parallel plate diameter: 25 mm, temperature: 20°C, gap: 1 mm, shear strain: 0.1%, angular velocity: 1 rad/s) |  |  | 3.5 |
|  | Value measured with Bostwick viscometer (20°C, 10 seconds) |  | cm | 20.0 |
| Sensory evaluation | Spreadability (4°C) |  |  | 4 |
|  | Spreadability (20°C) |  |  | 3 |
|  | Spreadability (60°C) |  |  | 4 |
|  | Flavor at the time of application |  |  | 4 |
|  | Migration of coloring matter |  |  | 4 |

[Table 29]

| Prescription | | | | Unit | Test Example 27 |
|---|---|---|---|---|---|
| Prescription | [Edible part] dried carrot | + | [Inedible part] dried carrot (petiole base) | g | |
| | [Edible part] dried pumpkin | + | [Inedible part] dried pumpkin (seeds and guts) | g | |
| | [Edible part] dried sweet corn | + | [Inedible part] dried sweet corn (core) | g | |
| | [Edible part] dried green soybean | + | [Inedible part] dried green soybean (pod) | g | |
| | [Edible part] raw paprika | + | [Inedible part] raw paprika (seed and calyx) | g | |
| | [Edible part] dried paprika | + | [Inedible part] dried paprika | g | |
| | | | (seed and calyx) | | |
| | [Edible part] dried beet | + | [Inedible part] dried beet (peel) | 9 | 120 |
| | [Edible part] dried green pea | + | [Inedible part] dried green pea (pod) | g | |
| | [Edible part] dried broccoli | + | [Inedible part] dried broccoli (stem and leaf) | g | |
| | [Edible part] dried tomato | + | [Inedible part] dried tomato (calyx) | g | |
| | [Edible part] dried kale | + | [Inedible part] dried kale (petiole base) | g | |
| | [Edible part] dried sweet potato | + | [Inedible part] dried sweet potato (ends) | g | |
| | [Edible part] dried spinach | + | [Inedible part] dried spinach (stump) | g | |
| | [Edible part] dried pineapple | | | g | |
| | [Edible part] dried raspberry | | | g | 10 |
| | Proportion of inedible part in composition | | | mass % | 1.3 |
| | (Inedible part)/[(edible part) + (inedible part)], * Displayed as a percentage | | | % | |
| | Oil cake food paste | Almond | | g | |
| | | Cashew nut | | g | 130 |
| | | Sesame | | g | |
| | | Hazelnut | | g | 130 |
| | | Peanut | | g | |

(continued)

| | | | Unit | Test Example 27 |
|---|---|---|---|---|
| | Fat/oil | Cacao butter | g | |
| | | Olive oil | g | |
| | | Salad oil | g | 410 |
| | | Sesame oil | g | |
| | Sugar | Glucose syrup | g | |
| | | Sugar | g | |
| | | Date syrup | g | 190 |
| | Water | | g | 10 |
| | Content of fine food particles | | mass% | 46.8 |
| | Total | | g | 1000 |
| Heating condition (under leaving to stand) | Maximum temperature (T) during warming | | °C | 50.0 |
| | $145 \times 2.73^{(-0.07 \times T)}$ | | | 4.3 |
| | Warming time (H) | | hour | 6.0 |
| Measurement | Total fat/oil content | | mass% | 54.3 |
| | (Total fat/oil content)/[(moisture content) + (total fat/oil content)], * Displayed as a percentage | | % | 91.2 |
| | Sugar content | | mass% | 26.1 |
| | Moisture content | | mass% | 5.3 |
| | Modal diameter after ultrasonication | | μm | 12.0 |
| | Maximum particle size before ultrasonication | | μm | 322.8 |
| | d50 after ultrasonication | | μm | 13.4 |
| | Stress [(fat/oil composition: 2 parts) + (olive oil: 1 part), parallel plate diameter: 25 mm, temperature: 20°C, lowered down until a gap of 1 mm] | | N | 0.01 |
| | Loss tangent (parallel plate diameter: 25 mm, temperature: 20°C, gap: 1 mm, shear strain: 0.1%, angular velocity: 1 rad/s) | | | 3.0 |
| | Value measured with Bostwick viscometer (20°C, 10 seconds) | | cm | 12.4 |
| Sensory evaluation | Spreadability (4°C) | | | 5 |
| | Spreadability (20°C) | | | 4 |
| | Spreadability (60°C) | | | 5 |
| | Flavor at the time of application | | | 5 |
| | Migration of coloring matter | | | 5 |

71

[Table 30]

| Prescription | | | | Unit | Test Example 28 |
|---|---|---|---|---|---|
| | [Edible part] dried carrot | + | [Inedible part] dried carrot (petiole base) | 9 | |
| | [Edible part] dried pumpkin | + | [Inedible part] dried pumpkin (seeds and guts) | 9 | |
| | [Edible part] dried sweet corn | + | [Inedible part] dried sweet corn (core) | 9 | |
| | [Edible part] dried green soybean | + | [Inedible part] dried green soybean (pod) | 9 | |
| | [Edible part] raw paprika | + | [Inedible part] raw paprika (seed and calyx) | 9 | |
| | [Edible part] dried paprika | + | [Inedible part] dried paprika (seed and calyx) | 9 | |
| | [Edible part] dried beet | + | [Inedible part] dried beet (peel) | 9 | 210 |
| | [Edible part] dried green pea | + | [Inedible part] dried green pea (pod) | 9 | |
| | [Edible part] dried broccoli | + | [Inedible part] dried broccoli (stem and leaf) | 9 | |
| | [Edible part] dried tomato | + | [Inedible part] dried tomato (calyx) | 9 | |
| | [Edible part] dried kale | + | [Inedible part] dried kale (petiole base) | 9 | |
| | [Edible part] dried sweet potato | + | [Inedible part] dried sweet potato (ends) | 9 | |
| | [Edible part] dried spinach | + | [Inedible part] dried spinach (stump) | 9 | |
| | [Edible part] dried pineapple | | | 9 | |
| | [Edible part] dried raspberry | | | 9 | |
| | Proportion of inedible part in composition | | | mass % | 2.1 |
| | (Inedible part)/[(edible part) + (inedible part)], * Displayed as a percentage | | | % | |
| | Oil cake food paste | Almond | | g | 210 |
| | | Cashew nut | | g | |
| | | Sesame | | g | |
| | | Hazelnut | | g | 210 |
| | | Peanut | | g | |

(continued)

| | | | Unit | Test Example 28 |
|---|---|---|---|---|
| | Fat/oil | Cacao butter | g | |
| | | Olive oil | g | |
| | | Salad oil | g | 120 |
| | | Sesame oil | g | |
| | Sugar | Glucose syrup | g | |
| | | Sugar | g | 160 |
| | | Date syrup | g | |
| | Water | | g | 90 |
| | Content of fine food particles | | mass% | 75.6 |
| | Total | | g | 1000 |
| Heating condition (under leaving to stand) | Maximum temperature (T) during warming | | °C | 50.0 |
| | $145 \times 2.73^{(-0.07 \times T)}$ | | | 4.3 |
| | Warming time (H) | | hour | 6.0 |
| Measurement | Total fat/oil content | | mass% | 34.5 |
| | (Total fat/oil content)/[(moisture content) + (total fat/oil content)], * Displayed as a percentage | | % | 75.3 |
| | Sugar content | | mass% | 30.9 |
| | Moisture content | | mass% | 12.6 |
| | Modal diameter after ultrasonication | | μm | 31.1 |
| | Maximum particle size before ultrasonication | | μm | 209.3 |
| | d50 after ultrasonication | | μm | 33.3 |
| | Stress [(fat/oil composition: 2 parts) + (olive oil: 1 part), parallel plate diameter: 25 mm, temperature: 20°C, lowered down until a gap of 1 mm] | | N | 0.01 |
| | Loss tangent (parallel plate diameter: 25 mm, temperature: 20°C, gap: 1 mm, shear strain: 0.1%, angular velocity: 1 rad/s) | | | 4.5 |
| | Value measured with Bostwick viscometer (20°C, 10 seconds) | | cm | 19.1 |
| Sensory evaluation | Spreadability (4°C) | | | 5 |
| | Spreadability (20°C) | | | 4 |
| | Spreadability (60°C) | | 4 | |
| | Flavor at the time of application | | 5 | |
| | Migration of coloring matter | | 5 | |

[Table 31]

| | | | | Unit | Test Example 29 |
|---|---|---|---|---|---|
| Prescription | [Edible part] dried carrot | + | [Inedible part] dried carrot (petiole base) | 9 | |
| | [Edible part] dried pumpkin | + | [Inedible part] dried pumpkin (seeds and guts) | 9 | |
| | [Edible part] dried sweet corn | + | [Inedible part] dried sweet corn (core) | 9 | |
| | [Edible part] dried green soybean | + | [Inedible part] dried green soybean (pod) | 9 | |
| | [Edible part] raw paprika | + | [Inedible part] raw paprika (seed and calyx) | 9 | |
| | [Edible part] dried paprika | + | [Inedible part] dried paprika (seed and calyx) | 9 | |
| | [Edible part] dried beet | + | [Inedible part] dried beet (peel) | 9 | 60 |
| | [Edible part] dried green pea | + | [Inedible part] dried green pea (pod) | 9 | |
| | [Edible part] dried broccoli | + | [Inedible part] dried broccoli (stem and leaf) | 9 | |
| | [Edible part] dried tomato | + | [Inedible part] dried tomato (calyx) | 9 | |
| | [Edible part] dried kale | + | [Inedible part] dried kale (petiole base) | 9 | |
| | [Edible part] dried sweet potato | + | [Inedible part] dried sweet potato (ends) | 9 | |
| | [Edible part] dried spinach | + | [Inedible part] dried spinach (stump) | 9 | |
| | [Edible part] dried pineapple | | | 9 | |
| | [Edible part] dried raspberry | | | 9 | |
| | Proportion of inedible part in composition | | | mass % | 3.0 |
| | (Inedible part)/[(edible part) + (inedible part)], * Displayed as a percentage | | | % | 50 |
| | Oil cake food paste | Almond | | 9 | |
| | | Cashew nut | | 9 | |
| | | Sesame | | 9 | |
| | | Hazelnut | | 9 | 350 |
| | | Peanut | | 9 | |

(continued)

| | | | Unit | Test Example 29 |
|---|---|---|---|---|
| | Fat/oil | Cacao butter | 9 | |
| | | Olive oil | 9 | |
| | | Salad oil | 9 | 330 |
| | | Sesame oil | 9 | |
| | Sugar | Glucose syrup | g | |
| | | Sugar | g | |
| | | Date syrup | g | 110 |
| | Water | | g | 150 |
| | Content of fine food particles | | mass% | 61.5 |
| | Total | | g | 1000 |
| Heating condition (under leaving to stand) | Maximum temperature (T) during warming | | °C | 50.0 |
| | $145 \times 2.73^{(-0.07 \times T)}$ | | | 4.3 |
| | Warming time (H) | | hour | 6.0 |
| Measurement | Total fat/oil content | | mass% | 50.9 |
| | (Total fat/oil content)/[(moisture content) + (total fat/oil content)], * Displayed as a percentage | | % | 75.1 |
| | Sugar content | | mass% | 15.4 |
| | Moisture content | | mass% | 18.5 |
| | Modal diameter after ultrasonication | | μm | 2.1 |
| | Maximum particle size before ultrasonication | | μm | 96.0 |
| | d50 after ultrasonication | | μm | 2.6 |
| | Stress [(fat/oil composition: 2 parts) + (olive oil: 1 part), parallel plate diameter: 25 mm, temperature: 20°C, lowered down until a gap of 1 mm] | | N | 0.00 |
| | Loss tangent (parallel plate diameter: 25 mm, temperature: 20°C, gap: 1 mm, shear strain: 0.1%, angular velocity: 1 rad/s) | | | 7.5 |
| | Value measured with Bostwick viscometer (20°C, 10 seconds) | | cm | 20.0 |
| Sensory evaluation | Spreadability (4°C) | | | 3 |
| | Spreadability (20°C) | | | 3 |
| | Spreadability (60°C) | | | 3 |
| | Flavor at the time of application | | | 5 |
| | Migration of coloring matter | | | 4 |

[Table 32]

| | | | | Unit | Comparative Example 1 |
|---|---|---|---|---|---|
| Prescription | [Edible part] dried carrot | + | [Inedible part] dried carrot (petiole base) | g | |
| | [Edible part] dried pumpkin | + | [Inedible part] dried pumpkin (seeds and guts) | g | |
| | [Edible part] dried sweet corn | + | [Inedible part] dried sweet corn (core) | 9 | |
| | [Edible part] dried green soybean | + | [Inedible part] dried green soybean (pod) | 9 | |
| | [Edible part] raw paprika | + | [Inedible part] raw paprika (seed and calyx) | 9 | 350 |
| | [Edible part] dried paprika | + | [Inedible part] dried paprika (seed and calyx) | 9 | |
| | [Edible part] dried beet | + | [Inedible part] dried beet (peel) | 9 | |
| | [Edible part] dried green pea | + | [Inedible part] dried green pea (pod) | 9 | |
| | [Edible part] dried broccoli | + | [Inedible part] dried broccoli (stem and leaf) | 9 | |
| | [Edible part] dried tomato | + | [Inedible part] dried tomato (calyx) | 9 | |
| | [Edible part] dried kale | + | [Inedible part] dried kale (petiole base) | 9 | |
| | [Edible part] dried sweet potato | + | [Inedible part] dried sweet potato (ends) | 9 | |
| | [Edible part] dried spinach | + | [Inedible part] dried spinach (stump) | 9 | |
| | [Edible part] dried pineapple | | | 9 | |
| | [Edible part] dried raspberry | | | 9 | |
| | Proportion of inedible part in composition | | | mass % | 3.5 |
| | (Inedible part)/[(edible part) + (inedible part)], * Displayed as a percentage | | | % | 10 |

(continued)

| | | | Unit | Comparative Example 1 |
|---|---|---|---|---:|
| | Oil cake food paste | Almond | 9 | |
| | | Cashew nut | 9 | |
| | | Sesame | 9 | 200 |
| | | Hazelnut | 9 | |
| | | Peanut | 9 | |
| | Fat/oil | Cacao butter | 9 | |
| | | Olive oil | 9 | 250 |
| | | Salad oil | 9 | |
| | | Sesame oil | 9 | |
| | Sugar | Glucose syrup | 9 | |
| | | Sugar | 9 | |
| | | Date syrup | 9 | 200 |
| | Water | | 9 | |
| | Content of fine food particles | | mass% | 82.5 |
| | Total | | 9 | 1000 |
| Heating condition (under leaving to stand) | Maximum temperature (T) during warming | | °C | 50.0 |
| | $145 \times 2.73^{(-0.07 \times T)}$ | | | 4.3 |
| | Warming time (H) | | hour | 6.0 |
| Measurement | Total fat/oil content | | mass% | 35.4 |
| | (Total fat/oil content)/[(moisture content) + (total fat/oil content)], * Displayed as a percentage | | % | 50.2 |
| | Sugar content | | mass% | 20.8 |
| | Moisture content | | mass% | 35.1 |
| | Modal diameter after ultrasonication | | μm | 456.5 |
| | Maximum particle size before ultrasonication | | μm | 2000.0 |
| | d50 after ultrasonication | | μm | 479.2 |
| | Stress [(fat/oil composition: 2 parts) + (olive oil: 1 part), parallel plate diameter: 25 mm, temperature: 20°C, lowered down until a gap of 1 mm] | | N | 0.30 |
| | Loss tangent (parallel plate diameter: 25 mm, temperature: 20°C, gap: 1 mm, shear strain: 0.1%, angular velocity: 1 rad/s) | | / | - (could not be measured due to too high viscoelasticity) |
| | Value measured with Bostwick viscometer (20°C, 10 seconds) | | cm | 0.0 |
| Sensory evaluation | Spreadability (4°C) | | | 1 |
| | Spreadability (20°C) | | | 1 |
| | Spreadability (60°C) | | | 1 |
| | Flavor at the time of application | | | 1 |
| | Migration of coloring matter | | | 3 |

[Table 33]

| | | | | Unit | Comparative Example 2 |
|---|---|---|---|---|---|
| Prescription | [Edible part] dried carrot | + | [Inedible part] dried carrot (petiole base) | 9 | |
| | [Edible part] dried pumpkin | + | [Inedible part] dried pumpkin (seeds and guts) | g | |
| | [Edible part] dried sweet corn | + | [Inedible part] dried sweet corn (core) | g | |
| | [Edible part] dried green soybean | + | [Inedible part] dried green soybean (pod) | g | |
| | [Edible part] raw paprika | + | [Inedible part] raw paprika (seed and calyx) | g | 200 |
| | [Edible part] dried paprika | + | [Inedible part] dried paprika (seed and calyx) | g | |
| | [Edible part] dried beet | + | [Inedible part] dried beet (peel) | g | |
| | [Edible part] dried green pea | + | [Inedible part] dried green pea (pod) | g | |
| | [Edible part] dried broccoli | + | [Inedible part] dried broccoli (stem and leaf) | g | |
| | [Edible part] dried tomato | + | [Inedible part] dried tomato (calyx) | 9 | |
| | [Edible part] dried kale | + | [Inedible part] dried kale (petiole base) | g | |
| | [Edible part] dried sweet potato | + | [Inedible part] dried sweet potato (ends) | g | |
| | [Edible part] dried spinach | + | [Inedible part] dried spinach (stump) | g | |
| | [Edible part] dried pineapple | | | g | |
| | [Edible part] dried raspberry | | | g | |
| | Proportion of inedible part in composition | | | mass % | 0.0 |
| | (Inedible part)/[(edible part) + (inedible part)], * Displayed as a percentage | | | % | 0 |
| | Oil cake food paste | Almond | | g | |
| | | Cashew nut | | g | 200 |
| | | Sesame | | g | |
| | | Hazelnut | | g | 200 |
| | | Peanut | | g | |

(continued)

| | | | Unit | Comparative Example 2 |
|---|---|---|---|---|
| | Fat/oil | Cacao butter | g | |
| | | Olive oil | g | 250 |
| | | Salad oil | g | |
| | | Sesame oil | g | |
| | Sugar | Glucose syrup | g | |
| | | Sugar | g | |
| | | Date syrup | g | 150 |
| | Water | | g | |
| | Content of fine food particles | | mass% | 90 |
| | Total | | g | 1000 |
| Heating condition (under leaving to stand) | Maximum temperature (T) during warming | | °C | 55.0 |
| | $145 \times 2.73^{(-0.07 \times T)}$ | | | 3.0 |
| | Warming time (H) | | hour | 10.0 |
| Measureme nt | Total fat/oil content | | mass% | 45.5 |
| | (Total fat/oil content)/[(moisture content) + (total fat/oil content)], * Displayed as a percentage | | % | 67.3 |
| | Sugar content | | mass% | 16.7 |
| | Moisture content | | mass% | 22.1 |
| | Modal diameter after ultrasonication | | μm | 497.8 |
| | Maximum particle size before ultrasonication | | μm | 2000.0 |
| | d50 after ultrasonication | | μm | 596.3 |
| | Stress [(fat/oil composition: 2 parts) + (olive oil: 1 part), parallel plate diameter: 25 mm, temperature: 20°C, lowered down until a gap of 1 mm] | | N | 0.33 |
| | Loss tangent (parallel plate diameter: 25 mm, temperature: 20°C, gap: 1 mm, shear strain: 0.1%, angular velocity: 1 rad/s) | | / | - (could not be measured due to too high viscoelasticity) |
| | Value measured with Bostwick viscometer (20°C, 10 seconds) | | cm | 0.0 |
| Sensory evaluation | Spreadability (4°C) | | | 1 |
| | Spreadability (20°C) | | | 1 |
| | Spreadability (60°C) | | | 1 |
| | Flavor at the time of application | | | 1 |
| | Migration of coloring matter | | | 3 |

[Table 34]

| | | | | Unit | Comparative Example 3 |
|---|---|---|---|---|---|
| Prescription | [Edible part] dried carrot | + | [Inedible part] dried carrot (petiole base) | 9 | |

(continued)

| | | | | Unit | Comparative Example 3 |
|---|---|---|---|---|---|
| | [Edible part] dried pumpkin | + | [Inedible part] dried pumpkin (seeds and guts) | 9 | |
| | [Edible part] dried sweet corn | + | [Inedible part] dried sweet corn (core) | 9 | |
| | [Edible part] dried green soybean | + | [Inedible part] dried green soybean (pod) | 9 | |
| | [Edible part] raw paprika | + | [Inedible part] raw paprika (seed and calyx) | 9 | |
| | [Edible part] dried paprika | + | [Inedible part] dried paprika (seed and calyx) | 9 | |
| | [Edible part] dried beet | + | [Inedible part] dried beet (peel) | 9 | 50 |
| | [Edible part] dried green pea | + | [Inedible part] dried green pea (pod) | 9 | |
| | [Edible part] dried broccoli | + | [Inedible part] dried broccoli (stem and leaf) | 9 | |
| | [Edible part] dried tomato | + | [Inedible part] dried tomato (calyx) | 9 | |
| | [Edible part] dried kale | + | [Inedible part] dried kale (petiole base) | 9 | |
| | [Edible part] dried sweet potato | + | [Inedible part] dried sweet potato (ends) | 9 | |
| | [Edible part] dried spinach | + | [Inedible part] dried spinach (stump) | 9 | |
| | [Edible part] dried pineapple | | | 9 | |
| | [Edible part] dried raspberry | | | 9 | |
| | Proportion of inedible part in composition | | | mass % | 0.5 |
| | (Inedible part)/[(edible part) + (inedible part)], * Displayed as a percentage | | | % | 10 |
| | Oil cake food paste | Almond | | g | |
| | | Cashew nut | | g | |
| | | Sesame | | g | |
| | | Hazelnut | | g | 100 |
| | | Peanut | | g | |
| | Fat/oil | Cacao butter | | g | |
| | | Olive oil | | g | 500 |
| | | Salad oil | | g | |
| | | Sesame oil | | g | |

(continued)

| | | | Unit | Comparative Example 3 |
|---|---|---|---|---|
| | Sugar | Glucose syrup | g | |
| | | Sugar | g | |
| | | Date syrup | g | 350 |
| | Water | | g | |
| | Content of fine food particles | | mass% | 22.5 |
| | Total | | g | 1000 |
| Heating condition (under leaving to stand) | Maximum temperature (T) during warming | | °C | 50.0 |
| | $145 \times 2.73^{(-0.07 \times T)}$ | | | 4.3 |
| | Warming time (H) | | hour | 6.0 |
| Measurem ent | Total fat/oil content | | mass% | 55.1 |
| | (Total fat/oil content)/[(moisture content) + (total fat/oil content)], * Displayed as a percentage | | % | 92.7 |
| | Sugar content | | mass% | 35.0 |
| | Moisture content | | mass% | 4.4 |
| | Modal diameter after ultrasonication | | $\mu$m | 228.2 |
| | Maximum particle size before ultrasonication | | $\mu$m | 2000 |
| | d50 after ultrasonication | | $\mu$m | 236.0 |
| | Stress [(fat/oil composition: 2 parts) + (olive oil: 1 part), parallel plate diameter: 25 mm, temperature: 20°C, lowered down until a gap of 1 mm] | | N | 0.00 |
| | Loss tangent (parallel plate diameter: 25 mm, temperature: 20°C, gap: 1 mm, shear strain: 0.1%, angular velocity: 1 rad/s) | | | 3.2 |
| | Value measured with Bostwick viscometer (20°C, 10 seconds) | | cm | 14.0 |
| Sensory evaluation | Spreadability (4°C) | | | 2 |
| | Spreadability (20°C) | | | 2 |
| | Spreadability (60°C) | | | 2 |
| | Flavor at the time of application | | | 1 |
| | Migration of coloring matter | | | 1 |

[Table 35]

| | | | Unit | Comparative Example 4 |
|---|---|---|---|---|
| Prescription | [Edible part] dried carrot | + | [Inedible part] dried carrot (petiole base) | | |
| | [Edible part] dried pumpkin | + | [Inedible part] dried pumpkin (seeds and guts) | g | |
| | [Edible part] dried sweet corn | + | [Inedible part] dried sweet corn (core) | g | |

(continued)

| | | | | Unit | Comparative Example 4 |
|---|---|---|---|---|---|
| | [Edible part] dried green soybean | + | [Inedible part] dried green soybean (pod) | g | |
| | [Edible part] raw paprika | + | [Inedible part] raw paprika (seed and calyx) | g | |
| | [Edible part] dried paprika | + | [Inedible part] dried paprika (seed and calyx) | g | |
| | [Edible part] dried beet | + | [Inedible part] dried beet (peel) | g | |
| | [Edible part] dried green pea | + | [Inedible part] dried green pea (pod) | g | 400 |
| | [Edible part] dried broccoli | + | [Inedible part] dried broccoli (stem and leaf) | g | |
| | [Edible part] dried tomato | + | [Inedible part] dried tomato (calyx) | g | |
| | [Edible part] dried kale | + | [Inedible part] dried kale (petiole base) | g | |
| | [Edible part] dried sweet potato | + | [Inedible part] dried sweet potato (ends) | g | |
| | [Edible part] dried spinach | + | [Inedible part] dried spinach (stump) | g | |
| | [Edible part] dried pineapple | | | g | |
| | [Edible part] dried raspberry | | | g | |
| | Proportion of inedible part in composition | | | mass % | 4.0 |
| | (Inedible part)/[(edible part) + (inedible part)], * Displayed as a percentage | | | % | 10 |
| Oil cake food paste | Almond | | | g | |
| | Cashew nut | | | g | |
| | Sesame | | | g | |
| | Hazelnut | | | g | |
| | Peanut | | | g | 200 |
| Fat/oil | Cacao butter | | | g | |
| | Olive oil | | | g | 300 |
| | Salad oil | | | g | |
| | Sesame oil | | | g | |
| Sugar | Glucose syrup | | | g | |
| | Sugar | | | g | |
| | Date syrup | | | g | 80 |
| Water | | | | g | 20 |

(continued)

| | | Unit | Comparative Example 4 |
|---|---|---|---|
| | Content of fine food particles | mass% | 90 |
| | Total | g | 1000 |
| Heating condition (under leaving to stand) | Maximum temperature (T) during warming | °C | 50.0 |
| | $145 \times 2.73^{(-0.07 \times T)}$ | | 4.3 |
| | Warming time (H) | hour | 6.0 |
| Measurem ent | Total fat/oil content | mass% | 46.2 |
| | (Total fat/oil content)/[(moisture content) + (total fat/oil content)], * Displayed as a percentage | % | 89.0 |
| | Sugar content | mass% | 14.6 |
| | Moisture content | mass% | 5.8 |
| | Modal diameter after ultrasonication | μm | 11.0 |
| | Maximum particle size before ultrasonication | μm | 497.8 |
| | d50 after ultrasonication | μm | 10.0 |
| | Stress [(fat/oil composition: 2 parts) + (olive oil: 1 part), parallel plate diameter: 25 mm, temperature: 20°C, lowered down until a gap of 1 mm] | N | 0.21 |
| | Loss tangent (parallel plate diameter: 25 mm, temperature: 20°C, gap: 1 mm, shear strain: 0.1%, angular velocity: 1 rad/s) | | - (could not be measured due to too high viscoelasticity) |
| | Value measured with Bostwick viscometer (20°C, 10 seconds) | cm | 0.0 |
| Sensory evaluation | Spreadability (4°C) | | 1 |
| | Spreadability (20°C) | | 1 |
| | Spreadability (60°C) | | 1 |
| | Flavor at the time of application | | 2 |
| | Migration of coloring matter | | 3 |

[Table 36]

| | | | | Unit | Comparative Example 5 |
|---|---|---|---|---|---|
| Prescription | [Edible part] dried carrot | + | [Inedible part] dried carrot (petiole base) | g | |
| | [Edible part] dried pumpkin | + | [Inedible part] dried pumpkin (seeds and guts) | g | |
| | [Edible part] dried sweet corn | + | [Inedible part] dried sweet corn (core) | g | |
| | [Edible part] dried green soybean | + | [Inedible part] dried green soybean (pod) | g | |

(continued)

|  |  |  | Unit | Comparative Example 5 |
|---|---|---|---|---|
| [Edible part] raw paprika | + | [Inedible part] raw paprika (seed and calyx) | 9 | |
| [Edible part] dried paprika | + | [Inedible part] dried paprika (seed and calyx) | 9 | |
| [Edible part] dried beet | + | [Inedible part] dried beet (peel) | 9 | 500 |
| [Edible part] dried green pea | + | [Inedible part] dried green pea (pod) | 9 | |
| [Edible part] dried broccoli | + | [Inedible part] dried broccoli (stem and leaf) | 9 | |
| [Edible part] dried tomato | + | [Inedible part] dried tomato (calyx) | 9 | |
| [Edible part] dried kale | + | [Inedible part] dried kale (petiole base) | 9 | |
| [Edible part] dried sweet potato | + | [Inedible part] dried sweet potato (ends) | 9 | |
| [Edible part] dried spinach | + | [Inedible part] dried spinach (stump) | 9 | |
| [Edible part] dried pineapple | | | 9 | |
| [Edible part] dried raspberry | | | 9 | |
| Proportion of inedible part in composition | | | mass % | 5.0 |
| (Inedible part)/[(edible part) + (inedible part)], * Displayed as a percentage | | | % | 10 |
| Oil cake food paste | Almond | | 9 | |
| | Cashew nut | | 9 | |
| | Sesame | | 9 | |
| | Hazelnut | | 9 | |
| | Peanut | | 9 | 200 |
| Fat/oil | Cacao butter | | 9 | |
| | Olive oil | | 9 | 50 |
| | Salad oil | | 9 | |
| | Sesame oil | | 9 | |
| Sugar | Glucose syrup | | 9 | |
| | Sugar | | 9 | |
| | Date syrup | | 9 | 220 |
| Water | | | 9 | 30 |
| Content of fine food particles | | | mass% | 84 |
| Total | | | 9 | 1000 |

(continued)

|  |  |  | Unit | Comparative Example 5 |
|---|---|---|---|---|
| Heating condition (under leaving to stand) | Maximum temperature (T) during warming |  | °C | 50.0 |
|  | $145 \times 2.73^{(-0.07 \times T)}$ |  |  | 4.3 |
|  | Warming time (H) |  | hour | 6.0 |
| Measurem ent | Total fat/oil content |  | mass% | 14.8 |
|  | (Total fat/oil content)/[(moisture content) + (total fat/oil content)], * Displayed as a percentage |  | % | 62.9 |
|  | Sugar content |  | mass% | 51.2 |
|  | Moisture content |  | mass% | 8.7 |
|  | Modal diameter after ultrasonication |  | μm | 15.6 |
|  | Maximum particle size before ultrasonication |  | μm | 497.8 |
|  | d50 after ultrasonication |  | μm | 21.6 |
|  | Stress [(fat/oil composition: 2 parts) + (olive oil: 1 part), parallel plate diameter: 25 mm, temperature: 20°C, lowered down until a gap of 1 mm] |  | N | 0.23 |
|  | Loss tangent (parallel plate diameter: 25 mm, temperature: 20°C, gap: 1 mm, shear strain: 0.1%, angular velocity: 1 rad/s) |  |  | - (could not be measured due to too high viscoelasticity) |
|  | Value measured with Bostwick viscometer (20°C, 10 seconds) |  | cm | 0.0 |
| Sensory evaluation | Spreadability (4°C) |  |  | 1 |
|  | Spreadability (20°C) |  |  | 1 |
|  | Spreadability (60°C) |  |  | 1 |
|  | Flavor at the time of application |  |  | 2 |
|  | Migration of coloring matter |  |  | 3 |

[Table 37]

|  |  |  |  | Unit | Comparative Example 6 |
|---|---|---|---|---|---|
| Prescription | [Edible part] dried carrot | + | [Inedible part] dried carrot (petiole base) | 9 |  |
|  | [Edible part] dried pumpkin | + | [Inedible part] dried pumpkin (seeds and guts) | 9 |  |
|  | [Edible part] dried sweet corn | + | [Inedible part] dried sweet corn (core) | 9 |  |
|  | [Edible part] dried green soybean | + | [Inedible part] dried green soybean (pod) | 9 |  |
|  | [Edible part] raw paprika | + | [Inedible part] raw paprika (seed and calyx) | 9 |  |

(continued)

| | | | Unit | Comparative Example 6 |
|---|---|---|---|---|
| | [Edible part] dried paprika | + | [Inedible part] dried paprika (seed and calyx) | 9 | |
| | [Edible part] dried beet | + | [Inedible part] dried beet (peel) | 9 | 350 |
| | [Edible part] dried green pea | + | [Inedible part] dried green pea (pod) | 9 | |
| | [Edible part] dried broccoli | + | [Inedible part] dried broccoli (stem and leaf) | 9 | |
| | [Edible part] dried tomato | + | [Inedible part] dried tomato (calyx) | 9 | |
| | [Edible part] dried kale | + | [Inedible part] dried kale (petiole base) | 9 | |
| | [Edible part] dried sweet potato | + | [Inedible part] dried sweet potato (ends) | 9 | |
| | [Edible part] dried spinach | + | [Inedible part] dried spinach (stump) | 9 | |
| | [Edible part] dried pineapple | | | 9 | |
| | [Edible part] dried raspberry | | | g | |
| | Proportion of inedible part in composition | | | mass % | 3.5 |
| | (Inedible part)/[(edible part) + (inedible part)], * Displayed as a percentage | | | % | 10 |
| | Oil cake food paste | Almond | | g | |
| | | Cashew nut | | g | |
| | | Sesame | | g | 200 |
| | | Hazelnut | | g | |
| | | Peanut | | g | |
| | Fat/oil | Cacao butter | | g | |
| | | Olive oil | | g | 250 |
| | | Salad oil | | g | |
| | | Sesame oil | | g | |
| | Sugar | Glucose syrup | | g | |
| | | Sugar | | g | |
| | | Date syrup | | g | 200 |
| | Water | | | g | |
| | Content of fine food particles | | | mass% | 82.5 |
| | Total | | | g | 1000 |

(continued)

| | | Unit | Comparative Example 6 |
|---|---|---|---|
| Heating condition (under leaving to stand) | Maximum temperature (T) during warming | °C | 50.0 |
| | 145 × 2.73 (-0.07×T) | | 4.3 |
| | Warming time (H) | hour | 4.0 |
| Measurem ent | Total fat/oil content | mass% | 35.4 |
| | (Total fat/oil content)/[(moisture content) + (total fat/oil content)], * Displayed as a percentage | % | 87.7 |
| | Sugar content | mass% | 40.1 |
| | Moisture content | mass% | 5.0 |
| | Modal diameter after ultrasonication | μm | 26.2 |
| | Maximum particle size before ultrasonication | μm | 645.6 |
| | d50 after ultrasonication | μm | 31.3 |
| | Stress [(fat/oil composition: 2 parts) + (olive oil: 1 part), parallel plate diameter: 25 mm, temperature: 20°C, lowered down until a gap of 1 mm] | N | 0.00 |
| | Loss tangent (parallel plate diameter: 25 mm, temperature: 20°C, gap: 1 mm, shear strain: 0.1%, angular velocity: 1 rad/s) | | - (could not be measured due to insufficient viscoelasticity) |
| | Value measured with Bostwick viscometer (20°C, 10 seconds) | cm | 21.0 |
| Sensory evaluation | Spreadability (4°C) | | 1 |
| | Spreadability (20°C) | | 1 |
| | Spreadability (60°C) | | 1 |
| | Flavor at the time of application | | 2 |
| | Migration of coloring matter | | 3 |

[Table 38]

| | | | | Unit | Comparative Example 7 |
|---|---|---|---|---|---|
| Prescription | [Edible part] dried carrot | + | [Inedible part] dried carrot (petiole base) | g | |
| | [Edible part] dried pumpkin | + | [Inedible part] dried pumpkin (seeds and guts) | g | |
| | [Edible part] dried sweet corn | + | [Inedible part] dried sweet corn (core) | g | |
| | [Edible part] dried green soybean | + | [Inedible part] dried green soybean (pod) | g | |

(continued)

| | | | Unit | Comparative Example 7 |
|---|---|---|---|---|
| [Edible part] raw paprika | + | [Inedible part] raw paprika (seed and calyx) | g | |
| [Edible part] dried paprika | + | [Inedible part] dried paprika (seed and calyx) | g | |
| [Edible part] dried beet | + | [Inedible part] dried beet (peel) | g | 350 |
| [Edible part] dried green pea | + | [Inedible part] dried green pea (pod) | g | |
| [Edible part] dried broccoli | + | [Inedible part] dried broccoli (stem and leaf) | g | |
| [Edible part] dried tomato | + | [Inedible part] dried tomato (calyx) | g | |
| [Edible part] dried kale | + | [Inedible part] dried kale (petiole base) | g | |
| [Edible part] dried sweet potato | + | [Inedible part] dried sweet potato (ends) | g | |
| [Edible part] dried spinach | + | [Inedible part] dried spinach (stump) | g | |
| [Edible part] dried pineapple | | | g | |
| [Edible part] dried raspberry | | | g | |
| Proportion of inedible part in composition | | | mass | 3.5 % |
| (Inedible part)/[(edible part) + (inedible part)], * Displayed as a percentage | | | % | 10 |
| Oil cake food paste | Almond | | g | |
| | Cashew nut | | g | |
| | Sesame | | g | 200 |
| | Hazelnut | | g | |
| | Peanut | | g | |
| Fat/oil | Cacao butter | | g | |
| | Olive oil | | g | 250 |

(continued)

| | | | Unit | Comparative Example 7 |
|---|---|---|---|---|
| | | Salad oil | g | |
| | | Sesame oil | g | |
| | Sugar | Glucose syrup | g | |
| | | Sugar | g | |
| | | Date syrup | g | 200 |
| | Water | | g | |
| | Content of fine food particles | | mass% | 82.5 |
| | Total | | g | 1000 |
| Heating condition (under leaving to stand) | Maximum temperature (T) during warming | | °C | 40.0 |
| | $145 \times 2.73^{(-0.07 \times T)}$ | | | 8.7 |
| | Warming time (H) | | hour | 7.0 |
| Measurem ent | Total fat/oil content | | mass% | 35.4 |
| | (Total fat/oil content)/[(moisture content) + (total fat/oil content)], * Displayed as a percentage | | % | 87.7 |
| | Sugar content | | mass% | 40.1 |
| | Moisture content | | mass% | 5.0 |
| | Modal diameter after ultrasonication | | μm | 26.2 |
| | Maximum particle size before ultrasonication | | μm | 645.6 |
| | d50 after ultrasonication | | μm | 31.3 |
| | Stress [(fat/oil composition: 2 parts) + (olive oil: 1 part), parallel plate diameter: 25 mm, temperature: 20°C, lowered down until a gap of 1 mm] | | N | 0.00 |
| | Loss tangent (parallel plate diameter: 25 mm, temperature: 20°C, gap: 1 mm, shear strain: 0.1%, angular velocity: 1 rad/s) | | | - (could not be measured due to insufficient viscoelasticity) |
| | Value measured with Bostwick viscometer (20°C, 10 seconds) | | cm | 24.0 |
| Sensory evaluation | Spreadability (4°C) | | | 1 |
| | Spreadability (20°C) | | | 1 |
| | Spreadability (60°C) | | | 1 |
| | Flavor at the time of application | | | 2 |
| | Migration of coloring matter | | | 3 |

[Table 39]

| | | | Unit | Comparative |
|---|---|---|---|---|
| | | | | Example 8 |
| Prescriptio n | [Edible part] dried carrot + | [Inedible part] dried carrot (petiole base) | g | |

(continued)

| | | | | Unit | Comparative |
|---|---|---|---|---|---|
| | | | | | Example 8 |
| | [Edible part] dried pumpkin | + | [Inedible part] dried pumpkin (seeds and guts) | g | |
| | [Edible part] dried sweet corn | + | [Inedible part] dried sweet corn (core) | g | |
| | [Edible part] dried green soybean | + | [Inedible part] dried green soybean (pod) | g | |
| | [Edible part] raw paprika | + | [Inedible part] raw paprika (seed and calyx) | g | |
| | [Edible part] dried paprika | + | [Inedible part] dried paprika (seed and calyx) | g | |
| | [Edible part] dried beet | + | [Inedible part] dried beet (peel) | g | 350 |
| | [Edible part] dried green pea | + | [Inedible part] dried green pea (pod) | g | |
| | [Edible part] dried broccoli | + | [Inedible part] dried broccoli (stem and leaf) | g | |
| | [Edible part] dried tomato | + | [Inedible part] dried tomato (calyx) | g | |
| | [Edible part] dried kale | + | [Inedible part] dried kale (petiole base) | g | |
| | [Edible part] dried sweet potato | + | [Inedible part] dried sweet potato (ends) | g | |
| | [Edible part] dried spinach | + | [Inedible part] dried spinach (stump) | g | |
| | [Edible part] dried pineapple | | | g | |
| | [Edible part] dried raspberry | | | g | |
| | Proportion of inedible part in composition | | | mass % | 3.5 |
| | (Inedible part)/[(edible part) + (inedible part)], * Displayed as a percentage | | | % | 10 |
| | Oil cake food paste | Almond | | g | |
| | | Cashew nut | | g | |
| | | Sesame | | g | 200 |
| | | Hazelnut | | g | |
| | | Peanut | | g | |

(continued)

| | | | Unit | Comparative Example 8 |
|---|---|---|---|---|
| Fat/oil | Cacao butter | | g | |
| | Olive oil | | g | 250 |
| | Salad oil | | g | |
| | Sesame oil | | g | |
| Sugar | Glucose syrup | | g | |
| | Sugar | | g | |
| | Date syrup | | g | 200 |
| Water | | | g | |
| Content of fine food particles | | | mass% | 82.5 |
| Total | | | g | 1000 |
| Heating condition (under leaving to stand) | Maximum temperature (T) during warming | | °C | 60.0 |
| | $145 \times 2.73^{(-0.07 \times T)}$ | | | 2.1 |
| | Warming time (H) | | hour | 2.0 |
| Measurement | Total fat/oil content | | mass% | 35.4 |
| | (Total fat/oil content)/[(moisture content) + (total fat/oil content)], * Displayed as a percentage | | % | 87.7 |
| | Sugar content | | mass% | 40.1 |
| | Moisture content | | mass% | 5.0 |
| | Modal diameter after ultrasonication | | μm | 26.2 |
| | Maximum particle size before ultrasonication | | μm | 645.6 |
| | d50 after ultrasonication | | μm | 31.3 |
| | Stress [(fat/oil composition: 2 parts) + (olive oil: 1 part), parallel plate diameter: 25 mm, temperature: 20°C, lowered down until a gap of 1 mm] | | N | 0.00 |
| | Loss tangent (parallel plate diameter: 25 mm, temperature: 20°C, gap: 1 mm, shear strain: 0.1%, angular velocity: 1 rad/s) | | | - (could not be measured due to insufficient viscoelasticity) |
| | Value measured with Bostwick viscometer (20°C, 10 seconds) | | cm | 23.0 |
| Sensory evaluation | Spreadability (4°C) | | | 1 |
| | Spreadability (20°C) | | | 1 |
| | Spreadability(60°C) | | | 1 |
| | Flavor at the time of application | | | 2 |
| | Migration of coloring matter | | | 3 |

[Table 40]

| Prescription | | | | Unit | Comparative Example 9 |
|---|---|---|---|---|---|
| | [Edible part] dried carrot | + | [Inedible part] dried carrot (petiole base) | 9 | |
| | [Edible part] dried pumpkin | + | [Inedible part] dried pumpkin (seeds and guts) | 9 | |
| | [Edible part] dried sweet corn | + | [Inedible part] dried sweet corn (core) | 9 | |
| | [Edible part] dried green soybean | + | [Inedible part] dried green soybean (pod) | 9 | |
| | [Edible part] raw paprika | + | [Inedible part] raw paprika (seed and calyx) | 9 | |
| | [Edible part] dried paprika | + | [Inedible part] dried paprika (seed and calyx) | 9 | |
| | [Edible part] dried beet | + | [Inedible part] dried beet (peel) | 9 | 350 |
| | [Edible part] dried green pea | + | [Inedible part] dried green pea (pod) | 9 | |

(continued)

|  |  |  |  | Unit | Comparative Example 9 |
|---|---|---|---|---|---|
| | [Edible part] dried broccoli | + | [Inedible part] dried broccoli (stem and leaf) | g | |
| | [Edible part] dried tomato | + | [Inedible part] dried tomato (calyx) | g | |
| | [Edible part] dried kale | + | [Inedible part] dried kale (petiole base) | g | |
| | [Edible part] dried sweet potato | + | [Inedible part] dried sweet potato (ends) | g | |
| | [Edible part] dried spinach | + | [Inedible part] dried spinach (stump) | g | |
| | [Edible part] dried pineapple | | | g | |
| | [Edible part] dried raspberry | | | g | |
| | Proportion of inedible part in composition | | | mass % | 3.5 |
| | (Inedible part)/[(edible part) + (inedible part)], * Displayed as a percentage | | | % | 10 |
| | Oil cake food paste | Almond | | g | |
| | | Cashew nut | | g | |
| | | Sesame | | g | 120 |
| | | Hazelnut | | g | |
| | | Peanut | | g | |
| | Fat/oil | Cacao butter | | g | |
| | | Olive oil | | g | 200 |
| | | Salad oil | | g | |
| | | Sesame oil | | g | |
| | Sugar | Glucose syrup | | g | |
| | | Sugar | | g | |
| | | Date syrup | | g | 100 |
| | Water | | | g | 220 |
| | Content of fine food particles | | | mass% | 74.5 |
| | Total | | | g | 1000 |
| Heating condition (under leaving to stand) | Maximum temperature (T) during warming | | | °C | 60.00 |
| | $145 \times 2.73^{(-0.07 \times T)}$ | | | | 2.14 |
| | Warming time (H) | | | hour | 2.00 |

(continued)

|  |  |  | Unit | Comparative Example 9 |
|---|---|---|---|---|
| Measurem ent | Total fat/oil content | | mass% | 26.3 |
| | (Total fat/oil content)/[(moisture content) + (total fat/oil content)], * Displayed as a percentage | | % | 54.5 |
| | Sugar content | | mass% | 40.1 |
| | Moisture content | | mass% | 22.0 |
| | Modal diameter after ultrasonication | | $\mu$m | 15.6 |
| | Maximum particle size before ultrasonication | | $\mu$m | 497.8 |
| | d50 after ultrasonication | | $\mu$m | 21.6 |
| | Stress [(fat/oil composition: 2 parts) + (olive oil: 1 part), parallel plate diameter: 25 mm, temperature: 20°C, lowered down until a gap of 1 mm] | | N | 0.22 |
| | Loss tangent (parallel plate diameter: 25 mm, temperature: 20°C, gap: 1 mm, shear strain: 0.1%, angular velocity: 1 rad/s) | | | - (could not be measured due to too high viscoelasticity) |
| | Value measured with Bostwick viscometer (20°C, 10 seconds) | | cm | 0.0 |
| Sensory evaluation | Spreadability (4°C) | | | 1 |
| | Spreadability (20°C) | | | 1 |
| | Spreadability (60°C) | | | 1 |
| | Flavor at the time of application | | | 2 |
| | Migration of coloring matter | | | 3 |

Industrial Applicability

The fine food particle-containing fat/oil composition of the present invention has excellent spreadability in a wide range of conditions from cold to hot, has good flavor, can be easily and widely used in the food field, such as spread, and has significantly high usefulness.

**Claims**

1. A fat/oil composition comprising fine food particles and having characteristics (1) to (5) and satisfying at least one of requirements (A) to (C):

    (1) a fine food particle content of 25 mass% or more and 90 mass% or less;
    (2) a total fat/oil content of 10 mass% or more and 70 mass% or less;
    (3) a modal diameter of 0.3 $\mu$m or more and 200 $\mu$m or less after ultrasonication;
    (4) a sugar content of 15 mass% or more and 60 mass% or less; and
    (5) a moisture content of 20 mass% or less,

    (A) stress measured with a dynamic viscoelasticity measuring device under conditions (a) to (d) is 0.2 N or less:

    (a) mixing two parts of the fat/oil composition with 1 part of olive oil by weight,
    (b) using a parallel plate having a diameter of 25 mm,
    (c) setting a preset temperature of the fat/oil composition to 20°C, and
    (d) measuring a maximum value of force applied in vertical direction when the parallel plate is lowered down with respect to a sample table to form a gap therebetween of 1 mm;

(B) loss tangent measured with a dynamic viscoelasticity measuring device under conditions (e) to (h) is 1.000 or more:

> (e) using a parallel plate having a diameter of 25 mm,
> (f) setting a preset temperature of the fat/oil composition to 20°C,
> (g) setting a gap to 1 mm, and
> (h) a shear strain of 0.1% and an angular velocity of 1 rad/s; and

> (C) a value measured (20°C, 10 seconds) with a Bostwick viscometer is 0.1 cm or more and 20 cm or less.

2. The composition according to Claim 1, wherein the moisture content (5) is 1 mass% or more.

3. The composition according to Claim 1 or 2, further satisfying requirement (6):
   (6) (total fat/oil content)/[(moisture content) + (total fat/oil content)] is 0.75 or more.

4. The composition according to any one of Claims 1 to 3, further satisfying requirement (7):
   (7) a maximum particle size before ultrasonication is 30 μm or more.

5. The composition according to any one of Claims 1 to 4, wherein the food comprises at least one selected from the group consisting of corn, green soybean, green pea, carrot, pumpkin, kale, paprika, beet, broccoli, spinach, tomato, and sweet potato.

6. The composition according to any one of Claims 1 to 5, comprising one or more kinds of oil cake food.

7. The composition according to any one of Claims 1 to 6, comprising an inedible part of food.

8. The composition according to any one of Claims 1 to 7, comprising an edible part and an inedible part derived from the same type of food.

9. The composition according to any one of Claims 1 to 8, wherein the inedible part comprises at least one selected from the group consisting of a corn core, a green soybean pod, a green pea pod, a carrot petiole base, pumpkin seed or guts, a kale petiole base, a paprika seed or calyx, beet peel, broccoli stem and leaf, a spinach stump, a tomato calyx, and a sweet potato end.

10. A method for manufacturing a fat/oil composition containing fine food particles, the method comprising subjecting a fine food particle-containing fat/oil composition having characteristics (1) to (5) to warming until at least one of requirements (A) to (C) is satisfied:

> (1) a fine food particle content of 25 mass% or more and 90 mass% or less;
> (2) a total fat/oil content of 10 mass% or more and 70 mass% or less;
> (3) a modal diameter of 0.3 μm or more and 200 μm or less after ultrasonication;
> (4) a sugar content of 15 mass% or more and 60 mass% or less; and
> (5) a moisture content of 20 mass% or less,

> (A) stress measured with a dynamic viscoelasticity measuring device under conditions (a) to (d) is 0.2 N or less:

> > (a) mixing two parts of the fat/oil composition with 1 part of olive oil by weight,
> > (b) using a parallel plate having a diameter of 25 mm,
> > (c) setting a preset temperature of the fat/oil composition to 20°C, and
> > (d) measuring a maximum value of force applied in vertical direction when the parallel plate is lowered down with respect to a sample table to form a gap therebetween of 1 mm;

> (B) loss tangent measured with a dynamic viscoelasticity measuring device under conditions (e) to (h) is 1.000 or more:

> > (e) using a parallel plate having a diameter of 25 mm,
> > (f) setting a preset temperature of the fat/oil composition to 20°C,

(g) setting a gap to 1 mm, and
(h) a shear strain of 0.1% and an angular velocity of 1 rad/s; and

(C) a value measured (20°C, 10 seconds) with a Bostwick viscometer is 0.1 cm or more and 20 cm or less.

**11.** The method for manufacturing according to Claim 10, wherein the moisture content (5) is 1 mass% or more.

**12.** The method for manufacturing according to Claim 10 or 11, wherein the fine food particle-containing fat/oil composition further satisfies requirement (6):
(6) (total fat/oil content)/[(moisture content) + (total fat/oil content)] is 0.75 or more.

**13.** The method for manufacturing according to any one of Claims 10 to 12, wherein the fine food particle-containing fat/oil composition further satisfies requirement (7):
(7) a maximum particle size before ultrasonication is more than 30 $\mu$m.

**14.** The manufacturing method according to any one of Claims 10 to 13, wherein Expression (I) is further satisfied:

$$H > 145 \times 2.73^{(-0.07 \times T)} \quad \text{Expression (I)}$$

wherein

H represents warming time (hour), and
T represents maximum temperature (°C) during warming.

**15.** A method for imparting an effect of spreadability at a low temperature or a high temperature to a fat/oil composition containing fine food particles, the method comprising preparing the composition according to any one of Claims 1 to 9 by warming of a fat/oil composition containing fine food particles.

## INTERNATIONAL SEARCH REPORT

| International application No. |
|---|
| PCT/JP2019/029945 |

### A. CLASSIFICATION OF SUBJECT MATTER
Int.Cl. A23D7/00(2006.01)i, A23D7/005(2006.01)i, A23L11/00(2016.01)i, A23L19/00(2016.01)i, A23L25/00(2016.01)i, A23L33/21(2016.01)i

According to International Patent Classification (IPC) or to both national classification and IPC

### B. FIELDS SEARCHED

Minimum documentation searched (classification system followed by classification symbols)
Int.Cl. A23D7/00, A23D7/005, A23L11/00, A23L19/00, A23L25/00, A23L33/21

Documentation searched other than minimum documentation to the extent that such documents are included in the fields searched
| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
JSTPlus/JMEDPlus/JST7580(JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 2001-520872 A (THE PROCTER & GAMBLE COMPANY) 06 November 2001, entire text, particularly, abstract, claims 1-10, paragraphs [0022], [0042], examples & WO 1999/021440 A1, entire text, particularly, abstract, claims 1-10, page 6, second paragraph, page 11, third paragraph, examples & US 5885646 A & EP 1026964 A1 & CN 1278147 A | 1-15 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08.10.2019 | 15.10.2019 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2019/029945

C (Continuation).    DOCUMENTS CONSIDERED TO BE RELEVANT

| Category* | Citation of document, with indication, where appropriate, of the relevant passages | Relevant to claim No. |
|---|---|---|
| X<br>A | JP 2003-527869 A (THE PROCTER & GAMBLE COMPANY) 24 September 2003, entire text, particularly, claims 1-9, paragraph [0011], examples<br>& WO 2001/072146 A2, entire text, particularly, claims 1-9, page 4, lines 17-21, examples & US 2002/0037356 A1 & EP 1267643 A2 & CN 1419420 A | 1-13<br>14, 15 |
| A | WO 2017/167966 A1 (NESTEC S.A.) 05 October 2017, entire text, particularly, claims 1-5, page 26, line 6 to page 27, line 38<br>& JP 2019-509752 A & US 2019/0174792 A1 & EP 3435783 A1 & CN 109068700 A | 1-15 |
| A | JP 2000-152769 A (HOUSE FOODS CORPORATION) 06 June 2000, entire text<br>(Family: none) | 1-15 |
| A | WO 2016/059669 A1 (ORIENTAL YEAST CO., LTD.) 21 April 2016, entire text<br>& US 2017/0238559 A1 & CN 106793815 A | 1-15 |
| A | JP 2015-073495 A (EZAKI GLICO CO., LTD.) 20 April 2015, entire text<br>(Family: none) | 1-15 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2002051262 A
- JP 2009543562 A
- JP 2004519240 A
- JP 2002281297 A

**Non-patent literature cited in the description**

- *Standard Tables of Food Composition in Japan,* 2015
- Food Labeling Standards. *Cabinet Office Ordinance,* 2015
- Standard Tables of Food Composition in Japan. Analysis Manual. 2015